(19) Europäisches Patentamt
European Patent Office
Office européen des brevets

(11) **EP 3 950 849 A1**

(12) **EUROPEAN PATENT APPLICATION**
published in accordance with Art. 153(4) EPC

(43) Date of publication:
**09.02.2022 Bulletin 2022/06**

(21) Application number: **20783152.0**

(22) Date of filing: **27.03.2020**

(51) International Patent Classification (IPC):
***C08L 101/12*** *(2006.01)* ***C09K 5/06*** *(2006.01)*

(52) Cooperative Patent Classification (CPC):
**C08L 101/12; C09K 5/06**

(86) International application number:
**PCT/JP2020/013975**

(87) International publication number:
**WO 2020/203749 (08.10.2020 Gazette 2020/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2019 JP 2019068730**
**26.06.2019 JP 2019118810**
**29.10.2019 JP 2019196369**

(71) Applicant: **Kaneka Corporation**
**Osaka-shi, Osaka 530-8288 (JP)**

(72) Inventor: **KATANO, Chiaki**
**Settsu-shi, Osaka 566-0072 (JP)**

(74) Representative: **Vossius & Partner**
**Patentanwälte Rechtsanwälte mbB**
**Siebertstraße 3**
**81675 München (DE)**

# (54) LATENT HEAT STORAGE MATERIAL

(57) The present invention has an object to provide a latent heat storage material that has a low risk of leakage and a low moisture absorbency and that is highly workable. The present invention attains the object by achieving a latent heat storage material including: a heat storage material containing an inorganic latent heat storage material composition that contains an inorganic latent heat agent and a thickener; and a surface layer containing a cured product of a reaction curable liquid resin, the surface layer having (i) a specific type E hardness value, (ii) a specific 100% modulus, and (iii) a specific elongation percentage at break.

FIG. 1

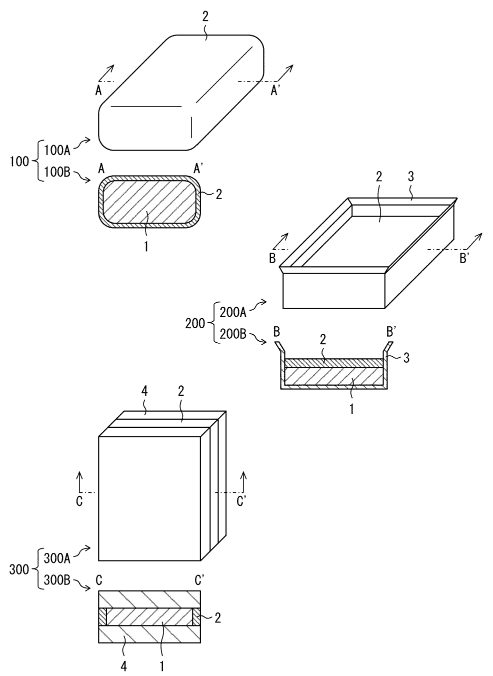


EP 3 950 849 A1

## Description

Technical Field

The present invention relates to a latent heat storage material.

Background Art

From the environmental viewpoint, in the technical field of construction materials such as a wall material, a floor material, a ceiling material, and a roof material, research and development has been actively carried out in recent years to more effectively use (i) thermal energy generated during indoor heating and cooling and (ii) natural energy such as sunlight. Specifically, there have been developed many latent heat storage materials that are to be applied to, for example, a wall material, a floor material, and a ceiling material.

As a latent heat storage material composition (may also be referred to as a "phase change material (PCM)") contained in a latent heat storage material, an organic latent heat storage material composition has been mainly used so far (Patent Literature 1).

However, since the organic latent heat storage material composition has a problem of being, for example, high in cost and flammable, use of a member instead of the organic latent heat storage material composition has attracted attention in recent years. Examples of such a new member include a member containing an inorganic latent heat storage material composition. Examples of a technique related to an inorganic latent heat storage material composition include techniques disclosed in Patent Literatures 2 to 5.

Patent Literature 2 discloses a composite heat storage material in which a powder or powdery inorganic latent heat type heat storage material is dispersed in a reaction curable resin or a reaction curable foamed resin.

Patent Literature 3 discloses a heat storage material composition containing a polyester resin, a non-polymerizable solvent, magnesium hydroxide, calcium chloride hexahydrate, and a crystal nucleating agent.

Patent Literature 4 discloses a method for producing coated resin type heat storage particles in which a heat storage component that undergoes a phase change caused by the temperature is coated with a coating layer that is made of at least a resin, wherein the heat storage component, isocyanate, and porous particles are stirred and dispersed in water.

Patent Literature 5 discloses a heat storage silicone material containing organopolysiloxane, thermally conductive particles, and a heat storage material, wherein: the heat storage material is heat storage material particles obtained by microencapsulation of a heat storage substance having a melting temperature of 0°C to 100°C; the organopolysiloxane and the thermally conductive particles are contained at specific ratios; and the heat storage silicone material has a thermal conductivity of 0.2 W/m·K to 10 W/m·K.

Citation List

[Patent Literatures]

[Patent Literature 1]
Japanese Patent Application Publication, Tokukai, No. 2019-094375
[Patent Literature 2]
Japanese Patent Application Publication, Tokukaishou, No. 56-042098
[Patent Literature 3] Japanese Patent Application Publication, Tokukaishou, No. 57-202341
[Patent Literature 4] International Publication No. WO 2007/114185
[Patent Literature 5] Japanese Patent Application Publication Tokukai No. 2014-208728


Summary of Invention

Technical Problem

However, such conventional techniques as described earlier still have room for improvement from the viewpoints of risk of leakage (a leak), workability, and moisture absorbency.

An embodiment of the present invention has been made in view of the above problems, and an object of the present invention is to provide a novel latent heat storage material-containing resin composition making it possible to provide (a) a novel latent heat storage material and (b) a latent heat storage material-containing resin cured product

that have a low risk of leakage and a low moisture absorbency and that are highly workable.

Solution to Problem

The inventors of the present invention carried out diligent study in order to solve the problems. As a result, the inventors of the present invention finally accomplished a first embodiment of present invention by finding for the first time that the problems can be solved by providing a latent heat storage material including: (a) a heat storage material containing an inorganic latent heat storage material composition that contains an inorganic latent heat storage material and a thickener; and (b) a surface layer containing a cured product of a reaction curable liquid resin and having (i) a specific type E hardness value, (ii) a specific 100% modulus, and (iii) a specific elongation percentage at break, i.e., being soft.

Specifically, a latent heat storage material in accordance with the first embodiment of present invention includes: a heat storage material; and a surface layer, the heat storage material containing an inorganic latent heat storage material composition that contains an inorganic latent heat storage material and a thickener, the surface layer containing a cured product of a first reaction curable liquid resin, and the surface layer having (i) a type E hardness value of not more than 50, (ii) a 100% modulus of not more than 0.50 MPa ($N/mm^2$), and (iii) an elongation percentage at break of not less than 100%.

A method for producing a latent heat storage material in accordance with the first embodiment of the present invention includes: a heat storage material preparing step of preparing a heat storage material containing an inorganic latent heat storage material composition that contains an inorganic latent heat storage material and a thickener; and a surface layer forming step of forming a surface layer on an interface with external air in the prepared heat storage material, the surface layer having (i) a type E hardness value of not more than 50, (ii) a 100% modulus of not more than 0.50 MPa ($N/mm^2$), and (iii) an elongation percentage at break of not less than 100%.

The inventors of the present invention carried out diligent study in order to solve the problems. As a result, the inventors of the present invention finally accomplished a second embodiment of present invention by finding for the first time that the problems can be solved by providing a latent heat storage material-containing resin composition containing (i) an inorganic latent heat storage material composition that contains a thickener and (ii) a reaction curable liquid resin that has a specific water vapor permeability.

Specifically, a latent heat storage material-containing resin composition in accordance with the second embodiment of the present invention contains: an inorganic latent heat storage material composition; and a third reaction curable liquid resin, the inorganic latent heat storage material composition containing a thickener, and the third reaction curable liquid resin satisfying the following requirement: a requirement that a cured product having a thickness of 1 mm and obtained by curing the third reaction curable liquid resin has a water vapor permeability of less than 500 $g/m^2$ per day observed at a temperature of 40°C and a humidity of 90%.

A method for producing a latent heat storage material-containing resin composition in accordance with the second embodiment of the present invention includes: a first mixing step of mixing an inorganic latent heat storage material composition and a thickener; and a second mixing step of mixing a resultant mixture and a third reaction curable liquid resin, the third reaction curable liquid resin satisfying the following requirement: a requirement that a cured product having a thickness of 1 mm and obtained by curing the third reaction curable liquid resin has a water vapor permeability of less than 500 $g/m^2$ per day observed at a temperature of 40°C and a humidity of 90%.

A method for producing a building including a latent heat storage material in accordance with the second embodiment of the present invention includes: a first mixing step of mixing an inorganic latent heat storage material composition and a thickener; a second mixing step of mixing a resultant mixture and a third reaction curable liquid resin; an application step of applying a resultant mixture to a floor surface and/or a wall surface of the building; and a curing step of curing the applied mixture, the third reaction curable liquid resin satisfying the following requirement: a requirement that a cured product having a thickness of 1 mm and obtained by curing the third reaction curable liquid resin has a water vapor permeability of less than 500 $g/m^2$ per day observed at a temperature of 40°C and a humidity of 90%.

Advantageous Effects of Invention

The first embodiment of the present invention makes it possible to provide a latent heat storage material that has a low risk of leakage and a low moisture absorbency and that is highly workable.

The second embodiment of the present invention makes it possible to provide a latent heat storage material-containing resin composition making it possible to provide a latent heat storage material-containing resin cured product that has a low risk of leakage and a low moisture absorbency and that is highly workable.

Brief Description of Drawings

Fig. 1 is a view schematically illustrating a configuration of a heat storage latent heat material in accordance with the first embodiment of the present invention.

A of Fig. 2 is an external top view of a cured product of a latent heat storage material-containing resin composition of Example B2, the cured product not having been subjected to a moisture absorption test. B of Fig. 2 is an external lateral view of A of Fig. 2. C of Fig. 2 is an external top view of the cured product of the latent heat storage material-containing resin composition of Example B2, the cured product having been subjected to the moisture absorption test and then additionally allowed to age for 72 hours at 40°C and a humidity 90%. D of Fig. 2 is an external lateral view of C of Fig. 2.

A of Fig. 3 is an external top view of a cured product of a latent heat storage material-containing resin composition of Comparative Example B2, the cured product not having been subjected to a moisture absorption test. B of Fig. 3 is an external lateral view of A of Fig. 3. C of Fig. 3 is an external top view of the cured product of the latent heat storage material-containing resin composition of Comparative Example B2, the cured product having been subjected to the moisture absorption test and then additionally allowed to age for 72 hours at 40°C and a humidity 90%. D of Fig. 3 is an external lateral view of C of Fig. 3.

Fig. 4 is a diagram showing a result of a cycle test on a latent heat storage material-containing resin cured product in accordance with Example B4 before and after the moisture absorption test.

Fig. 5 is a diagram showing a result of a cycle test on a latent heat storage material-containing resin cured product in accordance with Comparative Example B4 before and after the moisture absorption test.

Description of Embodiments

The following description will discuss an embodiment of the present invention. The present invention is not, however, limited to this embodiment. The present invention is not limited to the configurations described below, but may be altered within the scope of the claims by a person skilled in the art. The present invention also encompasses, in its technical scope, any embodiment derived by combining technical means disclosed in differing embodiments and Examples. Further, it is possible to form a new technical feature by combining the technical means disclosed in the respective embodiments. All academic and patent literatures cited in the present specification are incorporated herein by reference. Any numerical range expressed as "A to B" in the present specification means "not less than A and not more than B (i.e., a range from A to B which includes both A and B)" unless otherwise stated.

[I. First embodiment]

[I-1. Latent heat storage material]

A latent heat storage material in accordance with the first embodiment of present invention includes: a heat storage material; and a surface layer, the heat storage material containing an inorganic latent heat storage material composition that contains an inorganic latent heat storage material and a thickener, the surface layer containing a cured product of a first reaction curable liquid resin, and the surface layer having (i) a type E hardness value of not more than 50, (ii) a 100% modulus of not more than 0.50 MPa (N/mm$^2$), and (iii) an elongation percentage at break of not less than 100%. "The latent heat storage material in accordance with the first embodiment of the present invention" hereinafter may be referred to as "the present latent heat storage material".

The inventors of the present invention uniquely found that the conventional techniques have much room for improvement. For example, a latent heat storage material containing an organic latent heat storage material composition has a problem of being easily flammable due to the organic latent heat storage material composition.

The present latent heat storage material, which contains an inorganic latent heat storage material composition, has an advantage of making it possible to provide a latent heat storage material that is flame retardant.

The conventional techniques in which an inorganic latent heat storage material composition is used have a problem of handleability during production, such as the necessity to make the inorganic latent heat type heat storage material in powder or powdery form, or the necessity to microencapsulate the inorganic latent heat type heat storage material. Furthermore, the inventors of the present invention uniquely found that a storage material composition which is liquid has problems of, for example, risk of leakage and workability, regardless of whether the storage material composition is an organic latent heat storage material composition or an inorganic latent heat storage material composition.

The surface layer of the present latent heat storage material has a function of preventing an external leak of

the heat storage material at a temperature that is not less than the melting temperature of the inorganic latent heat storage material composition. Therefore, unlike the conventional techniques, it is unnecessary to bag or microencapsulate the present latent heat storage material so as to prevent a leak of the heat storage material. Thus, the present latent heat storage material is highly handleable during production and does not require any complicated operation (step) to be carried out during production. The present latent heat storage material can also be formed into, for example, a sheet-like material that is highly processable. For example, in order that the present latent heat storage material will be easily combined with, for example, a gypsum board and a floor material, it is possible to adjust, for example, hardness of (i) the cured product of the first reaction curable liquid resin and (ii) the surface layer by changing the type and physical properties (viscosity, hardness, elastic modulus, viscoelasticity, etc.) of the first reaction curable liquid resin. Thus, the present latent heat storage material has an advantage of being highly safe and easily workable at a construction site. The present latent heat storage material, which has the surface layer, has an advantage of having a lower risk of leakage and being highly workable.

Furthermore, as compared with the latent heat storage material composition as which the organic latent heat storage material composition is used, the latent heat storage material composition as which the inorganic latent heat storage material composition is used has not been subjected to sufficient research and has more room for improvement. For example, the inventors of the present invention uniquely found the following: Specifically, in a case where the inorganic latent heat storage material composition containing the inorganic latent heat storage material (e.g., inorganic hydrated salt) is used over a long period of time, the structure (configuration) of the inorganic latent heat storage material (e.g., inorganic hydrate) can change to such an extent as to affect the phase change temperature and thermophysical properties of the inorganic latent heat storage material composition, and the inorganic latent heat storage material may be prevented from efficiently functioning as a latent heat storage material. This seems to be because the inorganic latent heat storage material (e.g., inorganic hydrated salt) contained in the inorganic latent heat storage material composition of the heat storage material has a high moisture absorbency. The inventors of the present invention repeatedly carried out study in order to reduce the moisture absorbency of the inorganic latent heat storage material. As a result, the inventors of the present invention uniquely found the knowledge that it is important to prevent the heat storage material containing the inorganic latent heat storage material composition from being exposed to external air. As a result of further study of such new knowledge, the inventors of the present invention succeeded in providing a low moisture absorbency latent heat storage material by covering, with the surface layer containing the cured product of the reaction curable liquid resin, an interface with external air in the heat storage material, and finally, the inventors of the present invention accomplished the first embodiment of present invention. The expression "having a low moisture absorbency" herein can also be expressed as "having a high moisture resistance".

The surface layer, which has a specific type E hardness value, a specific 100% modulus, and a specific elongation percentage at break, is highly deformable and has conformability. As a result, the present latent heat storage material has an advantage of being conformable to volume expansion and volume shrinkage of the heat storage material containing the inorganic latent heat storage material composition. The surface layer, which has a specific type E hardness value, a specific 100% modulus, and a specific elongation percentage at break, is soft and is self-repairable even if a small hole (e.g., a pinhole) is made in the surface layer due to an impact such as a puncture. As a result, the present latent heat storage material has an advantage of being safer and having a lower risk of leakage. A latent heat storage material obtained by filling, with a heat storage material, a bag made of a film composed of thermoplastic resin and metal is conventionally known. The above-mentioned bag of the conventional techniques does not have any of the specific type E hardness value, the specific 100% modulus, and the specific elongation percentage at break that are possessed by the surface layer of the present latent heat storage material. Therefore, the latent heat storage material that is conventionally known and with which the bag is filled is not conformable to volume expansion of the heat storage material and is not self-repairable in a case where a hole is made due to an impact such as a puncture. The surface layer of the present latent heat storage material has a specific type E hardness value, a specific 100% modulus, and a specific elongation percentage at break. This allows the present latent heat storage material to be viscous and attachable/detachable to/from various members.

The surface layer does not affect the phase change temperature of the inorganic latent heat storage material composition. Furthermore, the present latent heat storage material can maintain a fixed solid shape at all times regardless of the melting temperature of the inorganic latent heat storage material composition. Thus, the present latent heat storage material also has an advantage of dispensing with a container (e.g., a bag) in which to contain the heat storage material.

The present latent heat storage material can be used as a latent heat type heat storage material that uses (i) absorption of thermal energy during phase transition of the latent heat storage material from a solidified state (solid) to a molten state (liquid or gel state) and (ii) release of thermal energy during phase transition of the latent heat storage material from the molten state (liquid or gel state) to the solidified state (solid). The "molten state" can also be referred to as a "melted state".

For example, the present latent heat storage material can maintain, for example, the room temperature at a desired temperature that is not more than the environmental temperature, even under a high-temperature environment

(e.g., summer), by absorbing thermal energy during phase transition from the solidified state to the molten state. Furthermore, the present latent heat storage material can also maintain, for example, the room temperature at a desired temperature that is not less than the environmental temperature, even under a low-temperature environment (e.g., winter), by releasing thermal energy during phase transition from the molten state to the solidified state. That is, the latent heat storage material in accordance with the first embodiment of the present invention makes it possible to maintain, for example, the room temperature at a desired temperature (for example, 15°C to 30°C) either under the high-temperature environment or under the low-temperature environment.

The following description will specifically discuss the components contained in the present latent heat storage material.

(I-1-1. Surface layer)

The surface layer contains the cured product of the first reaction curable liquid resin. The cured product of the first reaction curable liquid resin herein also includes a cured product of a mixture of the first reaction curable liquid resin and a diluent (described later).

The term "surface layer" herein means a layer provided on a surface of the heat storage material at an interface between external air and the heat storage material so as to be brought into contact with the heat storage material. The surface layer has a function of preventing the heat storage material from being brought into contact with external air. Examples of the external air include air and commonly can include water vapor. The present latent heat storage material, which has the surface layer, has a low moisture absorbency and an excellent moisture resistance. Therefore, the present latent heat storage material has an advantage of preventing or reducing a reduction in heat storage effect as the latent heat storage material which reduction is caused by moisture absorption of the inorganic latent heat storage material contained in the inorganic latent heat storage material composition of the heat storage material.

The surface layer preferably has a region (part) that has no heat storage material and has a thickness of 10 μm. The configuration makes it possible to provide a latent heat storage material that has a lower moisture absorbency and a more excellent moisture resistance. In the configuration, the region (part) that (i) is included in the surface layer, (ii) has no heat storage material, and (iii) has a thickness of 10 μm is not limited to a region (part) of 10 μm from the external air side to the heat storage material side of the surface layer. For example, in a case where the surface layer has a thickness of 20 μm, an aspect is also preferable in which a region (part) of 10 μm from the heat storage material side to the external air side of the surface layer has no heat storage material and a region (part) of 10 μm from the external air side to the heat storage material side of the surface layer has the heat storage material.

The surface layer thus configured makes it possible to provide a latent heat storage material that has a lower moisture absorbency and a more excellent moisture resistance. Therefore, the surface layer preferably has no heat storage material. For example, the surface layer preferably has no heat storage material in the region (part) of 10 μm from the external air side to the heat storage material side of the surface layer. Furthermore, the present latent heat storage material preferably has no heat storage material in a region (part) of 10 μm from the outermost surface (interface with external air) to the heat storage material side of the latent heat storage material. Note that the surface layer that has the heat storage material in the region (part) of 10 μm from the external air side to the heat storage material side of the surface layer is not excluded from the first embodiment of the present invention. Note also that the latent heat storage material that has the heat storage material in the region (part) of 10 μm from the outermost surface (interface with external air) to the heat storage material side of the latent heat storage material is not excluded from the first embodiment of the present invention.

An aspect of the surface layer is described below in detail with reference to Fig. 1. Fig. 1 is a view schematically illustrating a configuration of a heat storage latent heat material in accordance with the first embodiment of the present invention. Fig. 1 illustrates three latent heat storage materials (a latent heat storage material 100, a latent heat storage material 200, and a latent heat storage material 300).

A latent heat storage material 100A is a perspective view illustrating an external appearance of the latent heat storage material 100 as viewed from one direction. A latent heat storage material 100B is a cross-sectional view taken along the line A-A' of the latent heat storage material 100A. The latent heat storage material 100 is configured such that the entire surface (can also be referred to as "the whole") of a heat storage material 1 is covered with a surface layer 2.

A latent heat storage material 200A is a perspective view illustrating an external appearance of the latent heat storage material 200 as viewed from one direction. A latent heat storage material 200B is a cross-sectional view taken along the line B-B' of the latent heat storage material 200A. According to the latent heat storage material 200, the heat storage material 1 is contained in a vessel 3 that has an opening in an upper part thereof, and a surface (can also be referred to as a "part") of the heat storage material 1 on the opening side of the vessel 3, i.e., an interface with external air in the heat storage material 1 is covered with the surface layer 2. Assume here that the vessel 3 is configured to prevent external air from passing therethrough. According to the first embodiment of the present invention, in a case where, as in the latent heat storage material 200, the heat storage material 1 is contained in the vessel 3 that is configured

to prevent external air from passing therethrough, the entire surface of the heat storage material 1 does not need to be covered with the surface layer 2, but only a surface of the heat storage material 1 that is not in contact with the vessel 3 needs to be covered with the surface layer 2.

A latent heat storage material 300A is a perspective view illustrating an external appearance of the latent heat storage material 300 as viewed from one direction. A latent heat storage material 300B is a cross-sectional view taken along the line C-C' of the latent heat storage material 300A. According to the latent heat storage material 300, the heat storage material 1 is provided between plate-like members 4, and a surface (can also be referred to as a "part" or an "edge surface") of the heat storage material 1 that is not in contact with any of the plate-like members 4, i.e., an interface with external air in the heat storage material 1 is covered with the surface layer 2. Assume here that the plate-like members 4 are configured to prevent external air from passing therethrough. According to the first embodiment of the present invention, in a case where, as in the latent heat storage material 300, the heat storage material 1 is contained in the plate-like members 4 that are configured to prevent external air from passing therethrough, the entire surface of the heat storage material 1 does not need to be covered with the surface layer 2, but only a surface of the heat storage material 1 that is not in contact with any of the plate-like members 4 needs to be covered with the surface layer 2.

As illustrated in Fig. 1, and, as described earlier, according to the latent heat storage materials 100, 200, and 300, the surface layer 2 is provided on the surface of the heat storage material 1 at the interface between the heat storage material 1 and external air so as to be brought into contact with the heat storage material 1. Thus, according to the latent heat storage materials 100, 200, and 300, the heat storage material 1 is not in contact with external air.

A latent heat storage material in which the entire surface of the heat storage material is not covered with a surface layer or a member that is configured to prevent external air from passing therethrough is also included in the first embodiment of the present invention, provided that the latent heat storage material includes the surface layer even in part. The present latent heat storage material is preferably not in contact with external air, and the entire surface of the heat storage material is preferably covered with the surface layer or a member that is configured to prevent external air from passing therethrough. With the configuration, the latent heat storage material has a lower moisture absorbency and a more excellent moisture resistance. The present latent heat storage material is preferably configured such that the entire surface of the heat storage material is covered with only the surface layer. The configuration allows the latent heat storage material to further enjoy effects brought about by the surface layer, which are high conformability, high self-repairability, and high viscosity.

(I-1-1-1. Reaction curable liquid resin)

In order to be distinguished from a "second reaction curable liquid resin" (described later), the "first reaction curable liquid resin" is obtained by adding the term "first" to a "reaction curable liquid resin". Both the "first reaction curable liquid resin" and the "second reaction curable liquid resin" are each the "reaction curable liquid resin". The surface layer can also be said to contain a cured product of the reaction curable liquid resin. The first reaction curable liquid resin and the second reaction curable liquid resin can be reaction curable liquid resins of the same type, or can be reaction curable liquid resins of different types.

The "reaction curable liquid resin" herein means a liquid resin that is cured by, for example, addition of a curing agent and/or ultraviolet irradiation. The reaction curable liquid resin of the first embodiment is not particularly limited provided that it brings about an effect in accordance with the first embodiment of the present invention. Examples of the reaction curable liquid resin include a silicone-based resin, an acrylic-based resin, a polyisobutylene-based resin, a urethane-based resin, an epoxy-based resin, an urea-based resin, a melamine-based resin, a phenol-based resin, a resol-type phenol-based resin, a polyethylene-based resin, a polypropylene-based resin, a polyvinyl acetate-based resin, and a polyurethane-based resin. The silicone-based resin, the acrylic-based resin, the polyisobutylene-based resin, the urethane-based resin, and the epoxy-based resin are preferably used in that they are easy to cure. Regarding other examples of the reaction curable liquid resin, Japanese Patent Application Publication Tokukai No. 2016-166754 can be applied as appropriate.

The latent heat storage material in accordance with the first embodiment of present invention is preferably configured such that the reaction curable liquid resins, i.e., the first reaction curable liquid resin and the second reaction curable liquid resin are each independently at least one resin selected from the group consisting of a silicone-based resin, an acrylic-based resin, a polyisobutylene-based resin, a urethane-based resin, and an epoxy-based resin.

The configuration allows a resultant latent heat storage material to have an advantage of having a lower moisture absorbency.

(I-1-1-1-A. Silicone-based resin)

The silicone-based resin is not particularly limited but can be exemplified by various conventionally known silicone-based resins. For example, the silicone-based resin is, for example, a modified silicone resin obtained by curing

a liquid resin composition containing (i) a polymer (hereinafter referred to as a "base material resin") that has (a) a hydrolyzable group bonded to a silicon atom and (b) a silicon group (hereinafter referred to as a "reactive silicon group") capable of crosslinking by forming a siloxane bond and (ii) a silanol condensation catalyst.

The following will specifically describe the base material resin and the silanol condensation catalyst that constitute the modified silicone-based resin.

(Base material resin)

The base material resin contains 70 parts by weight to 100 parts by weight of a polymer (a) and 0 part by weight to 30 parts by weight of a reactive plasticizer (b). The polymer (a) has not less than 1.0 reactive silicon group and not more than 2.0 reactive silicon groups in a molecular chain, and has a main chain that is composed of an oxyalkylene-based unit. The polymer (a) is subjected to a condensation reaction caused by the silanol condensation catalyst, becomes polymeric by crosslinking, and then is cured. The reactive plasticizer (b) has not more than 1.0 reactive silicon group in one terminal of a molecular chain, and has a main chain that is composed of an oxyalkylene-based unit. The reactive plasticizer (b) is subjected to the condensation reaction caused by the silanol condensation catalyst, becomes polymeric by crosslinking with the reactive silicon group(s) contained in the polymer (a), and then is cured.

The number of the reactive silicon group(s) contained in the polymer (a) is not less than 1.0 and not more than 2.0 in the molecular chain. From the viewpoint that the condensation reaction is caused by the silanol condensation catalyst, at least 1.0 reactive silicon group on average is necessary per molecule of the polymer, and preferably not less than 1.1 reactive silicon groups, and more preferably not less than 1.2 reactive silicon groups are preferably present per molecule of the polymer.

The number of the reactive silicon group(s) contained in the reactive plasticizer (b) is not more than 1.0 in one terminal of the molecular chain. From the viewpoint of crosslinking through a partial condensation reaction, caused by the silanol condensation catalyst, with the polymer (a), at least 0.3 reactive silicon groups on average are necessary per molecule of the polymer, and preferably not less than 0.4 reactive silicon groups, and more preferably not less than 0.5 reactive silicon groups are preferably present per molecule of the polymer.

The average number of reactive silicon groups can be determined by a method in which a $^1$H-NMR instrument is used to carry out quantitative determination.

A reactive silicon group contained in the base material resin is a group that has a hydroxy group or a hydrolyzable group bonded to a silicon atom and is capable of crosslinking by formation of a siloxane bond through a reaction that is accelerated by the silanol condensation catalyst. Examples of the reactive silicon group include a triorganosiloxy group represented by General Formula (1):

General Formula (1):

$$-SiR^1_{3-p}X_p$$

where: each $R^1$ independently represents an alkyl group having 1 to 20 carbon atoms, an aryl group having 6 to 20 carbon atoms, and an aralkyl group having 7 to 20 carbon atoms, or $-OSi(R')_3$ (each R' independently represents a hydrocarbon group having 1 to 20 carbon atoms); each X independently represents a hydroxyl group or a hydrolyzable group; and p represents an integer of 1 to 3.

The hydrolyzable group is not particularly limited, and can be a conventionally known hydrolyzable group. Specific examples of the hydrolyzable group include a hydrogen atom, a halogen atom, an alkoxy group, an acyloxy group, a ketoximate group, an amino group, an amide group, an acid amide group, an aminooxy group, a mercapto group, and an alkenyloxy group. Among these hydrolyzable groups, the hydrogen atom, the alkoxy group, the acyloxy group, the ketoximate group, the amino group, the amide group, the aminooxy group, the mercapto group, and the alkenyloxy group are preferable. The alkoxy group is particularly preferable in that it has mild hydrolyzability and is easy to handle. As the alkoxy group, a methoxy group and an ethoxy group are preferable.

One to three hydrolyzable group(s) and/or hydroxy group(s) can be bonded to one silicon atom. In a case where two or more hydrolyzable groups and/or hydroxy groups are bonded in the reactive silicon group, they can be identical to or different from each other.

p in General Formula (1) is preferably 2 or 3 from the viewpoint of curability, is preferably 3 particularly in a case where fast curability is required, and is preferably 2 in a case where stability during storage is required.

Specific examples of $R^1$ in General Formula (1) include alkyl groups such as a methyl group and an ethyl group, cycloalkyl groups such as a cyclohexyl group, aryl groups such as a phenyl group, and aralkyl groups such as a benzyl

group. Specific examples of $R^1$ in General Formula (1) also include a triorganosiloxy group represented by $-OSi(R')_3$ where R' is a methyl group, a phenyl group, or the like, a chloromethyl group, and a methoxymethyl group. Among these, the methyl group is particularly preferable.

More specific examples of the reactive silicon group include a trimethoxysilyl group, a triethoxysilyl group, a triisopropoxysilyl group, a dimethoxymethylsilyl group, a diethoxymethylsilyl group, and a diisopropoxymethylsilyl group. The trimethoxysilyl group, the triethoxysilyl group, and the dimethoxymethylsilyl group are preferable because they are highly active and make it possible to obtain favorable curability.

The base material resin can have a linear structure, or can have a branched structure provided that branches thereof have a lower molecular weight than the main chain.

The polymer (a) has a molecular weight, as represented by a number average molecular weight, of preferably not less than 3000, and more preferably not less than 10000, from the viewpoint of reactivity. The number average molecular weight has an upper limit that is not particularly limited but is preferably not more than 100000, more preferably not more than 50000, and even more preferably not more than 30000.

The reactive plasticizer (b) has a molecular weight, as represented by a number average molecular weight, of preferably not less than 2000 and not more than 20000, and more preferably not less than 3000 and not more than 15000, from the viewpoint of reactivity. Note that the number average molecular weight can be calculated by a standard polystyrene-equivalent gel permeation chromatography (GPC) method.

Furthermore, the polymer (a) can be made of a combination of two or more kinds of polymers. In a case where the polymer (a) is a mixture of two or more kinds of polymers, the mixture preferably has a number average molecular weight that is within the above range.

Note that it is possible to add, to the polymer (a), a polymer(s) different from those listed above in order to adjust, for example, a crosslinked structure and/or a viscosity of the base material resin

The base material resin the main chain of which is composed of the oxyalkylene-based unit can be produced by using, as a starting material for forming the main chain, a compound having two or more active hydrogens to polymerize alkylene oxide. The base material resin the main chain of which is composed of the oxyalkylene-based unit can be produced by using, for example, ethylene glycol, propylene glycol, a bisphenol compound, glycerin, trimethylolpropane, or pentaerythritol as the starting material to polymerize alkylene oxide having 2 to 4 carbon atoms.

Specific examples of the main chain of the base material resin include (i) polyethylene oxide, (ii) polypropylene oxide, (iii) polybutylene oxide, and (iv) a random or block copolymer of two or more monomers selected from the group consisting of ethylene oxide, propylene oxide, and butylene oxide. It is preferable to introduce an alkenyl group into at least one terminal of the main chain of the base material resin, the main chain being selected from the group including the above (i) to (iv). From the viewpoint of, for example, the crosslinked structure, the main chain more preferably has a repeating unit that is polypropylene oxide.

The reactive silicon group can be introduced into the main chain skeleton of the polymer by a method that is not particularly limited but is exemplified by a known method disclosed in International Publication No. WO 2014/073593.

The base material resin has a viscosity, as measured by an oscillational viscometer, of preferably 2 Pa·s to 25 Pa·s, and more preferably 3 Pa·s to 20 Pa·s, at a temperature that is 10°C to 35°C higher than the melting temperature of the inorganic latent heat storage material composition. In a case where the base material resin has a viscosity of less than 2 Pa·s and is mixed with the inorganic latent heat storage material composition, the inorganic latent heat storage material composition may precipitate before the reaction curable liquid resin is cured. This may make it difficult to disperse the inorganic latent heat storage material composition in the reaction curable liquid resin. The base material resin that has a viscosity of more than 25 Pa·s may be less handleable while being mixed with the inorganic latent heat storage material composition. The expression "the viscosity of the base material resin, as measured by the oscillational viscometer, at the temperature that is 10°C to 35°C higher than the melting temperature of the inorganic latent heat storage material composition" can also be expressed as "a viscosity obtained by using the oscillational viscometer to carry out measurement with respect to the base material resin having a temperature that is 10°C to 35°C higher than the melting temperature of the inorganic latent heat storage material composition".

(Silanol condensation catalyst)

The silanol condensation catalyst for reacting the polymer that has the reactive silicon group and the main chain of which is composed of the oxyalkylene-based unit is not particularly limited, and any silanol condensation catalyst can be used provided that it can be used as the silanol condensation catalyst. The silanol condensation catalyst herein may also be referred to as a curing agent.

Specific examples of such a silanol condensation catalyst include (i) dialkyltin dicarboxylates such as dibutyltin dilaurate, dibutyltin diacetate, dibutyltin diethylhexanoate, dibutyltin dioctate, dibutyltin dimethylmaleate, dibutyltin diethylmaleate, dibutyltin dibutylmaleate, dibutyltin diisooctyl maleate, dibutyltin ditridecyl maleate, dibutyltin dibenzyl maleate, dibutyltin maleate, dioctyltin diacetate, dioctyltin distearate, dioctyltin dilaurate, dioctyltin diethylmaleate, and

dioctyltin diisooctyl maleate, (ii) dialkyltin alkoxides such as dibutyltin dimethoxide and dibutyltin diphenoxide, (iii) intramolecular coordinating derivatives of dialkyltin such as dibutyltin diacetylacetonate and dibutyltin diethylacetoacetate, (iv)(a) reaction products of dialkyltin oxides (e.g., dibutyltin oxide and dioctyltin oxide) and ester compounds (e.g., dioctyl phthalate, diisodecyl phthalate, and methylmaleate), (b) tin compounds obtained by reacting dialkyltin oxide, carboxylic acid, and alcohol compounds, (c) reaction products of dialkyltin oxides (e.g., dibutyltin bistriethoxysilicate and dioctyltin bistriethoxysilicate) and silicate compounds, and (d) tetravalent tin compounds such as oxy derivatives (stannoxane compounds) of these dialkyltin compounds. Furthermore, specific examples of such a silanol condensation catalyst include (i) divalent tin compounds such as tin octylate, tin naphthenate, tin stearate, and tin versatate, or reaction products and mixtures of these divalent tin compounds and amine-based compounds described later (e.g., laurylamine); (ii) monoalkyltins such as monobutyltin compounds (e.g., monobutyltin trisoctoate and monobutyltin triisopropoxide) and monooctyltin compounds; (iii) titanate esters such as tetrabutyltitanate, tetrapropyltitanate, tetra(2-ethylhexyl)titanate, and isopropoxytitaniumbis(ethylacetoacetate); (iv) organoaluminum compounds such as aluminum tris(acetylacetonate), aluminum tris(ethylacetoacetate), and di-isopropoxyaluminum ethylacetoacetate; (v) metal salts of carboxylic acids (e.g., 2-ethylhexanoic acid, neodecanoic acid, versatic acid, oleic acid, and naphthenic acid), such as bismuth carboxylate, iron carboxylate, titanium carboxylate, lead carboxylate, vanadium carboxylate, zirconium carboxylate, calcium carboxylate, potassium carboxylate, barium carboxylate, manganese carboxylate, cerium carboxylate, nickel carboxylate, cobalt carboxylate, zinc carboxylate, and aluminum carboxylate, or reaction products and mixtures of these metal salts and amine-based compounds described later (e.g., laurylamine); and (vi) chelate compounds such as zirconium tetraacetylacetonate, zirconium tributoxyacetylacetonate, dibutoxyzirconium diacetylacetonate, zirconium acetylacetonatebis(ethylacetoacetate), and titanium tetraacetylacetonate. Moreover, specific examples of such a silanol condensation catalyst include (i-i) primary aliphatic amines such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine, and cyclohexylamine; (i-ii) secondary aliphatic amines such as dimethylamine, diethylamine, dipropylamine, diisopropylamine, dibutylamine, diamylamine, dioctylamine, di(2-ethylhexyl)amine, didecylamine, dilaurylamine, dicetylamine, distearylamine, methyl stearylamine, ethyl stearylamine, and butyl stearylamine; (i-iii) tertiary aliphatic amines such as triamylamine, trihexylamine, and trioctylamine; (i-iv) unsaturated aliphatic amines such as triallylamine and oleylamine; (i-v) aromatic amines such as laurylaniline, stearylaniline, and triphenylamine; and (i-vi) other amines such as amine-based compounds such as monoethanolamine, diethanolamine, triethanolamine, diethylenetriamine, triethylenetetramine, oleylamine, cyclohexylamine, benzylamine, diethylaminopropylamine, xylylenediamine, ethylenediamine, hexamethylenediamine, triethylenediamine, guanidine, diphenylguanidine, 2,4,6-tris(dimethylaminomethyl)phenol, morpholine, N-methylmorpholine, 2-ethyl-4-methylimidazole, and 1,8-diazabicyclo(5,4,0)undecene-7(DBU); and (ii) salts of these amine-based compounds and carboxylic acids, for example. Further, specific examples of such a silanol condensation catalyst include (i) reaction products and mixtures of amine-based compounds (e.g., reaction products or mixtures of laurylamine and tin octylate) and organotin compounds; (ii) low molecular weight polyamide resins obtained from an excess amount of polyamine and polybasic acid; (iii) reaction products of an excess amount of polyamine and epoxy compounds; (iv) γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, N-(β-aminoethyl)aminopropyltrimethoxysilane, N-(β-aminoethyl)aminopropylmetyldimethoxysilane, N-(β-aminoethyl)aminopropyltriethoxysilane, N-(β-aminoethyl)aminopropylmetyldiethoxysilane, N-(β-aminoethyl)aminopropyltriisopropoxysilane, γ-ureidopropyltrimethoxysilane, N-phenyl-γ-aminopropyltrimethoxysilane, N-benzyl-γ-aminopropyltrimethoxysilane, and N-vinylbenzyl-γ-aminopropyltriethoxysilane. In addition, such a silanol condensation catalyst can also be exemplified by known silanol condensation catalysts such as (i) silanol condensation catalysts, such as amino group-containing silane coupling agents, which are derivatives obtained by modifying the compounds listed above, such as an aminomodified silyl polymer, a silylated amino polymer, an unsaturated aminosilane complex, phenylamino long-chain alkylsilane, and aminosilylated silicone; (ii) other acidic catalysts such as fatty acids (e.g., versatic acid) and organic acidic phosphate ester compounds; and (iii) basic catalysts.

These can be used alone or in combination of two or more thereof.

Examples of the organic acidic phosphate ester compound of the acidic catalyst include $(CH_3O)_2$-P(=O)(-OH), $(CH_3O)$-P(=O)$(-OH)_2$, $(C_2H_5O)_2$-P(=O)(-OH), $(C_2H_5O)$-P(=O)$(-OH)_2$, $(C_3H_7O)_2$-P(=O)(-OH), $(C_3H_7O)$-P(=O)$(-OH)_2$, $(C_4H_9O)_2$-P(=O)(-OH), $(C_4H_9O)$-P(=O)$(-OH)_2$, $(C_8H_{17}O)_2$-P(=O)(-OH), $(C_8H_{17}O)$-P(=O)$(-OH)_2$, $(C_{10}H_{21}O)_2$-P(=O)(-OH), $(C_{10}H_{21}O)$-P(=O)$(-OH)_2$, $(C_{13}H_{27}O)_2$-P(=O)(-OH), $(C_{13}H_{27}O)$-P(=O)$(-OH)_2$, $(C_{16}H_{33}O)_2$-P(=O(-OH), $(C_{16}H_{33}O)$-P(=O)$(-OH)_2$, (HO-$C_6H_{12}O)_2$-P(=O)(-OH), (HO-$C_6H_{12}O)$-P(=O)$(-OH)_2$, (HO-$C_8H_{16}O)_2$-P(=O)(-OH), (HO-$C_8H_{16}O)$-P(=O)$(-OH)_2$, $[(CH_2OH)(CHOH)CH_2O]_2$-P(=O)(-OH), $[(CH_2OH)(CHOH)CH_2O]$-P(=O)$(-OH)_2$, $[(CH_2OH)(CHOH)C_2H_4O]_2$-P(=O)(-OH), and $[(CH_2OH)(CHOH)C_2H_4O]$-P(=O)$(-OH)_2$. However, the organic acidic phosphate ester compound is not limited to the substances listed above.

The silanol condensation catalyst is contained in the liquid resin composition in an amount of 0.1 parts by weight to 5 parts by weight, and more preferably 0.5 parts by weight to 3 parts by weight, relative to 100 parts by weight of the base material resin.

The silicone-based resin can contain other component(s) different from the base material resin and the silanol condensation catalyst. Examples of such component(s) include a silane coupling agent that allows an organic base material resin and the inorganic latent heat storage material composition to be more compatible with each other and that allows the inorganic latent heat storage material composition to be more dispersible in the base material resin.

(I-1-1-1-B. Acrylic-based resin)

The acrylic-based resin is not particularly limited but can be exemplified by various conventionally known acrylic-based resins. The acrylic-based resin can be, for example, a (meth)acrylic resin (A) (shown later), an acrylic resin (B) (shown later), or a mixture of the (meth)acrylic resin (A) and the acrylic resin (B) (shown later).
The term "(meth)acrylic" herein means "methacrylic" and/or "acrylic".

((Meth)acrylic resin (A))

The (meth)acrylic resin (A) is a (meth)acrylic resin obtained by polymerizing a monomer component containing one or more monomers selected from the group consisting of branched alkyl group-containing alkyl(meth)acrylate and linear alkyl group-containing alkyl methacrylate. The (meth)acrylic resin (A) has a (meth)acryloyl group at a side chain and/or a terminal thereof.
The monomer component constituting the main chain of the (meth)acrylic resin (A) preferably contains, relative to all the monomer components, not more than 99.9% by mass, more preferably 30.0% by mass to 99.5% by mass, and even more preferably 40.0% by mass to 95% by mass, of one or more monomers selected from the group consisting of the branched alkyl group-containing alkyl(meth)acrylate and the linear alkyl group-containing alkyl methacrylate.
The branched alkyl group preferably has 8 to 24 carbon atoms. Examples of the alkyl(meth)acrylate containing the branched alkyl group that has 8 to 24 carbon atoms include 2-ethylhexyl (meth)acrylate, isodecyl (meth)acrylate, isomystyril (meth)acrylate, 2-propylheptyl (meth)acrylate, isooctyl (meth)acrylate, isononyl (meth)acrylate, isodecyl (meth)acrylate, isoundecyl (meth)acrylate, isododecyl (meth)acrylate, isotridecyl (meth)acrylate, isopentadecyl (meth)acrylate, isohexadecyl (meth)acrylate, isoheptadecyl (meth)acrylate, isostearyl (meth)acrylate, and decyl-tetradecanyl (meth)acrylate. These can be used alone or in combination of two or more thereof.
A homopolymer of the branched alkyl group-containing alkyl(meth)acrylate has a Tg of -80°C to 20°C, and more preferably -70°C to -10°C. "Tg" herein denotes "glass transition temperature".
The branched alkyl group-containing alkyl(meth)acrylate is contained in an amount of preferably not more than 99.9% by mass, more preferably 30.0% by mass to 99.5% by mass, and even more preferably 40.0% by mass to 95% by mass, relative to all the monomer components constituting the main chain of the (meth)acrylic resin (A).
The branched alkyl group can alternatively have 3 to 7 carbon atoms. Examples of the alkyl(meth)acrylate containing the branched alkyl group that has 3 to 7 carbon atoms include propyl (meth)acrylate, butyl (meth)acrylate, pentyl (meth)acrylate, hexyl (meth)acrylate, and heptyl (meth)acrylate. These can be used alone or in combination of two or more thereof.
The linear alkyl group preferably has 4 to 24 carbon atoms. Examples of the alkyl methacrylate containing the linear alkyl group that has 4 to 24 carbon atoms include n-butyl methacrylate, n-pentyl methacrylate, n-hexyl methacrylate, n-heptyl methacrylate, n-octyl methacrylate, n-nonyl methacrylate, n-decyl methacrylate, n-undecyl methacrylate, n-dodecyl methacrylate (also known as lauryl methacrylate), n-tridecyl methacrylate, and n-stearyl methacrylate. These can be used alone or in combination of two or more thereof.
The linear alkyl group can alternatively have 1 to 3 carbon atoms. Examples of the alkyl methacrylate containing the linear alkyl group that has 1 to 3 carbon atoms include methyl methacrylate, ethyl methacrylate, and n-propyl methacrylate. These can be used alone or in combination of two or more thereof.
A homopolymer of the linear alkyl group-containing alkyl methacrylate has a Tg of -80°C to 20°C, and more preferably -70°C to -10°C.
The linear alkyl group-containing alkyl methacrylate is contained in an amount of preferably not more than 99.9% by mass, more preferably 30.0% by mass to 99.5% by mass, and even more preferably 40.0% by mass to 95.0% by mass, relative to all the monomer components constituting the main chain of the (meth)acrylic resin (A).
According to the first embodiment of the present invention, the branched alkyl group-containing alkyl(meth)acrylate and the linear alkyl group-containing alkyl methacrylate can also be used in combination at any time as needed.
The (meth)acryloyl group that the (meth)acrylic resin (A) has at the side chain and/or the terminal thereof can be introduced into the (meth)acrylic resin by, for example, reacting a hydroxyl group-, amino group-, or carboxyl group-containing (meth)acrylic resin with a (meth)acryloyl group-containing isocyanate compound.
Examples of the (meth)acryloyl group-containing isocyanate compound include 2-isocyanate ethyl methacrylate, 2-isocyanate ethyl acrylate, and 1,1-bis(acryloyloxymethyl) ethyl isocyanate. These can be used alone or in combination of two or more thereof. Among these, 2-isocyanate ethyl methacrylate is preferable from the viewpoints of

photocurability, versatility, and cost.

The (meth)acryloyl group-containing isocyanate compound is blended in an amount of preferably 0.1% by mass to 10% by mass, and more preferably 0.5% by mass to 5% by mass, relative to 100% by mass of the (meth)acrylic resin into which the (meth)acryloyl group has not been introduced.

For example, a (meth)acrylic resin that has a hydroxyl group, an amino group, or a carboxyl group at a side chain and/or a terminal thereof can be reacted with the (meth)acryloyl group-containing isocyanate compound for 2 hours to 10 hours in the presence of an organotin catalyst such as dibutyltin dilaurate, under the atmosphere of inert gas, and at a temperature ranging from room temperature (25°C) to 80°C.

The (meth)acrylic resin (A) can further have a structural unit derived from a polar group-containing monomer. Specifically, the monomer component constituting the main chain of the (meth)acrylic resin (A) can further contain the polar group-containing monomer. The polar group-containing monomer is contained in an amount of preferably 0.1% by mass to 20% by mass relative to all the monomer components. From the viewpoint of an increase in adhesive force and cohesive force of a cured product, the polar group-containing monomer is contained in an amount of more preferably not less than 0.5% by mass, and even more preferably not less than 1% by mass. However, the polar group-containing monomer that is contained in a too large amount results in obtainment of a hard cured product of a reaction curable liquid resin and in an increase in viscosity. Thus, the polar group-containing monomer is contained in an amount of more preferably not more than 18% by mass, and even more preferably not more than 15% by mass.

Examples of the polar group-containing monomer include a carboxyl group-containing monomer, a hydroxyl group-containing monomer, a nitrogen atom-containing monomer, and an acetoacetoxy group-containing monomer.

As the carboxyl group-containing monomer, a compound containing (i) an unsaturated double bondcontaining polymerizable group such as a (meth)acryloyl group or a vinyl group and (ii) a carboxyl group can be used without any particular limitation. Examples of the carboxyl group-containing monomer include (meth)acrylic acid, carboxyethyl (meth)acrylate, carboxypentyl (meth)acrylate, itaconic acid, maleic acid, fumaric acid, crotonic acid, and isocrotonic acid. These can be used alone or in combination of two or more thereof. Among these, acrylic acid and methacrylic acid are preferable, and acrylic acid is more preferable, as the carboxyl group-containing monomer.

As the hydroxyl group-containing monomer, a compound containing (i) an unsaturated double bondcontaining polymerizable group such as a (meth)acryloyl group or a vinyl group and (ii) a hydroxyl group can be used without any particular limitation. Examples of the hydroxyl group-containing monomer include (i) hydroxyalkyl (meth)acrylates such as 2-hydroxybutyl (meth)acrylate, 3-hydroxypropyl (meth)acrylate, 4-hydroxybutyl (meth)acrylate 6-hydroxyhexyl (meth)acrylate, 8-hydroxyoctyl (meth)acrylate, 10-hydroxydecyl (meth)acrylate, and 12-hydroxylauryl (meth)acrylate; (ii) hydroxyalkyl cycloalkane (meth)acrylates such as (4-hydroxymethylcyclohexyl)methyl(meth)acrylate; and (iii) hydroxyethyl (meth)acrylamide, allyl alcohol, 2-hydroxyethylvinyl ether, 4-hydroxybutylvinyl ether, and diethylene glycol monovinyl ether. These can be used alone or in combination of two or more thereof.

As the nitrogen atom-containing monomer, a compound containing (i) an unsaturated double bondcontaining polymerizable group such as a (meth)acryloyl group or a vinyl group and (ii) an amide group or a nitrile group can be used without any particular limitation. Examples of an amide group-containing monomer include dimethyl (meth)acrylamide, diethyl (meth)acrylamide, dimethyl aminopropyl (meth)acrylamide, isopropyl (meth)acrylamide, hydroxyethyl (meth)acrylamide, and (meth)acryloyl morpholine. Examples of a nitrile group-containing monomer include (meth)acrylonitrile. These can be used alone or in combination of two or more thereof.

As the acetoacetoxy group-containing monomer, a compound containing (i) an unsaturated double bondcontaining polymerizable group such as a (meth)acryloyl group or a vinyl group and (ii) an acetoacetoxy group can be used without any particular limitation. Examples of the acetoacetoxy group-containing monomer include acetoacetoxyethyl (meth)acrylate, acetoacetoxypropyl (meth)acrylate, acetoacetoxybutyl (meth)acrylate, acetoacetoxypentyl (meth)acrylate, and acetoacetoxyhexyl (meth)acrylate. These can be used alone or in combination of two or more thereof.

Among these polar group-containing monomers, the hydroxyl group-containing monomer is preferable, for example, because it makes it easy to introduce the (meth)acryloyl group into the side chain and/or the terminal of the (meth)acrylic resin (A).

The (meth)acrylic resin (A) can further have a structural unit derived from a reactive silicon group-containing monomer. Specifically, the monomer component constituting the main chain of the (meth)acrylic resin (A) can further contain the reactive silicon group-containing monomer. It can also be said that the (meth)acrylic resin (A) can further contain a reactive silicon group.

The reactive silicon group is exemplified by, but not particularly limited to, a trimethoxysilyl group, a triethoxysilyl group, a triisopropoxysilyl group, a dimethoxymethylsilyl group, a diethoxymethylsilyl group, a diisopropoxymethylsilyl group, a tris(2-propenyloxy)silyl group, a (chloromethyl)dimethoxysilyl group, a (methoxymethyl)dimethoxysilyl group, a (methoxymethyl)diethoxysilyl group, and an (ethoxymethyl)dimethoxysilyl group. The trimethoxysilyl group, the triethoxysilyl group, and the dimethoxymethylsilyl group are preferable, and the dimethoxymethylsilyl group is particularly preferable. This is because these reactive silicon groups are versatile, are highly active, and make it possible to obtain favorable curability. From the viewpoint of storage stability, the dimethoxymethylsilyl group and the triethoxysilyl group

are particularly preferable. The (chloromethyl)dimethoxysilyl group and the (methoxymethyl)dimethoxysilyl group are preferable because they show particularly high curability. A cured product obtained from the reaction curable liquid resin that contains the (meth)acrylic resin (A) having a trifunctional silyl group such as a trimethoxysilyl group or a triethoxysilyl group tends to be highly recoverable and is therefore preferable.

The (meth)acrylic resin (A) that contains the reactive silicon group is exemplified by, but not particularly limited to, (3-trimethoxysilyl)propyl (meth)acrylate, (3-triethoxysilyl) propyl (meth)acrylate, (3-dimethoxymethylsilyl)propyl (meth)acrylate, (2-trimethoxysilyl)ethyl methacrylate, (2-triethoxysilyl)ethyl methacrylate, (2-dimethoxymethylsilyl)ethyl methacrylate, trimethoxysilylmethyl methacrylate, triethoxysilylmethyl methacrylate, and dimethoxymethylsilylmethyl methacrylate. Among these, (3-trimethoxysilyl)propyl (meth)acrylate, (3-triethoxysilyl)propyl (meth)acrylate, and (3-dimethoxymethylsilyl)propyl (meth)acrylate are preferable, (3-trimethoxysilyl)propyl (meth)acrylate and (3-dimethoxymethylsilyl)propyl (meth)acrylate are more preferable, and (3-trimethoxysilyl)propyl (meth)acrylate is even more preferable. These (meth)acrylic resins (A) each of which contains the reactive silicon group can be used alone or in combination of two or more thereof.

The (meth)acrylic resin (A) has a weight average molecular weight that is not particularly limited but is preferably 4000 to 100000, more preferably 6000 to 80000, and even more preferably 10000 to 50000.

(Acrylic resin (B))

The acrylic resin (B) is an acrylic resin obtained by polymerizing a monomer component containing linear alkyl group-containing alkyl acrylate, and has a (meth)acryloyl group at a side chain and/or a terminal thereof.

The monomer component constituting the main chain of the acrylic resin (B) preferably contains, relative to all the monomer components, not more than 99.9% by mass, more preferably 30.0% by mass to 99.5% by mass, and even more preferably 40.0% by mass to 95% by mass, of one or more monomers selected from the group consisting of the linear alkyl group-containing alkyl acrylate.

The linear alkyl group preferably has 8 to 24 carbon atoms. Examples of the alkyl acrylate containing the linear alkyl group that has 8 to 24 carbon atoms include n-octyl acrylate, n-nonyl acrylate, n-decyl acrylate, n-undecyl acrylate, n-dodecyl acrylate (lauryl acrylate), n-tridecyl acrylate, and n-stearyl acrylate. These can be used alone or in combination of two or more thereof.

The linear alkyl group can alternatively have 1 to 7 carbon atoms. Examples of the alkyl acrylate containing the linear alkyl group that has 1 to 7 carbon atoms include methyl acrylate, ethyl acrylate, n-propyl acrylate, n-butyl acrylate, n-pentyl acrylate, n-hexyl acrylate, and n-heptyl acrylate. These can be used alone or in combination of two or more thereof.

A homopolymer of the linear alkyl group-containing alkyl methacrylate has a Tg of -80°C to 20°C, and more preferably -70°C to -10°C.

The (meth)acryloyl group that the acrylic resin (B) has at the side chain and/or the terminal thereof can be introduced into the acrylic resin by, for example, reacting a hydroxyl group-, amino group-, or carboxyl group-containing acrylic resin with a (meth)acryloyl group-containing isocyanate compound.

The (meth)acryloyl group-containing isocyanate compound can be any of the compounds by which the (meth)acrylic resin (A) is exemplified.

The (meth)acryloyl group-containing isocyanate compound is blended in an amount of preferably 0.1% by mass to 10% by mass, and more preferably 0.5% by mass to 5% by mass, relative to 100% by mass of the acrylic resin into which the (meth)acryloyl group has not been introduced.

For example, an acrylic resin that has a hydroxyl group, an amino group, or a carboxyl group at a side chain and/or a terminal thereof can be reacted with the (meth)acryloyl group-containing isocyanate compound for 2 hours to 10 hours in the presence of an organotin catalyst such as dibutyltin dilaurate, under the atmosphere of inert gas, and at a temperature ranging from room temperature (25°C) to 80°C.

The monomer component constituting the main chain of the acrylic resin (B) can further contain a polar group-containing monomer. The polar group-containing monomer is contained in an amount of preferably 0.1% by mass to 20% by mass relative to all the monomer components. From the viewpoint of an increase in adhesive force and cohesive force of a cured product, the polar group-containing monomer is contained in an amount of more preferably not less than 0.5% by mass, and even more preferably not less than 1% by mass. However, the polar group-containing monomer that is contained in a too large amount results in obtainment of a hard cured product of a reaction curable liquid resin and in an increase in viscosity. Thus, the polar group-containing monomer is contained in an amount of more preferably not more than 18% by mass, and even more preferably not more than 15% by mass.

Examples of the polar group-containing monomer include a carboxyl group-containing monomer, a hydroxyl group-containing monomer, a nitrogen atom-containing monomer, and an acetoacetyl group-containing monomer. The polar group-containing monomer can be any of the compounds by which the (meth)acrylic resin (A) is exemplified.

Among these polar group-containing monomers, the hydroxyl group-containing monomer is preferable, for

example, because it makes it easy to introduce the (meth)acryloyl group into the side chain and/or the terminal of the acrylic resin (B).

The acrylic resin (B) can further have a structural unit derived from a reactive silicon group-containing monomer. Specifically, the monomer component constituting the main chain of the acrylic resin (B) can further contain the reactive silicon group-containing monomer. It can also be said that the acrylic resin (B) can further contain a reactive silicon group. Examples of the reactive silicon group include the reactive silicon groups described in the section "((Meth)acrylic resin (A))".

The acrylic resin (B) that contains the reactive silicon group is exemplified by, but not particularly limited to, (2-trimethoxysilyl)ethylacrylate, (2-triethoxysilyl)ethylacrylate, (2-dimethoxymethylsilyl)ethylacrylate, trimethoxysilyl methylacrylate, triethoxysilyl methylacrylate, and dimethoxymethylsilyl methylacrylate.

The acrylic resin (B) has a weight average molecular weight that is not particularly limited but is preferably 4000 to 100000, more preferably 6000 to 80000, and even more preferably 10000 to 50000.

(B)) (Mixture of (meth)acrylic resin (A) and acrylic resin

A mixture of the (meth)acrylic resin (A) and the acrylic resin (B) is obtained by mixing the (meth)acrylic resin (A) (described earlier) and the acrylic resin (B) (described earlier). The content ratio (mixing ratio) between the (meth)acrylic resin (A) and the acrylic resin (B) is preferably 80% by mass/20% by mass to 95% by mass/5% by mass, and more preferably 85% by mass/ 15% by mass to 95% by mass/5% by mass.

Regarding other examples of the acrylic-based resin, Japanese Patent Application Publication Tokukai No. 2016-13028, International Publication No. 2016-035718, Japanese Patent Application Publication Tokukai No. 2017-122174, Japanese Patent No. 2851350, and Japanese Patent Application Publication Tokukai No. 2016-131718 can be applied as appropriate.

(I-1-1-1-C. Polyisobutylene-based resin)

The polyisobutylene-based resin is not particularly limited but can be exemplified by various conventionally known polyisobutylene-based resins. The polyisobutylene-based resin is, for example, a polymer whose main skeleton is composed of isobutylene and that has a (meth)acryloyl group in a molecule thereof.

The "(meth)acryloyl" means at least one of acryloyl ($CH_2$=CHCO-) and methacryloyl ($CH_2$=C ($CH_3$) CO-). The "main skeleton" means a main skeleton that forms a main chain of a polymer (a skeleton that accounts for the largest proportion in the entire structure of the polymer). The "skeleton composed of isobutylene" means a skeleton that is included in an "isobutylene skeleton", which is a skeleton consisting of $-[CH_2-C(CH_3)_2]-$ units, and that is composed of carbon and hydrogen.

The polymer is not particularly limited and can be selected as appropriate according to a purpose, provided that the polymer has skeletons including a main skeleton composed of isobutylene and has a (meth)acryloyl group in a molecule thereof. The polymer can be a hydrogenated product (a polymer whose main skeleton is hydrogenated and that is also referred to as a hydrogenated polymer). Specific examples of the polymer are not particularly limited and can be selected as appropriate according to a purpose. These can be used alone or in combination of two or more thereof.

The number of (meth)acryloyl groups in a molecule of the polymer can be selected as appropriate according to a purpose, provided that the polymer has one or more (meth)acryloyl groups in a molecule thereof. In a case where the polymer has two or more (meth)acryloyl groups in a molecule thereof, a network structure can be formed. This achieves a smaller permanent compression set.

A position(s) of the (meth)acryloyl group(s) in a molecule of the polymer is/are not particularly limited and can be selected as appropriate according to a purpose. The (meth)acryloyl group(s) can be located at a terminal(s) (one terminal or both terminals) or in a side chain of the polymer.

The polymer has a number average molecular weight, which is not particularly limited and can be selected as appropriate according to a purpose, of preferably 1000 to 40,000, and more preferably 2000 to 35,000.

Regarding other examples of the polyisobutylene-based resin, Japanese Patent Application Publication Tokukai No. 2014-80497, Japanese Patent Publication No. 2873395, Japanese Patent Publication No. 3315210, Japanese Patent Publication No. 3368057, and Japanese Patent Application Publication Tokukai No. 2004-204183 can be applied as appropriate.

(I-1-1-1-D. Urethane-based resin)

The urethane-based resin is a resin that contains a urethane bond in a molecule thereof. The urethane-based resin is soluble in an organic solvent and has a repeating unit that contains at least one urethane bond in a molecule thereof. The urethane-based resin is a polymer that has a polyethylene glycol equivalent weight average molecular

weight of not less than 1,000 and not more than 1,000,000. Specifically, the urethane-based resin is a polymer produced by a method in which (i) a polyisocyanate component and (ii) a polyol component containing polyol, a catalyst, and other auxiliary agent(s) are mixed at a fixed ratio.

Examples of the polyisocyanate component include diphenylmethane diisocyanate, polymeric diphenylmethane diisocyanate, polymeric tolylenediisocyanate, xylylene diisocyanate, and the like; modified polyisocyanates of these, i.e., products that are obtained in a partial chemical reaction of polyisocyanates and are exemplified by polyisocyanates containing groups such as ester groups, urea groups, burette groups, allophanate groups, carbodiimide groups, isocyanurate groups, or urethane groups; and the like. These can be used alone or in combination of two or more thereof.

Examples of the polyol component include polyether polyol and/or polyester polyol. Examples of the polyether polyol include polyether polyols obtained by carrying out addition polymerization of alkylene oxides such as ethylene oxide, propylene oxide, and butylene oxide with an initiator. Examples of the initiator include (i) polyhydric alcohols such as ethylene glycol, propylene glycol, glycerin, trimethylolpropane, pentaerythritol, sorbitol, sucrose, and bisphenol A, (ii) aliphatic amines such as ethanolamine, diethanolamine, triethanolamine, and ethylenediamine, (iii) aromatic amines such as toluenediamine and methylenedianiline, and (iv) Mannich condensation products. The above polyether polyols can be used alone or in combination of two or more thereof. The polyether polyol is particularly preferably an aromatic polyether polyol obtained by using an aromatic amine as the initiator. This is because the aromatic polyether polyol achieves a lower thermal conductivity. The polyether polyol has a hydroxyl value that is not particularly limited but is preferably 300 mgKOH/g to 800 mgKOH/g.

Examples of the polyester polyol include polyols obtained by condensing the polyhydric alcohols into polyvalent carboxylic acids and polyols obtained by cyclic ester ring-opening polymerization. Examples of the polyvalent carboxylic acids include succinic acid, glutaric acid, adipic acid, suberic acid, azelaic acid, sebacic acid, maleic acid, fumaric acid, and aliphatic polybasic acids that are anhydrides of these acids. The polyester polyol is particularly preferably a polyester polyol having an aromatic ring. The polyester polyol has a hydroxyl value that is not particularly limited but is preferably 100 mgKOH/g to 400 mgKOH/g.

Furthermore, examples of the polyol component include liquid polymers having highly reactive hydroxyl groups at molecular terminals, such as polybutadiene-based polyols (e.g., hydroxyl group-terminated liquid polybutadiene), polyisoprene-based polyols (e.g., hydroxyl group-terminated liquid polyisoprene), and polyolefin-based polyols (e.g., hydroxyl group-terminated liquid polyolefin). The liquid polymers having highly reactive hydroxyl groups at molecular terminals are preferable because they each have a main-chain structure that is highly resistant to hydrolysis.

Moreover, the resin that contains a urethane bond in a molecule thereof can be obtained by any reaction. For example, by reacting a diol compound represented by General Formula (2) below with a diisocyanate compound represented by General Formula (3) below, the resin that contains a urethane bond in a molecule thereof is obtained as a structure that contains a repeating unit containing a urethane bond represented by General Formula (4) below.

General Formula (2):

$$HO-R^2-OH$$

where $R^2$ represents a divalent organic group.

General Formula (3):

$$OCN-X^1-NCO$$

where $X^1$ represents a divalent organic group.

General Formula (4):

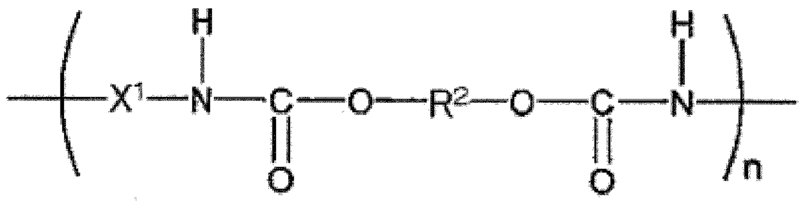

where $R^2$ and $X^1$ each independently represent a divalent organic group, and n represents an integer of not less than 1.

A known technique is used to produce the urethane-based resin by copolymerizing the components listed earlier.

(I-1-1-1-E. Epoxy-based resin)

The epoxy-based resin is not particularly limited but can be exemplified by various conventionally known epoxy-based resins. Examples of the epoxy-based resin include (i) aromatic glycidyl ether compounds such as bis(4-hydroxyphenyl)propane diglycidyl ether, bis(4-hydroxy-3,5-dibromophenyl)propane diglycidyl ether, bis(4-hydroxyphenyl)ethane diglycidyl ether, bis(4-hydroxyphenyl)methane diglycidyl ether, resorcinol diglycidyl ether, fluoroglycinol triglycidyl ether, trihydroxybiphenyl triglycidyl ether, tetraglycidyl benzophenone, bisresorcinol tetraglycidyl ether, tetramethyl bisphenol A diglycidyl ether, bisphenol C diglycidyl ether, bisphenol hexafluoropropane diglycidyl ether, 1,3-bis[1-(2,3-epoxypropoxy)-1-trifluoromethyl-2,2,2-trifluoroethyl]benzene, 1,4-bis[1-(2,3-epoxypropoxy)-1-trifluoromethyl-2,2,2-trifluoromethyl]benzene, 4,4'-bis(2,3-epoxypropoxy)octafluorobiphenyl, and phenol novolac bisepoxy compounds, (ii) alicyclic polyepoxy compounds such as alicyclic diepoxy acetal, alicyclic diepoxy adipate, alicyclic diepoxy carboxylate, and vinyl cyclohexene dioxide, (iii) glycidyl ester compounds such as diglycidyl phthalate, diglycidyl tetrahydrophthalate, diglycidyl hexahydrophthalate, dimethylglycidyl phthalate, dimethylglycidyl hexahydrophthalate, diglycidyl-p-oxybenzoate, diglycidyl cyclopentane-1,3-dicarboxylate, and dimeric acid glycidyl ester, (iv) glycidylamine compounds such as diglycidylaniline, diglycidyl toluidine, triglycidyl aminophenol, tetraglycidyl diaminodiphenylmethane, and diglycidyl tribromoaniline, and (v) heterocyclic epoxy compounds such as diglycidyl hydantoin, glycidyl glycidoxyalkyl hydantoin, and triglycidyl isocyanurate.

Regarding other examples of the epoxy-based resin, International Publication No. 2010/103809 can be applied as appropriate.

In the first embodiment of the present invention, the first reaction curable liquid resin can be selected as appropriate so that the surface layer has a type E hardness value of not more than 50, a 100% modulus of not more than 0.50 MPa ($N/mm^2$), and an elongation percentage at break of not less than 100%.

A resin different from the silicone-based resin, the acrylic-based resin, the polyisobutylene-based resin, the urethane-based resin, and the epoxy-based resin that are shown as the examples of the reaction curable liquid resin can be any resin that is used in the field to which the present invention pertains.

(Diluent and photoradical initiator)

The surface layer can optionally contain a diluent and/or a photoradical initiator. The surface layer can contain a cured product of the first reaction curable liquid resin and the diluent and/or the photoradical initiator.

The diluent is exemplified by, but not particularly limited to, isostearyl alcohol and telechelic polyacrylate. The diluent can alternatively be a commercially available diluent that is exemplified by isostearyl alcohol (manufactured by OSAKA ORGANIC CHEMICAL INDUSTRY LTD.) and MM 100C (telechelic polyacrylate, manufactured by KANEKA CORPORATION).

The photoradical initiator is exemplified by, but not particularly limited to, 2-hydroxy-2-methyl-1-phenylpropane-1-on and bis(2,4,6-trimethylbenzoyl)-phenylphosphine oxide. The photoradical initiator can alternatively be a commercially available photoradical initiator. For example, 2-hydroxy-2-methyl-1-phenylpropane-1-on is available as IRGACURE 1173 (manufactured by BASF Japan Ltd.), and bis(2,4,6-trimethylbenzoyl)-phenylphosphine oxide is available as IRGACURE 819 (manufactured by BASF Japan Ltd.). These diluents and/or photoradical initiators can be used alone or in combination of two or more thereof.

The contained amount(s) of the diluent and/or the photoradical initiator is/are not particularly limited. The diluent is contained in an amount of preferably 5 parts by weight to 50 parts by weight relative to 100 parts by weight of the first reaction curable liquid resin because the amount is enough to prevent the first reaction curable liquid resin with which

the heat storage material is being coated from being less handleable. In order to allow a photocuring reaction to sufficiently proceed in the surface layer by ultraviolet irradiation, the photoradical initiator is contained in an amount of preferably 0.2 parts by weight to 5.0 parts by weight, more preferably 0.5 parts by weight to 4.0 parts by weight, and even more preferably 1.0 part by weight to 3.0 parts by weight, relative to 100 parts by weight of the first reaction curable liquid resin.

The surface layer that contains the diluent preferably prevents moisture resistance of the surface layer and of the cured product of the first reaction curable liquid resin from being lost due to the diluent.

(1-1-1-2. Water vapor permeability)

The surface layer preferably has a low water vapor permeability because such a surface layer makes it possible to prevent or reduce a reduction in heat storage effect as the latent heat storage material which reduction is caused by moisture absorption of the inorganic latent heat storage material contained in the inorganic latent heat storage material composition of the heat storage material. The term "water vapor permeability" may also be referred to as "water vapor transmission rate", "WVTR," and "moisture permeability". Since the water vapor permeability of the surface layer largely depends on the water vapor permeability of the cured product of the first reaction curable liquid resin contained in the surface layer, the cured product of the first reaction curable liquid resin preferably has a low water vapor permeability.

A cured product having a thickness of 1 mm and obtained by curing the first reaction curable liquid resin (i.e., the cured product of the first reaction curable liquid resin) has a water vapor permeability of preferably less than 500 $g/m^2$ per day, more preferably not more than 250 $g/m^2$ per day, even more preferably not more than 150 $g/m^2$ per day, still more preferably not more than 100 $g/m^2$ per day, and particularly preferably not more than 80 $g/m^2$ per day, observed at a temperature of 40°C and a humidity of 90%. The configuration allows a resultant latent heat storage material to have an advantage of having a lower moisture absorbency. In a case where the cured product of the first reaction curable liquid resin has a water vapor permeability in the above range, the cured product of the first reaction curable liquid resin can also be said to have moisture resistance. The expression "the cured product of the first reaction curable liquid resin" refers to "a state in which the first reaction curable liquid resin is cured". The expression "a state in which the first reaction curable liquid resin is cured" refers to, for example, the following state: a state in which a cured product obtained by reacting (curing) the first reaction curable liquid resin by heating or ultraviolet irradiation is allowed to age for not less than 24 hours in room temperature atmosphere and in a closed vessel, and then no adhered matter is observed, by visual inspection, on a needle-shaped bar with which the cured product is perpendicularly punctured and that has a diameter of 1 mm.

The surface layer has a water vapor permeability of preferably less than 500 $g/m^2$ per day, more preferably not more than 250 $g/m^2$ per day, even more preferably not more than 150 $g/m^2$ per day, still more preferably not more than 100 $g/m^2$ per day, and particularly preferably not more than 80 $g/m^2$ per day, observed at a temperature of 40°C and a humidity of 90%. The configuration allows a resultant latent heat storage material to have an advantage of having a lower moisture absorbency. In a case where the surface layer has a water vapor permeability of less than 500 $g/m^2$ per day observed at a temperature of 40°C and a humidity of 90%, the cured product having a thickness of 1 mm and obtained by curing the first reaction curable liquid resin is highly likely to have a water vapor permeability of less than 500 $g/m^2$ per day observed at a temperature of 40°C and a humidity of 90%.

(1-1-1-3. Type E hardness value and type A hardness value)

The surface layer has a type E hardness value of not more than 50, preferably not more than 48, more preferably not more than 45, even more preferably not more than 40, and particularly preferably not more than 30. The surface layer has a type A hardness value of not more than 30, preferably not more than 28, more preferably not more than 25, even more preferably not more than 20, and particularly preferably not more than 15. The type E hardness value herein means a value obtained by measurement with use of a type E durometer conforming to JIS K 6253-3. The type A hardness value herein means a value obtained by measurement with use of a type A durometer conforming to JIS K 6253-3, ISO 48-4, ASTM D 2240, or the like. Specific examples of methods for measuring the type E hardness value and the type A hardness value will be described in detail in Examples (described later).

(1-1-1-4. Modulus)

The surface layer has a 50% modulus of not more than 0.40 MPa ($N/mm^2$), preferably not more than 0.35 MPa ($N/mm^2$), more preferably not more than 0.30 MPa ($N/mm^2$), even more preferably not more than 0.25 MPa ($N/mm^2$), and particularly preferably not more than 0.20 MPa ($N/mm^2$). The surface layer has a 100% modulus of not more than 0.50 MPa ($N/mm^2$), preferably not more than 0.48 MPa ($N/mm^2$), more preferably not more than 0.45 MPa ($N/mm^2$), even more preferably not more than 0.40 MPa ($N/mm^2$), and particularly preferably not more than 0.30 MPa ($N/mm^2$). Note that the 50% modulus means a tensile strength at 50% elongation, and the 100% modulus means a tensile strength

at 100% elongation. Methods for measuring the 50% modulus and the 100% modulus are not particularly limited, and specific examples of the methods will be described in detail in Examples (described later).

(1-1-1-5. Elongation percentage at break)

The surface layer has an elongation percentage at break of not less than 100%, preferably not less than 110%, more preferably not less than 125%, even more preferably not less than 150%, and particularly preferably not less than 200%. A method for measuring the elongation percentage at break is not particularly limited, and a specific example of the method will be described in detail in Examples (described later).

The surface layer, which has (i) a type E hardness value of not more than 50, (ii) a 100% modulus of not more than 0.50 MPa ($N/mm^2$), and (iii) an elongation percentage at break of not less than 100%, has an advantage of being capable of being deformed. The surface layer can alternatively be said to be deformable. The volume of the heat storage material that is in the molten state can be expanded by being solidified, and the volume of the heat storage material which is in the solidified state can be reduced by being melted. The surface layer, which has (i) a type E hardness value of not more than 50, (ii) a 100% modulus of not more than 0.50 MPa ($N/mm^2$), and (iii) an elongation percentage at break of not less than 100%, can be stretched and shortened with respect to expansion and reduction in volume of the heat storage material. The surface layer can alternatively be said to be conformable to a change in volume of the heat storage material. In a case where the type E hardness value, the 100% modulus, and the elongation percentage at break of the surface layer are in the respective above-mentioned preferable ranges, the surface layer can be deformed to a greater extent and has excellent conformability.

With the configuration described above, the surface layer has advantages of (a) being soft, (b) being self-repairable even if a small hole (e.g., pinhole) is made therein due to an impact such as a puncture, (c) being viscous, and (d) being attachable/detachable to/from various members. The surface layer can alternatively be said to have self-repairability. In a case where the type E hardness value, the 100% modulus, and the elongation percentage at break of the surface layer are in the respective above-mentioned preferable ranges, the surface layer (a) is softer, (b) has excellent self-repairability, and (c) has excellent viscosity.

(1-1-1-6. Thickness)

The surface layer has a thickness of preferably 10 μm to 5 mm, more preferably 50 μm to 4 mm, even more preferably 100 μm to 3 mm, and particularly preferably 200 μm to 2 mm. The configuration allows the present latent heat storage material to have good thermal responsiveness, lower moisture absorbency, and more excellent moisture resistance.

The surface layer can have a multilayer structure. For example, the surface layer can have a multilayer structure including two or more types of layers containing respective different cured products of the first reaction curable liquid resin. Furthermore, the present latent heat storage material including the heat storage material and the surface layer, together with another heat storage material, can be further covered with a surface layer.

(1-1-2. Heat storage material)

(1-1-2-1. Inorganic latent heat storage material composition)

The inorganic latent heat storage material composition contained in the heat storage material of the present latent heat storage material is flame retardant. The present latent heat storage material makes it unnecessary to use, as the latent heat type heat storage material, an organic latent heat storage material composition, which has a flammability problem. The present latent heat storage material is therefore more flame retardant than a conventional latent heat storage material. In the following description, the term "inorganic latent heat storage material composition" may also be referred to as a "heat storage material composition".

The heat storage material composition contains a thickener. Therefore, the heat storage material composition has an advantage of not being separated into solid and liquid fractions under a temperature condition higher than a melting temperature of the heat storage material composition. The heat storage material composition is preferably in a gel state and not separated into solid and liquid fractions under the temperature condition higher than the melting temperature of the heat storage material composition.

The expression "the inorganic latent heat storage material composition is not separated into solid and liquid fractions under the temperature condition higher than the melting temperature of the inorganic latent heat storage material composition" herein can alternatively be expressed as the following (a) or (b): (a) the inorganic latent heat storage material composition which is heated to a temperature that is more than the melting temperature of the inorganic latent heat storage material composition is not separated into solid and liquid fractions; or (b) the inorganic latent heat storage

material composition which has a temperature that is more than the melting temperature of the inorganic latent heat storage material composition is not separated into solid and liquid fractions. The expression "the inorganic latent heat storage material composition is separated into solid and liquid fractions" herein means, for example, that the inorganic latent heat storage material composition which is placed in an appropriate vessel and allowed to stand for a certain period of time is in the following state: a state in which a solid fraction of the inorganic latent heat storage material composition precipitates, and a moisture in the inorganic latent heat storage material composition leaks as a supernatant, so that the solid fraction and the moisture separate from each other. The storage material composition that is separated into solid and liquid fractions changes the structure of the inorganic latent heat storage material (e.g., inorganic hydrated salt) contained in the storage material composition. This may impair heat storage performance. As described earlier, the heat storage material composition contained in the present latent heat storage material can have a property of not being separated into solid and liquid fractions even under the temperature condition higher than the melting temperature of the heat storage material composition. The present latent heat storage material thus has advantages of neither losing its heat storage performance nor flowing even under the temperature condition higher than the melting temperature of the inorganic latent heat storage material composition.

Furthermore, the present latent heat storage material has an advantage such that, even in a case where the present latent heat storage material is repeatedly exposed to the temperature condition higher than the melting temperature of the heat storage material composition and to a temperature condition lower than the melting temperature of the heat storage material composition, the heat storage material composition contained in the latent heat storage material is not separated into solid and liquid fractions, and heat storage performance of the latent heat storage material is unchanged. That is, the present latent heat storage material is highly durable.

The heat storage material composition of the present latent heat storage material is preferably in a gel state and not separated into solid and liquid fractions under a temperature condition that is not less than 10°C higher than the melting temperature of the heat storage material composition, more preferably in a gel state and not separated into solid and liquid fractions under a temperature condition that is not less than 20°C higher than the melting temperature of the heat storage material composition, even more preferably in a gel state and not separated into solid and liquid fractions under a temperature condition that is not less than 25°C higher than the melting temperature of the heat storage material composition, still more preferably in a gel state and not separated into solid and liquid fractions under a temperature condition that is not less than 30°C higher than the melting temperature of the heat storage material composition, even further preferably in a gel state and not separated into solid and liquid fractions under a temperature condition that is not less than 35°C higher than the melting temperature of the heat storage material composition, and particularly preferably in a gel state and not separated into solid and liquid fractions under a temperature condition that is not less than 40°C higher than the melting temperature of the heat storage material composition.

Note that the temperature of an environment in which the present latent heat storage material is used is not particularly limited. From the viewpoint of an appropriate mixing ratio between the inorganic latent heat storage material (e.g., hydrated salt) and the thickener that are contained in the inorganic latent heat storage material composition, the present latent heat storage material is preferably used at a temperature that is not more than 40°C higher than the melting temperature of the storage material composition.

The expression "the inorganic latent heat storage material composition is in a gel state and not separated into solid and liquid fractions under a temperature condition that is not less than X°C higher than the melting temperature of the inorganic latent heat storage material composition" herein can alternatively be expressed as the following (a) or (b): (a) the inorganic latent heat storage material composition which is heated to a temperature that is not less than X°C higher than the melting temperature of the inorganic latent heat storage material composition is in a gel state and not separated into solid and liquid fractions; or (b) the inorganic latent heat storage material composition which has a temperature that is not less than X°C higher than the melting temperature of the inorganic latent heat storage material composition is in a gel state and not separated into solid and liquid fractions. More specifically, the expression "the inorganic latent heat storage material composition is in a gel state under the temperature condition that is not less than X°C higher than the melting temperature of the inorganic latent heat storage material composition" herein means that the inorganic latent heat storage material composition which has a temperature that is not less than X°C higher than the melting temperature of the inorganic latent heat storage material composition has a viscosity of 2 Pa·s to 25 Pa·s. A measurement of "viscosity" which measurement is used to define the wording "gel state" is assumed to be a value measured by an oscillational viscometer (also referred to as a tuning fork vibration rheometer).

The intermediate temperature in the temperature range that is exhibited by the inorganic latent heat storage material composition while the inorganic latent heat storage material composition that is in a solid state is melting into a liquid state or a gel state is herein regarded as the "melting temperature" of the inorganic latent heat storage material composition. The term "melting temperature" may also be referred to as "melting point, "phase change temperature," or "phase transition temperature."

(Inorganic latent heat storage material)

A component of the latent heat type heat storage material which component is contained in the inorganic latent heat storage material composition is not particularly limited provided that the component is an inorganic component. A component that is contained in the inorganic latent heat storage material composition and that functions as the latent heat type heat storage material is referred to as the inorganic latent heat storage material. That is, the inorganic latent heat storage material composition contains the inorganic latent heat storage material. Examples of the inorganic latent heat storage material include hydrated salts such as sodium acetate trihydrate (having a melting temperature of 58°C), sodium thiosulfate pentahydrate (having a melting temperature of 48.5°C), sodium sulfate decahydrate (having a melting temperature of 32.4°C), calcium chloride dihydrate (having a melting temperature of 176°C), calcium chloride hexahydrate (having a melting temperature of 29.8°C), disodium hydrogen phosphate dodecahydrate (having a melting temperature of 35.2°C), and sodium carbonate decahydrate (having a melting temperature 33°C). Among these, the calcium chloride hexahydrate is the most preferable as the inorganic latent heat storage material. This is because the calcium chloride hexahydrate is, for example, (i) usable in a temperature zone that is assumed to be an environment in which a human is living, (ii) highly durable, and (iii) less odorous. An inorganic latent heat storage material disclosed in International Publication No. WO 2017/164304 can also be used as the inorganic latent heat storage material of the first embodiment of the present invention. As the inorganic latent heat storage material, only one of the compounds listed earlier can be used, or two or more of the compounds listed earlier can be used in combination. The inorganic latent heat storage material preferably contains the calcium chloride hexahydrate. The inorganic latent heat storage material composition can also be said to preferably contain the calcium chloride hexahydrate as the inorganic latent heat storage material.

The amount of the inorganic latent heat storage material contained in the inorganic latent heat storage material composition is not particularly limited, and can be set as appropriate in accordance with a desired melting temperature and a desired viscosity of the inorganic latent heat storage material composition. The inorganic latent heat storage material composition contains the inorganic latent heat storage material in an amount of preferably not less than 50% by weight, more preferably not less than 55% by weight, even more preferably not less than 60% by weight, still more preferably not less than 65% by weight, and particularly preferably not less than 70% by weight, relative to 100% by weight (the total weight) of components that are contained in the inorganic latent heat storage material composition and that are different from water (moisture). The configuration allows a resultant latent heat storage material to have a higher latent heat quantity per weight and consequently to have an advantage of efficiently functioning as a heat storage material. The inorganic latent heat storage material composition contains the calcium chloride hexahydrate as the inorganic latent heat storage material in an amount of preferably not less than 50% by weight, more preferably not less than 55% by weight, even more preferably not less than 60% by weight, still more preferably not less than 65% by weight, and particularly preferably not less than 70% by weight, relative to 100% by weight (the total weight) of the components that are contained in the inorganic latent heat storage material composition and that are different from water (moisture). The configuration allows a resultant latent heat storage material to have a higher latent heat quantity per weight and consequently to have an advantage of efficiently functioning as a heat storage material.

(Thickener)

The thickener, which allows the inorganic latent heat storage material composition to have a higher viscosity, can also be said to allow the inorganic latent heat storage material composition to be in a gel state. The thickener is not particularly limited provided that it allows the inorganic latent heat storage material composition to have a higher viscosity. Examples of the thickener include a water-absorbing resin, attapulgite clay, gelatin, agar, silica, xanthan gum, gum arabic, guar gum, carageenan, cellulose, and konjac. Examples of the water-absorbing resin include a starch-based resin, an acrylate-based resin, a poval-based resin, and a carboxymethyl cellulose-based resin. Examples of silica include fumed silica, precipitated silica, and silica gel. The term "thickener" can alternatively be referred to as a "gelling agent." The terms "thickener" and "gelling agent" are interchangeable.

The thickener can be an ionic thickener or a nonionic thickener. In a case where the inorganic latent heat storage material composition contains an inorganic salt as the inorganic latent heat storage material, the inorganic salt is often dissolved into an ionic state. Thus, in a case where the inorganic latent heat storage material composition contains an inorganic salt as the inorganic latent heat storage material, the thickener is preferably the nonionic thickener because the nonionic thickener does not affect inorganic ions dissolved in the inorganic latent heat storage material composition.

Examples of the nonionic thickener include guar gum, dextrin, polyvinylpyrrolidone, and hydroxyethyl cellulose. Among the nonionic thickeners, hydroxyethyl cellulose is particularly preferable because it allows the inorganic latent heat storage material composition that is in a gel state to be highly stable, and because it is highly environmentally friendly.

Carboxymethyl cellulose and hydroxyethyl cellulose are also cellulose derivatives. The thickener can alternatively be a cellulose derivative that is different from carboxymethyl cellulose and hydroxyethyl cellulose.

In the present latent heat storage material, the thickener is preferably at least one kind selected from the group consisting of a water-absorbing resin, attapulgite clay, gelatin, agar, silica, xanthan gum, gum arabic, guar gum, carageenan, cellulose, konjac, and hydroxyethyl cellulose.

In the inorganic latent heat storage material composition, a change in temperature may cause precipitation of the inorganic salt over time depending on the concentration of the inorganic salt contained in the inorganic latent heat storage material composition. The thickener that is contained in the inorganic latent heat storage material composition not only (a) allows the inorganic latent heat storage material composition to be in a gel state but also (b) makes it possible to prevent precipitation of the inorganic salts in the inorganic latent heat storage material composition by efficiently dispersing ions of the inorganic salt which are dissolved in the inorganic latent heat storage material composition.

The thickener that is contained in the inorganic latent heat storage material composition does not affect melting and/or solidification behavior of the inorganic latent heat storage material composition and allows the inorganic latent heat storage material composition to maintain a high melting latent heat quantity. The inorganic latent heat storage material composition that contains the thickener has an advantage such that the inorganic latent heat storage material composition is not separated into solid and liquid fractions in a resultant latent heat storage material even after a heat cycle test is carried out at an environmental temperature at which the latent heat storage material is assumed to be used.

Furthermore, even in a case where the inorganic latent heat storage material composition leaks out from the latent heat storage material, the inorganic latent heat storage material composition that contains the thickener allows a reduction in environmental load during the leak and in workload during collection of the inorganic latent heat storage material composition that has leaked out.

In the first embodiment of the present invention, a mixture whose main components are (i) polyester, (ii) an organic solvent that is volatile at normal temperature, and (iii) a metallic oxide is not included in the scope of the thickener. Moreover, in order to allow the latent heat storage material to be more flame retardant, the thickener preferably contains a smaller amount of the organic solvent that is volatile at normal temperature, and preferably substantially does not contain the organic solvent that is volatile at normal temperature. Specifically, the amount in which the organic solvent that is volatile at normal temperature is contained in the thickener is preferably not more than 1000 ppm. Examples of the organic solvent that is volatile at normal temperature include a monocyclic aromatic compound(s) that is/are exemplified by benzene, toluene, xylene, ethylene benzene, cumene, paracymene, dimethyl phthalate, diethyl phthalate, and dipropyl phthalate. The total amount of the monocyclic aromatic compound(s) contained in the thickener is preferably not more than 1000 ppm. The total amount of at least one kind of compound contained in the thickener and selected from the group consisting of benzene, toluene, xylene, ethylene benzene, cumene, paracymene, dimethyl phthalate, diethyl phthalate, and dipropyl phthalate is preferably not more than 1000 ppm.

The amount of the thickener contained in the present latent heat storage material is not particularly limited. An optimum amount of the thickener contained may vary depending on a type of the thickener to be used. The present latent heat storage material contains the thickener in an amount of preferably 1 part by weight to 10 parts by weight, and more preferably 2 parts by weight to 6 parts by weight, relative to 100 parts by weight (the total) of the inorganic latent heat storage material and a melting point adjusting agent. The configuration has advantages of (i) making it possible to prevent cohesion and precipitation of salts dissolved in the inorganic latent heat storage material composition, (ii) allowing the inorganic latent heat storage material composition to be highly handleable, and (iii) preventing the inorganic latent heat storage material composition from being separated into solid and liquid fractions under a temperature condition higher than a melting temperature of the inorganic latent heat storage material composition.

(Melting point adjusting agent)

The inorganic latent heat storage material composition preferably further contains a melting point adjusting agent. The melting point adjusting agent has a function of adjusting the melting temperature and the solidification temperature of the inorganic latent heat storage material composition. The melting point adjusting agent can alternatively be referred to as a freezing point reducing agent.

Preferable examples of the melting point adjusting agent include at least one kind selected from the group consisting of (a) metallic bromides such as lithium bromide, sodium bromide, potassium bromide, calcium bromide, magnesium bromide, ammonium bromide, iron bromide, zinc bromide, and barium bromide, and (b) metallic chlorides such as lithium chloride, sodium chloride, potassium chloride, magnesium chloride, ammonium chloride, iron chloride, zinc chloride, and cobalt chloride. Among these melting point adjusting agents, sodium bromide, potassium bromide, ammonium bromide, and the like are preferable because they have a strong melting point adjusting effect. These melting point adjusting agents can be used alone or in combination of two or more thereof.

The amount(s) of melting point adjusting agent(s) contained in the present latent heat storage material is not particularly limited. For example, the melting point adjusting agents are contained in a total amount of preferably not less than 0.05 mol and not more than 2.0 mol, more preferably not less than 0.1 mol and not more than 1.5 mol, and even more preferably not less than 0.15 mol and not more than 1.0 mol, relative to 1.0 mol of the inorganic latent heat

storage material that is the calcium chloride hexahydrate. With the configuration, a space covered by a construction material (e.g., a wall material, a floor material, a ceiling material, or a roof material) for which a resultant latent heat storage material is used can be maintained at an appropriate temperature with high accuracy. For example, in a case where the melting point adjusting agents are contained in a total amount of not less than 0.05 mol and not more than 2.0 mol relative to 1.0 mol of the inorganic latent heat storage material that is the calcium chloride hexahydrate, a resultant latent heat storage material can maintain room temperature in the range of 15°C to 30°C. Note that the amount(s) of the melting point adjusting agent(s) contained in the inorganic latent heat storage material composition can be set as appropriate in a case where the inorganic latent heat storage material is a compound different from the calcium chloride hexahydrate.

The inorganic latent heat storage material composition can contain a melting point adjusting agent different from the metallic bromide and the metallic chloride. Examples of the melting point adjusting agent include (a) an ammonium salt, (b) a metallic halide different from the metallic bromide and the metallic chloride, (c) a metallic nonhalide, (d) urea, and (e) alcohols.

Examples of the ammonium salt include ammonium bromide, ammonium chloride, ammonium sulfate, ammonium nitrate, ammonium carbonate, ammonium hydrocarbonate, ammonium carbamate, ammonium carbamate hydrocarbonate, ammonium formate, ammonium citrate, and ammonium acetate. The ammonium salt, which is highly handleable, has a small environmental load, and is less odorous, is preferably contained in the inorganic latent heat storage material composition in a small amount. The ammonium salt is contained in the inorganic latent heat storage material composition in an amount of preferably not more than 1% by weight, more preferably not more than 0.5% by weight, even more preferably not more than 0.1% by weight, still more preferably not more than 0.01% by weight, and particularly preferably 0% by weight, relative to 100% by weight of the inorganic latent heat storage material composition.

Examples of the metallic halide different from the metallic bromide and the metallic chloride include lithium iodide, sodium iodide, and potassium iodide.

In order to more accurately adjust, to a desired temperature, the temperature of the space covered by the present latent heat storage material, the metallic halide different from the metallic bromide and the metallic chloride is contained in the inorganic latent heat storage material composition in an amount of preferably not more than 1.0 mol, more preferably not more than 0.5 mol, and even more preferably not more than 0.3 mol, relative to 1.0 mol of the inorganic latent heat storage material that is, for example, the calcium chloride hexahydrate.

The amount of the metallic halide that is different from the metallic bromide and the metallic chloride and that is contained in the inorganic latent heat storage material composition can be set as appropriate in a case where the inorganic latent heat storage material is a compound different from the calcium chloride hexahydrate.

Examples of the metallic nonhalide include sodium sulfate, sodium nitrate, sodium acetate, sodium phosphate, sodium borohydride, sodium formate, sodium oxalate, sodium carbonate, sodium glutamate, sodium hydroxide, potassium sulfate, potassium nitrite, potassium acetate, potassium phosphate, potassium borohydride, potassium formate, potassium oxalate, potassium carbonate, potassium glutamate, potassium hydroxide, calcium sulfate, calcium nitrate, calcium carbonate, calcium glutamate, calcium hydroxide, aluminum sulfate, aluminum nitrate, aluminum phosphate, aluminum formate, aluminum carbonate, aluminum hydroxide, magnesium sulfate, magnesium nitrate, magnesium carbonate, magnesium glutamate, and magnesium hydroxide.

Examples of the alcohols include lower alcohols (e.g., methanol, ethanol, 2-propanol, ethylene glycol, and glycerol), and higher alcohols (e.g., caprylic alcohol, lauryl alcohol, myristyl alcohol, cetyl alcohol, stearyl alcohol, oleyl alcohol, and linoleyl alcohol).

(Supercooling inhibitor)

The inorganic latent heat storage material composition preferably contains a supercooling inhibitor. The supercooling inhibitor (i) can prevent supercooling of the inorganic latent heat storage material composition by being added in a relatively small amount and (ii) is easily available. The term "supercooling inhibitor" may also be referred to as "supercooling preventing agent", "crystal nucleating agent", "nucleating agent" or "nucleus forming agent".

The supercooling inhibitor is not particularly limited. Examples of the supercooling inhibitor include supercooling inhibitors selected from the group consisting of, for example, sodium pyrophosphate decahydrate, sodium tetraborate decahydrate, sodium carbonate, sodium carbonate monohydrate, sodium carbonate decahydrate, barium bromate monohydrate, calcium sulfate dihydrate, alum, disodium dihydrogen pyrophosphate hexahydrate, calcium chloride, calcium bromide, aluminum chloride, disodium hydrogen phosphate dodecahydrate, disodium hydrogen phosphite pentahydrate, trisodium phosphate dodecahydrate, sodium dihydrogen phosphate dihydrate, lithium fluoride, sodium chloride, potassium chloride, lithium chloride, barium chloride, strontium chloride, strontium chloride hexahydrate, barium sulfide, barium sulfate, calcium tartrate, strontium hydroxide, barium hydroxide, sodium bromide, potassium bromide, magnesium bromide hexahydrate, calcium carbonate, barium carbonate, calcium oxide, barium oxide, calcium fluoride, silicate, silicon dioxide (silica), kaolinite, and cryolite.

It is preferable to select and use the supercooling inhibitor as appropriate in correspondence with the inorganic latent heat storage material to be used. For example, in a case where the inorganic latent heat storage material is sodium acetate trihydrate, sodium pyrophosphate decahydrate can be preferably selected. Furthermore, in a case where the inorganic latent heat storage material composition is sodium thiosulfate pentahydrate and/or sodium sulfate decahydrate, sodium tetraborate decahydrate can be preferably selected. Moreover, in a case where the inorganic latent heat storage material composition is the calcium chloride hexahydrate, barium salt and/or strontium salt (e.g., strontium chloride hexahydrate) can be preferably selected.

In the latent heat storage material in accordance with the first embodiment of the present invention, the inorganic latent heat storage material composition preferably further contains the melting point adjusting agent and the supercooling inhibitor.

(Other components)

The inorganic latent heat storage material composition can optionally contain as appropriate, in addition to the above components, a phase separation inhibitor, a preservative, a perfume, a coloring agent, an antibacterial agent, a macromolecular polymer, other organic compound(s), other inorganic compound(s), or the like.

Examples of the phase separation inhibitor include (a) fatty acids such as lauric acid, myristic acid, palmitic acid, stearic acid, linoleic acid, linolenic acid, erucic acid, and oleic acid, and vegetable oils containing a mixture of these fatty acids, (b) fatty acid salts such as sodium oleate, potassium oleate, potassium metaphosphate, sodium silicate, and potassium isostearate, (c) paraffins such as liquid paraffin, (d) glycerin, and (e) nonionic surfactants. Examples of the vegetable oils include sunflower oil, corn oil, cottonseed oil, sesame oil, rapeseed oil, peanut oil, olive oil, and castor oil. The phase separation inhibitor can be a commercially available phase separation inhibitor (e.g., Nsp (manufactured by Hope Chemical Co., LTD)), which is a fatty acid mixture.

The "phase separation inhibitor" may also be referred to as "auxiliary thickening agent", "moisture evaporation inhibitor", or "syneresis inhibitor.

(Melting latent heat quantity)

The inorganic latent heat storage material composition preferably has a high melting latent heat quantity. The inorganic latent heat storage material composition has a melting latent heat quantity of preferably not less than 80 J/g, more preferably not less than 100 J/g, even more preferably not less than 120 J/g, and particularly preferably not less than 140 J/g. The melting latent heat quantity of the inorganic latent heat storage material composition can be measured with use of a differential scanning calorimeter. For example, a differential scanning calorimeter (SII EXSTAR6000 DSC manufactured by Seiko Instruments Inc.) can be used to find the melting latent heat quantity from a DSC curve that is obtained in a case where the temperature of the inorganic latent heat storage material composition is raised from -20°C to 50°C at a rate of 3.0°C/min and then lowered from 50°C to -20°C at a rate of 3.0°C/min.

(Viscosity of inorganic latent heat storage material composition)

The following description will discuss a viscosity, as measured by an oscillational viscometer, at a temperature that is 10°C to 35°C higher than a melting temperature of the inorganic latent heat storage material composition (hereinafter may also be referred to as "a viscosity of the inorganic latent heat storage material composition as measured by an oscillational viscometer"). The expression "a viscosity of the inorganic latent heat storage material composition as measured by an oscillational viscometer" can alternatively be expressed as "a viscosity obtained by subjecting, to a measurement carried out by an oscillational viscometer, the inorganic latent heat storage material composition which has a temperature that is 10°C to 35°C higher than a melting temperature of the inorganic latent heat storage material composition". Examples of the oscillational viscometer include a tuning fork vibration viscometer and a tuning fork vibration rheometer. The inorganic latent heat storage material composition has a viscosity, as measured by the oscillational viscometer, of preferably 0.5 Pa·s to 25 Pa·s, more preferably 1 Pa·s to 25 Pa·s, even more preferably 2 Pa·s to 25 Pa·s, still more preferably 5 Pa·s to 25 Pa·s, even further preferably 5 Pa·s to 20 Pa·s, and particularly preferably 5 Pa·s to 17 Pa·s. With the configuration, the inorganic latent heat storage material composition at a temperature that is 10°C to 35°C higher than the melting temperature of the inorganic latent heat storage material composition has an advantage of (i) being not separated into solid and liquid fractions and (ii) being not too viscous and being therefore highly handlable.

The following description will discuss a viscosity, as measured by a type E rotational viscometer, at a temperature that is 10°C to 35°C higher than a melting temperature of the inorganic latent heat storage material composition (hereinafter may also be referred to as "a viscosity of the inorganic latent heat storage material composition as measured by a type E rotational viscometer"). The expression "a viscosity of the inorganic latent heat storage material composition

as measured by a type E rotational viscometer" can alternatively be expressed as "a viscosity obtained by subjecting, to a measurement carried out by a type E rotational viscometer, the inorganic latent heat storage material composition which has a temperature that is 10°C to 35°C higher than a melting temperature of the inorganic latent heat storage material composition". The inorganic latent heat storage material composition has a viscosity, as measured by the type E rotational viscometer, of preferably 30 Pa·s to 90 Pa·s, more preferably 32 Pa·s to 88 Pa·s, even more preferably 34 Pa·s to 86 Pa·s, and particularly preferably 36 Pa·s to 84 Pa·s. With the configuration, the inorganic latent heat storage material composition at a temperature that is 10°C to 35°C higher than the melting temperature of the inorganic latent heat storage material composition has an advantage of (i) being not separated into solid and liquid fractions and (ii) being not too viscous and being therefore highly handlable.

(1-1-2-2. Second reaction curable liquid resin)

In the present latent heat storage material, the heat storage material preferably further contains the second reaction curable liquid resin.

The heat storage material that further contains the second reaction curable liquid resin has advantages of (a) being capable of preventing or reducing a leakage of the heat storage material in the case of a rupture in the surface layer and (b) being capable of keeping the heat storage material in a desired fixed shape either during solidification or during melting. Furthermore, the heat storage material that further contains the second reaction curable liquid resin having a low water vapor permeability has an advantage of allowing a resultant latent heat storage material to have a lower moisture absorbency and have the highly excellent moisture resistance.

The following description will discuss aspects related to the second reaction curable liquid resin. Aspects related to the second reaction curable liquid resin and different from those specifically described below include preferable aspects. Regarding such preferable aspects, the descriptions of the first reaction curable liquid resin in the section (I-1-1-1. Reaction curable liquid resin) are applied as appropriate.

Examples of a reaction curable liquid resin that can be used for the second reaction curable liquid resin include the reaction curable liquid resins listed earlier in the section (I-1-1-1. Reaction curable liquid resin).

In a case where the heat storage material further contains the second reaction curable liquid resin, the inorganic latent heat storage material composition and the second reaction curable liquid resin are contained in the heat storage material at a weight ratio (inorganic latent heat storage material composition : second reaction curable liquid resin) that is not particularly limited but is preferably 80:20 to 20:80, more preferably 70:30 to 30:70, even more preferably 60:40 to 40:60, and still more preferably 50:50.

The following description will discuss a case where the heat storage material further contains the second reaction curable liquid resin. In this case, the heat storage material preferably contains the inorganic latent heat storage material composition in an amount of preferably more than 40 parts by weight, more preferably not less than 50 parts by weight, even more preferably 60 parts by weight, still more preferably not less than 70 parts by weight, and even further preferably not less than 80 parts by weight, relative to 100 parts by weight (the total amount) of the inorganic latent heat storage material composition and the second reaction curable liquid resin that are contained in the heat storage material. Note that the heat storage material does not need to contain the second reaction curable liquid resin. In other words, the heat storage material can contain 100 parts by weight of the inorganic latent heat storage material composition relative to 100 parts by weight (total amount) of the inorganic latent heat storage material composition and the second reaction curable liquid resin that are contained in the heat storage material. In a conventional latent heat storage material in which an organic latent heat storage material composition is used, the organic latent heat storage material composition has a low thermal conductivity. Thus, the latent heat storage material that contains the organic latent heat storage material composition in a large amount is an undesirable aspect. However, the inorganic latent heat storage material composition has a higher thermal conductivity than the organic latent heat storage material composition. Thus, in the present latent heat storage material, a latent heat storage material that contains the inorganic latent heat storage material composition in a large amount is also a desirable aspect.

The second reaction curable liquid resin can optionally further contain a diluent and/or a photoradical initiator. In other words, the heat storage material can optionally further contain the diluent and/or the photoradical initiator. Examples of the diluent and of the photoradical initiator include the diluents and photoradical initiators listed earlier in the section (Diluent and photoradical initiator). The contained amount(s) of the diluent and/or the photoradical initiator in the heat storage material is/are not particularly limited. In order to adjust a viscosity difference between the inorganic latent heat storage material composition and the second reaction curable liquid resin, the diluent can be contained in the heat storage material in, for example, the amount disclosed in the section (Diluent and photoradical initiator). In order to allow a photocuring reaction of a cured product of the second reaction curable liquid resin to sufficiently proceed by ultraviolet irradiation, the photoradical initiator can be contained in the heat storage material in, for example, the amount disclosed in the section (Diluent and photoradical initiator). The heat storage material that contains the second reaction curable liquid resin and the diluent preferably prevents moisture resistance of the cured product of the second reaction

curable liquid resin from being lost due to the diluent.

In a case where the heat storage material further contains the second reaction curable liquid resin, the inorganic latent heat storage material composition is preferably dispersed in the second reaction curable liquid resin in the heat storage material. In the first embodiment, the expression "dispersed" means that no aggregate of the inorganic latent heat storage material composition of not less than 1 mm is found when the latent heat storage material which has a temperature that is not more than 20°C lower than the melting temperature of the inorganic latent heat storage material composition is observed by a microscope (magnification: 10 times, field of view: 1 $cm^2$).

In the heat storage material, the second reaction curable liquid resin can be cured or uncured. In a case where the second reaction curable liquid resin is cured in the heat storage material, a resultant latent heat storage material has an advantage such that a leak of the inorganic latent heat storage material composition is further prevented.

In a case where a type and physical properties (viscosity, hardness, elastic modulus, viscoelasticity, etc.) of the second reaction curable liquid resin are changed in the heat storage material, hardness, etc. of a resultant latent heat storage material can be adjusted so as to be easily combined with, for example, a gypsum board and a floor material. Thus, the heat storage material in which a type and physical properties of the second reaction curable liquid resin are changed has an advantage of making it possible to provide a latent heat storage material that is safer and more easily workable in a construction site.

As in the case of the first reaction curable liquid resin, the second reaction curable liquid resin does not affect the phase change temperature of the inorganic latent heat storage material composition.

The second reaction curable liquid resin and a cured product thereof preferably have a low water vapor permeability because such a second reaction curable liquid resin and a cured product thereof make it possible to prevent or reduce the reduction in heat storage effect as the latent heat storage material which reduction is caused by moisture absorption of the inorganic latent heat storage material contained in the inorganic latent heat storage material composition of the heat storage material. A cured product having a thickness of 1 mm and obtained by curing the second reaction curable liquid resin has a water vapor permeability of preferably less than 500 $g/m^2$ per day, more preferably not more than 250 $g/m^2$ per day, even more preferably not more than 150 $g/m^2$ per day, still more preferably not more than 100 $g/m^2$ per day, and particularly preferably not more than 80 $g/m^2$ per day, observed at a temperature of 40°C and a humidity of 90%. In a case where the heat storage material contains the second reaction curable liquid resin which is thus configured, a resultant latent heat storage material has an advantage of having a lower moisture absorbency. In a case where the cured product of the second reaction curable liquid resin has a water vapor permeability in the above range, the cured product of the second reaction curable liquid resin can also be said to have moisture resistance. The expression "the cured product of the second reaction curable liquid resin", i.e., "a state in which the second reaction curable liquid resin is cured" means a state that is identical to "a state in which the first reaction curable liquid resin is cured" described earlier.

The following description will discuss a difference (hereinafter may also be referred to as a viscosity difference between the inorganic latent heat storage material composition and the second reaction curable liquid resin) between (a) a viscosity of the second reaction curable liquid resin as measured by a type E rotational viscometer at a temperature that is 10°C to 35°C higher than the melting temperature of the inorganic latent heat storage material composition (hereinafter may also be referred to as "a viscosity of the second reaction curable liquid resin as measured by a type E rotational viscometer) and (b) a viscosity of the inorganic latent heat storage material composition as measured by a type E rotational viscometer at a temperature that is 10°C to 35°C higher than the melting temperature of the inorganic latent heat storage material composition (hereinafter may also be referred to as "a viscosity of the inorganic latent heat storage material composition as measured by a type E rotational viscometer). The expression "a viscosity of the second reaction curable liquid resin as measured by a type E rotational viscometer" can alternatively be expressed as "a viscosity obtained by subjecting, to a measurement carried out by a type E rotational viscometer, the second reaction curable liquid resin which has a temperature that is 10°C to 35°C higher than a melting temperature of the inorganic latent heat storage material composition". The expression "a viscosity of the second reaction curable liquid resin as measured by a type E rotational viscometer" can alternatively be expressed as "a viscosity of an uncured liquid resin of the second reaction curable liquid resin as measured by a type E rotational viscometer". Assume here that the second reaction curable liquid resin further contains the diluent and/or the photoradical initiator. In this case, the expression "a viscosity of the second reaction curable liquid resin as measured by a type E rotational viscometer" means a viscosity of a mixture of (i) the second reaction curable liquid resin and (ii) the diluent and/or the photoradical initiator. In a case where the heat storage material contains the second reaction curable liquid resin, the viscosity difference between the inorganic latent heat storage material composition and the second reaction curable liquid resin is preferably not more than 80 Pa·s, more preferably less than 80 Pa·s, even more preferably not more than 60 Pa·s, still more preferably less than 60 Pa·s, even further preferably not more than 50 Pa·s, still further preferably not more than 40 Pa·s, and particularly preferably not more than 20 Pa·s. The viscosity difference between the inorganic latent heat storage material composition and the second reaction curable liquid resin has a lower limit that is not particularly limited but is preferably not less than 0 Pa·s. The configuration allows the inorganic latent heat storage material composition to be uniformly dispersed in the

second reaction curable liquid resin in the heat storage material. The viscosity difference between the inorganic latent heat storage material composition and the second reaction curable liquid resin can be changed as appropriate in accordance with a combination of the second reaction curable liquid resin to be used and the inorganic latent heat storage material composition to be used.

The latent heat storage material in accordance with the first embodiment of present invention is preferably configured such that (i) (a) the inorganic latent heat storage material composition has a first viscosity, as measured by an oscillational viscometer, of 2 Pa·s to 25 Pa·s at a temperature that is 10°C to 35°C higher than a melting temperature of the inorganic latent heat storage material composition, or (b) the inorganic latent heat storage material composition has a second viscosity, as measured by a type E rotational viscometer, of 30 Pa·s to 90 Pa·s at the temperature that is 10°C to 35°C higher than the melting temperature of the inorganic latent heat storage material composition, and (ii) a third viscosity, as measured by the type E rotational viscometer, of the second reaction curable liquid resin at the temperature that is 10°C to 35°C higher than the melting temperature of the inorganic latent heat storage material composition, and the second viscosity, as measured by the type E rotational viscometer, at the temperature that is 10°C to 35°C higher than the melting temperature of the inorganic latent heat storage material composition differ from each other by not more than 80 Pa·s.

(1-1-3. Organic solvent)

In order to be more flame retardant, the latent heat storage material preferably contains a small amount of the organic solvent that is volatile at normal temperature. Specifically, the organic solvent that is volatile at normal temperature is contained in 100 parts by weight of the latent heat storage material in an amount of preferably not more than 50 parts by weight, more preferably not more than 10 parts by weight, even more preferably not more than 5 parts by weight, still more preferably not more than 1 part by weight, even further preferably not more than 0.5 parts by weight, and particularly preferably not more than 0.1 parts by weight. The monocyclic aromatic compound is contained in 100 parts by weight of the latent heat storage material in an amount of preferably not more than 50 parts by weight, more preferably not more than 10 parts by weight, even more preferably not more than 5 parts by weight, still more preferably not more than 1 part by weight, even further preferably not more than 0.5 parts by weight, and particularly preferably not more than 0.1 parts by weight. The total amount of at least one kind of compound contained in 100 parts by weight of the latent heat storage material and selected from the group consisting of benzene, toluene, xylene, ethylene benzene, cumene, paracymene, dimethyl phthalate, diethyl phthalate, and dipropyl phthalate is preferably not more than 50 parts by weight, more preferably not more than 10 parts by weight, even more preferably not more than 5 parts by weight, still more preferably not more than 1 part by weight, even further preferably not more than 0.5 parts by weight, and particularly preferably not more than 0.1 parts by weight.

(1-1-4. Fibrous material)

The present latent heat storage material preferably further contains a fibrous material. Suitable examples of the fibrous material include the following inorganic fibrous materials (a) to (c): (a) amorphous fibers such as glass wool and rock wool; (b) polycrystalline fibers such as carbon fibers and alumina fibers; and (c) single-crystal fibers such as wollastonite and potassium titanate fibers. The present latent heat storage material that further contains an inorganic fibrous material has an excellent flame retardancy, a high strength, and high dimensional stability.

The fibrous material that is contained in the present latent heat storage material can be contained in the heat storage material or in the surface layer. The heat storage material that contains the fibrous material can contain the fibrous material in addition to the second reaction curable liquid resin, or can contain the fibrous material without containing the second reaction curable liquid resin.

(1-1-5. Other component(s))

The present latent heat storage material can contain other component(s) different from the heat storage material and the surface layer, provided that the effect in accordance with the first embodiment of the present invention is not lost. Examples of such a component(s) include a preservative, a perfume, a coloring agent, a flame retardant, a light-resistant stabilizer, an ultraviolet ray absorbing agent, a storage stabilizer, a cell adjusting agent, a lubricant, a fungicide, an antibacterial agent, a macromolecular polymer, other organic compound(s), and other inorganic compound(s).

The following description will specifically discuss physical properties of the present latent heat storage material.

(1-1-6. Melting temperature)

In the first embodiment, the intermediate temperature in the temperature range that is exhibited by the latent

heat storage material while the inorganic latent heat storage material composition that is in a solid state and that is contained in the latent heat storage material is melting into a liquid state or a gel state is regarded as the "melting temperature" of the latent heat storage material. The melting temperature of the latent heat storage material is also the intermediate temperature in the temperature range that is exhibited by the inorganic latent heat storage material composition while the inorganic latent heat storage material composition that is in a solid state and that is contained in the latent heat storage material is melting into a liquid state or a gel state, that is, can also be said to be the melting temperature of the inorganic latent heat storage material composition.

The present latent heat storage material has a melting temperature that is not particularly limited. Assume that the latent heat storage material is used to be adaptable to a house and to arrange a residential environment. In this case, the latent heat storage material preferably has a melting temperature of 15°C to 30°C, more preferably 17°C to 28°C, and even more preferably 20°C to 25°C.

In the latent heat storage material in accordance with the first embodiment of the present invention, the inorganic latent heat storage material composition preferably has a melting temperature of 15°C to 30°C. In the latent heat storage material in accordance with the first embodiment of the present invention, the heat storage material preferably has a melting temperature of 15°C to 30°C. Such a configuration makes it possible to obtain the latent heat storage material that is suitable for a residential environment.

(1-1-7. Moisture absorbency)

The present latent heat storage material preferably has a lower moisture absorbency. The moisture absorbency of the first embodiment can be evaluated by a moisture absorption rate (%) described later in Examples A. The moisture absorption rate of the first embodiment is measured by the weight of the latent heat storage material which weight is obtained before and after the latent heat storage material is left to stand for a certain period of time at 40°C and a humidity of 90%, and a method for the measurement will be specifically described later in Examples A. The moisture absorption rate measured by the weight of the latent heat storage material which weight is obtained before and after the latent heat storage material is left to stand for X hours at 40°C and a humidity of 90% is referred to as a "X-hour moisture absorption rate". The latent heat storage material in accordance with the first embodiment of the present invention has a 2-hour moisture absorption rate (%) of preferably less than 5%, more preferably not more than 4%, even more preferably less than 3%, and particularly preferably not more than 2%. The latent heat storage material in accordance with the first embodiment of the present invention has an 8-hour moisture absorption rate (%) of preferably less than 12%, more preferably not more than 10%, even more preferably not more than 8%, still more preferably not more than 6%, and particularly preferably less than 5%. The latent heat storage material thus configured has an advantage of efficiently functioning as the latent heat storage material even in a case where the latent heat storage material is used for a long period. The latent heat storage material described in the section [I-1. Latent heat storage material] can also be said to preferably provide the latent heat storage material that has the above moisture absorption rate.

(1-1-8. Weight)

The present latent heat storage material has a weight per piece (g/piece) of preferably not more than 3000 g/piece, more preferably not more than 2000 g/piece, even more preferably not more than 1500 g/piece, and particularly preferably not more than 1200 g/piece. The present latent heat storage material has a weight per piece (g/piece) of preferably not less than 5 g/piece, more preferably not less than 10 g/piece, even more preferably not less than 15 g/piece, and particularly preferably not less than 20g/piece. The present latent heat storage material thus configured has an advantage of having more excellent workability.

(I-1-9. Volume)

The present latent heat storage material has a volume per piece ($cm^3$/piece) of preferably not more than 2500 $cm^3$/piece, more preferably not more than 1500 $cm^3$/piece, even more preferably not more than 1250 $cm^3$/piece, and particularly preferably not more than 1000 $cm^3$/piece. The present latent heat storage material has a volume per piece ($cm^3$/piece) of preferably not less than 4 $cm^3$/piece, more preferably not less than 8 $cm^3$/piece, even more preferably not less than 12 $cm^3$/piece, and particularly preferably not less than 16 $cm^3$/piece. The present latent heat storage material thus configured has an advantage of having more excellent workability.

[1-2. Method for producing latent heat storage material]

A method for producing a latent heat storage material in accordance with the first embodiment of the present invention includes: a heat storage material preparing step of preparing a heat storage material containing an inorganic

latent heat storage material composition that contains an inorganic latent heat storage material and a thickener; and a surface layer forming step of forming a surface layer on an interface with external air in the prepared heat storage material, the surface layer having (i) a type E hardness value of not more than 50, (ii) a 100% modulus of not more than 0.50 MPa ($N/mm^2$), and (iii) an elongation percentage at break of not less than 100%.

In the method for producing the latent heat storage material in accordance with the first embodiment of the present invention, the thickener is used to cause gelation of the inorganic latent heat storage material (i.e., cause an increase in viscosity) in the heat storage material preparing step. Specifically, a resultant inorganic latent heat storage material composition gelates. The configuration allows the inorganic latent heat storage material composition to have an advantage of preventing liquefaction and flow of the heat storage material even at a temperature that is not less than the melting temperature of the inorganic latent heat storage material composition. Furthermore, in the method for producing the latent heat storage material in accordance with the first embodiment of the present invention, the inorganic latent heat storage material is used. This makes it possible to solve the flammability problem that is feared in application to construction materials, and consequently to suitably use a resultant latent heat storage material as a latent heat storage material for use in the residential environment.

In the method for producing the latent heat storage material in accordance with the first embodiment of the present invention, the surface layer is formed on the interface with external air in the heat storage material in the surface layer forming step. This allows a resultant latent heat storage material to have a low moisture absorbency and can prevent an external leak of the heat storage material under a temperature condition higher than the melting temperature of the inorganic latent heat storage material composition. Furthermore, the surface layer has specific physical properties. This allows a resultant latent heat storage material to have an advantage of being capable of (i) conforming to volume expansion of the heat storage material and (ii) being self-repairable even in a case where a hole is made in the latent heat storage material due to an impact such as a puncture.

The following description will discuss the steps of the method for producing the latent heat storage material in accordance with the first embodiment of the present invention. Note, however, that aspects related to the method for producing the latent heat storage material and different from those specifically described below include preferable aspects. Regarding such preferable aspects, the descriptions in the section [I-1. Latent heat storage material] are applied as appropriate. Each aspect described as a "content" of a certain substance (component) in the section [I-1. Latent heat storage material] can be applied as a "used amount", a "blended amount", or an "added amount" of a certain substance (ingredient) in the method for producing the latent heat storage material.

In the heat storage material preparing step, a method for preparing the heat storage material containing the inorganic latent heat storage material composition that contains the inorganic latent heat storage material and the thickener is not particularly limited. The heat storage material containing the inorganic latent heat storage material composition can be prepared by, for example, mixing the inorganic latent heat storage material and the thickener. The inorganic latent heat storage material and the thickener can be mixed by any technique that is publicly known in the technical field to which the present invention pertains. The inorganic latent heat storage material and the thickener are mixed by, for example, a method disclosed in Examples described later.

The heat storage material preparing step can further include a mixing step of mixing the inorganic latent heat storage material composition and the second reaction curable liquid resin. The heat storage material preparing step that further includes the mixing step makes it possible to obtain the heat storage material that contains the inorganic latent heat storage material composition and the second reaction curable liquid resin.

In the mixing step, the inorganic latent heat storage material composition and the second reaction curable liquid resin can be mixed by any technique that is publicly known in the technical field to which the present invention pertains, for example, by a method disclosed in Examples described later.

In the heat storage material preparing step, (i) the mixing of the inorganic latent heat storage material and the thickener and (ii) the mixing of the inorganic latent heat storage material composition and the second reaction curable liquid resin can be carried out successively in a single device, or can be carried out with use of a plurality of devices.

In the surface layer forming step, a method for forming the surface layer on the interface with external air in the heat storage material obtained through the preparation step is not particularly limited. Examples of the method include a method in which the interface with external air in the heat storage material is coated with the first reaction curable liquid resin and the first reaction curable liquid resin applied is cured.

A method for coating, with the first reaction curable liquid resin, the interface with external air in the heat storage material is not particularly limited. Examples of the method include a method of applying the first reaction curable liquid resin to the interface with external air in the heat storage material, a method of laminating the first reaction curable liquid resin to the interface with external air in the heat storage material, and a method of immersing the heat storage material in the first reaction curable liquid resin and raising the heat storage material. The method for applying the first reaction curable liquid resin by immersing the heat storage material in the first reaction curable liquid resin and raising the heat storage material is also referred to as a "immersion coating method".

In a case where the heat storage material has a constant viscosity or hardness, the interface with external air

in the heat storage material can be easily coated with the first reaction curable liquid resin by the immersion coating method. A method for adjusting the viscosity or hardness of the heat storage material so that the heat storage material is suitable for the immersion coating method is exemplified by, but not particularly limited to, (i) a method of adjusting the blended amount of the thickener contained in the inorganic latent heat storage material composition, (ii) a method of blending a certain amount of the second reaction curable liquid resin with the heat storage material so as to adjust the viscosity difference between the inorganic latent heat storage material composition and the second reaction curable liquid resin, and (iii) a method of cooling the heat storage material to a temperature that is less than the melting temperature of the inorganic latent heat storage material composition so as to solidify the heat storage material.

The viscosity of the heat storage material as measured by the type E rotational viscometer during application of the first reaction curable liquid resin is preferably not less than 80 Pa·s, more preferably not less than 100 Pa·s, even more preferably not less than 150 Pa·s, and particularly preferably not less than 200 Pa·s. The configuration brings about an advantage(s) of easily carrying out the immersion coating method and/or easily coating, with the first reaction curable liquid resin, the interface with external air in the heat storage material by another method. The viscosity of the heat storage material as measured during application of the first reaction curable liquid resin can be adjusted as appropriate by any of the methods (described earlier) of (a) adjusting the blended amount of the thickener contained in the inorganic latent heat storage material composition, (b) blending the second reaction curable liquid resin with the heat storage material and adjusting the viscosity difference between the inorganic latent heat storage material composition and the second reaction curable liquid resin, and (c) solidifying the heat storage material.

The first reaction curable liquid resin with which the interface with external air in the heat storage material is coated has a thickness that is not particularly limited. The thickness of the first reaction curable liquid resin to be applied is preferably set so that the first reaction curable liquid resin that has been cured has a thickness of the surface layer described earlier in the section (1-1-1-6. Thickness).

The first reaction curable liquid resin applied can be cured by a method that is not particularly limited, provided that the method allows the first reaction curable liquid resin to be cured. The first reaction curable liquid resin can be cured by, for example, (i) a method of adding a curing agent to the first reaction curable liquid resin, (ii) a method of applying heat to the first reaction curable liquid resin, or (iii) a method of carrying out ultraviolet irradiation with respect to the first reaction curable liquid resin. Alternatively, the methods (i) to (iii) can be used in combination to cure the first reaction curable liquid resin. Examples of the curing agent that can be used include AP-4 (product name: Butyl acid phosphate), AP-8 (product name: 2-ethylhexyl acid phosphate), and AP-10 (product name: Isodecyl acid phosphate).

In a case where the heat storage material preparing step further includes the mixing step, the method for producing the latent heat storage material can further include the curing step of curing the second reaction curable liquid resin contained in the latent heat storage material. A method for curing the second reaction curable liquid resin in the curing step is not particularly limited provided that the method allows the second reaction curable liquid resin to be cured. Examples of the method include the method for curing the first reaction curable liquid resin (described earlier).

The curing step and the surface layer forming step can be carried out in any order that is not particularly limited. For example, (a) the surface layer forming step of forming the surface layer on the interface with external air in the heat storage material that has been obtained through the curing step can be carried out after the curing step, (b) the curing step of curing the second reaction curable liquid resin contained in the heat storage material contained in the latent heat storage material that has been obtained through the surface layer forming step can be carried out after the surface layer forming step, or (c) the curing step and the surface layer forming step can be carried out simultaneously. The expression "the curing step and the surface layer forming step are carried out simultaneously" means, for example, that curing of the first reaction curable liquid resin and curing of the second reaction curable liquid resin are carried out simultaneously.

[1-3. Use]

The latent heat storage material in accordance with the first embodiment of the present invention has various uses where the heat storage material is needed, and can be used in, for example, a wall material, a floor material, a ceiling material, and a roof material.

In another aspect of the first embodiment of the present invention, the latent heat storage material can also be used in, for example, a floor mat base material and a plywood adhesive.

Furthermore, the latent heat storage material in accordance with the first embodiment of the present invention can be suitably used as an underwater heat storage material due to its excellent moisture resistance. The present latent heat storage material can be suitably used for maintaining water temperature of, for example, a heated pool, a spent nuclear fuel storage pool, and an ornamental water tank.

Moreover, the surface layer of the latent heat storage material in accordance with the first embodiment of the present invention can be attachable/detachable to/from various members due to its viscosity. This allows the present latent heat storage material to be also suitably used as a sealing material having heat storage performance. The present latent heat storage material can be suitably used for, for example, a sealing material of a constant-temperature transport

container and sealing materials for a door frame and a window frame in a living space.

Further, the surface layer of the latent heat storage material in accordance with the first embodiment of the present invention can have buffering performance due to its softness. This allows the present latent heat storage material to be also suitably used as a buffering material and a cushioning material each having heat storage performance. In a case where the present latent heat storage material is used as the cushioning material, the surface layer of the latent heat storage material preferably has a certain thickness, e.g. a thickness of not less than 5 mm.

[1-4. Method for producing building including latent heat storage material]

The first embodiment of the present invention can also provide a method for producing a building including the latent heat storage material. A process for producing the building in accordance with the first embodiment of the present invention (hereinafter also referred to as a "method for producing the present building") includes (i) a preparation step of preparing the latent heat storage material and (ii) a placement step of placing the latent heat storage material on the top surface, the floor surface, and/or the wall surface of the building.

Regarding a specific aspect of the preparing step, the production method described in the section [1-2. Method for producing latent heat storage material] can be applied.

A specific aspect of the placement step is not particularly limited provided that the placement step allows the latent heat storage material to be placed on the top surface, the floor surface, and/or the wall surface of the building. For example, the latent heat storage material can be placed by using, for example, a nail or a screw to drive the nail or the screw directly into the top surface, the floor surface, and/or the wall surface of the building so that the nail or the screw is through the latent heat storage material. Alternatively, a laminated plate obtained by placing the latent heat storage material between sheets of plywood or the like can be placed by using, for example, a nail or a screw to drive the nail or the screw into the top surface, the floor surface, and/or the wall surface of the building so that the nail or the screw is through the latent heat storage material. The nail or the screw that is used to drive the latent heat storage material into the top surface, the floor surface, and/or the wall surface of the building during the placement step can be made of any material that is not particularly limited. The nail or the screw that is used to drive the latent heat storage material into the top surface, the floor surface, and/or the wall surface of the building during the placement step is preferably a stainless steel nail or a stainless steel screw. The stainless steel nail or the stainless steel screw has excellent corrosion resistance (rust resistance).

For example, a latent heat storage material in the form of a bag or film containing a heat storage material is conventionally known. However, such a bag or film does not have the specific type E hardness value, the specific 100% modulus, and the specific elongation percentage at break that are possessed by the surface layer in accordance with the first embodiment of the present invention. Thus, such a conventional heat storage material causes the following problem. Specifically, in a case where the latent heat storage material is punctured with, for example, a nail so that the nail is through the latent heat storage material, a crack occurs in a part of the latent heat storage material which part has been punctured with a nail or a screw. This results in a leak of the heat storage material. However, the latent heat storage material in accordance with the first embodiment of the present invention includes the surface layer that has such a specific type E hardness value, such a specific 100% modulus, and such a specific elongation percentage at break as described earlier. Thus, the latent heat storage material in accordance with the first embodiment of the present invention includes the surface layer that is soft, highly conformable, and highly viscous. Therefore, in a case where the latent heat storage material in accordance with the first embodiment of present invention is punctured with, for example, a nail so that the nail is through the latent heat storage material, the surface layer is deformed in conformity with the shape of the nail, so that the nail with which the latent heat storage material has been punctured and the surface layer closely adhere to each other. Thus, there is no fear of a leak of the heat storage material from a part of the latent heat storage material which part has been punctured with a nail or a screw.

Furthermore, the latent heat storage material in accordance with the first embodiment of the present invention includes the surface layer that is viscous. Thus, the latent heat storage material in accordance with the first embodiment of the present invention can be placed by merely using the viscosity of the surface layer to bring the latent heat storage material into contact with the top surface, the floor surface, and/or the wall surface of the building. The latent heat storage material in accordance with the first embodiment of the present invention is attachable/detachable, and thus can be easily placed again even in a case where it is placed at an incorrect place and an incorrect position.

[II. Second embodiment]

In the first embodiment, the object to provide a latent heat storage material that has a low risk of leakage and a low moisture absorbency and that is highly workable is attained by achieving a latent heat storage material including: a heat storage material containing an inorganic latent heat storage material composition that contains an inorganic latent heat agent and a thickener; and a surface layer containing a cured product of a reaction curable liquid resin, the surface

layer having (i) a specific type E hardness value, (ii) a specific 100% modulus, and (iii) a specific elongation percentage at break.

In contrast, in the second embodiment, the object to provide a latent heat storage material-containing resin composition that makes it possible to provide a latent heat storage material-containing resin cured product that has a low risk of leakage and a low moisture absorbency and that is highly workable is attained by achieving a latent heat storage material-containing resin composition containing (i) an inorganic latent heat storage material composition that contains a thickener and (ii) a reaction curable liquid resin a cured product of which has a specific water vapor permeability.

That is, the latent heat storage material-containing resin composition in accordance with the second embodiment dispenses with the surface layer and includes the reaction curable liquid resin the cured product of which has a specific water vapor permeability.

The following description will discuss a second embodiment of the present invention. Regarding aspects of the second embodiment which aspects are different from those specifically described below, the description of the first embodiment is applied as appropriate. Note that the "reaction curable liquid resin" contained in the latent heat storage material-containing resin composition in accordance with the second embodiment may also be referred to as a "third reaction curable liquid resin" for convenience.

[II-1. Latent heat storage material-containing resin composition]

A latent heat storage material-containing resin composition in accordance with the second embodiment of the present invention contains an inorganic latent heat storage material composition and a third reaction curable liquid resin, the inorganic latent heat storage material composition containing a thickener, and the third reaction curable liquid resin satisfying the following requirement: a requirement that a cured product having a thickness of 1 mm and obtained by curing the third reaction curable liquid resin has a water vapor permeability of less than 500 g/$m^2$ per day observed at a temperature of 40°C and a humidity of 90%. The latent heat storage material-containing resin composition in accordance with the second embodiment of the present invention hereinafter may also be referred to as "the present latent heat storage material-containing resin composition" or merely as "the present composition". A cured product can be obtained by curing the present latent heat storage material-containing resin composition, and such a cured product is also referred to as a "latent heat storage material-containing resin cured product". The present latent heat storage material-containing resin composition frequently can be used as the latent heat storage material-containing resin cured product. A latent heat storage material-containing resin cured product obtained by curing the present latent heat storage material-containing resin composition is also the second embodiment of the present invention. The latent heat storage material-containing resin cured product in accordance with the second embodiment of the present invention is also referred to as "the present latent heat storage material-containing resin cured product" or merely as "the present cured product".

The present latent heat storage material-containing resin composition, which has the configuration, has an advantage of making it possible to provide a latent heat storage material-containing resin cured product that has a lower risk of leakage and that is highly workable.

Furthermore, the inventors of the present invention uniquely found the following. Specifically, since a cured product of the latent heat storage material-containing resin composition that is inorganic and contains an inorganic hydrated salt has a high moisture absorbency, use of the latent heat storage material-containing resin cured product as the latent heat storage material for a long period may cause a change in structure of an inorganic hydrate of the latent heat storage material to an extent to affect the phase change temperature. Thus, the inventors of the present invention uniquely found the following. Specifically, in a case where a cured product of the latent heat storage material-containing resin composition that is inorganic and contains an inorganic hydrated salt is used as the latent heat storage material for a long period, the cured product may insufficiently efficiently function as the latent heat storage material.

The present latent heat storage material-containing resin composition, which has the configuration, i.e., contains the third reaction curable liquid resin that has a specific water vapor permeability, has an advantage of making it possible to provide a latent heat storage material-containing resin cured product having a low moisture absorbency, even in a case where the present latent heat storage material-containing resin composition contains an inorganic latent heat storage material (e.g., inorganic hydrated salt) as the latent heat storage material.

Furthermore, the present latent heat storage material-containing resin composition, which has the configuration, i.e., contains the inorganic latent heat storage material composition, has an advantage of making it possible to provide a latent heat storage material-containing resin cured product that is flame retardant.

The present latent heat storage material-containing resin composition can be used as a latent heat type heat storage material that uses (i) absorption of thermal energy during phase transition of the latent heat storage material-containing resin composition from a solidified state (solid) to a molten state (liquid) and (ii) release of thermal energy during phase transition of the latent heat storage material-containing resin composition from the molten state (liquid) to the solidified state (solid). Note that the "molten state" also includes a "gel state" described later.

For example, the present latent heat storage material-containing resin composition can maintain, for example,

the room temperature at a desired temperature that is not more than the environmental temperature, even under a high-temperature environment (e.g., summer), by absorbing thermal energy during phase transition from the solidified state to the molten state. Furthermore, the present latent heat storage material-containing resin composition can also maintain, for example, the room temperature at a desired temperature that is not less than the environmental temperature, even under a low-temperature environment (e.g., winter), by releasing thermal energy during phase transition from the molten state to the solidified state. That is, the latent heat storage material-containing resin composition in accordance with the second embodiment of the present invention makes it possible to maintain, for example, the room temperature at a desired temperature (for example, 15°C to 30°C) either under the high-temperature environment or under the low-temperature environment.

The present latent heat storage material-containing resin composition contains the inorganic latent heat storage material composition and the third reaction curable liquid resin, and the inorganic latent heat storage material composition is uniformly dispersed in, for example, the third reaction curable liquid resin. Thus, the present latent heat storage material-containing resin cured product obtained by curing the present latent heat storage material-containing resin composition makes it possible to prevent a leak of the inorganic latent heat storage material composition at a temperature that is not less than the melting temperature of the inorganic latent heat storage material composition. That is, unlike the conventional techniques, it is unnecessary to encapsulate or microencapsulate the present latent heat storage material-containing resin composition so as to prevent a leak of the inorganic latent heat storage material composition. The present latent heat storage material-containing resin composition can also be formed into, for example, a sheet-like material that is highly processable.

Furthermore, in a case where a type and physical properties (viscosity, hardness, elastic modulus, viscoelasticity, etc.) of the third reaction curable liquid resin are changed in the present latent heat storage material-containing resin composition, hardness, etc. of a resultant cured product can be adjusted so as to be easily combined with, for example, a gypsum board and a floor material. Thus, the present latent heat storage material-containing resin composition makes it possible to provide a latent heat storage material-containing resin cured product that is highly safe and easily workable at a construction site. That is, the present latent heat storage material-containing resin composition makes it possible to provide a latent heat storage material-containing resin cured product that is highly workable.

Moreover, the third reaction curable liquid resin does not affect the phase change temperature of the inorganic latent heat storage material composition. Further, a cured product of the present latent heat storage material-containing resin composition can maintain its solid shape at all times regardless of the melting temperature of the inorganic latent heat storage material composition. Thus, the present latent heat storage material-containing resin composition also has an advantage of dispensing with a container such as a bag for containing the inorganic latent heat storage material composition.

The following description will specifically discuss the present latent heat storage material-containing resin composition.

(II-1-1. Inorganic latent heat storage material composition)

The following description will discuss aspects of the inorganic latent heat storage material composition contained in the present latent heat storage material-containing resin composition. Matters different from those specifically described below (e.g., other aspects related to the inorganic latent heat storage material, a melting point adjusting agent, and a supercooling inhibitor) include preferable aspects. Regarding such preferable aspects, the descriptions in the section (1-1-2-1. Inorganic latent heat storage material composition) of the first embodiment are applied as appropriate.

The inorganic latent heat storage material composition contained in the present latent heat storage material-containing resin composition is flame retardant. The present latent heat storage material-containing resin composition makes it unnecessary to use, as the latent heat storage material, an organic latent heat storage material composition, which has a flammability problem. The present latent heat storage material-containing resin composition is therefore more flame retardant than a conventional latent heat storage material-containing resin composition.

In the second embodiment, the heat storage material composition is preferably in a gel state and not separated into solid and liquid fractions under the temperature condition that is not less than 10°C higher than the melting temperature of the heat storage material composition. That is, the present latent heat storage material-containing resin composition preferably contains the inorganic latent heat storage material composition which is in a gel state and not separated into solid and liquid fractions under the temperature condition that is not less than 10°C higher than the melting temperature.

As described earlier, the heat storage material composition contained in the present latent heat storage material-containing resin composition can have a property of not being separated into solid and liquid fractions even under the temperature condition higher than the melting temperature of the heat storage material composition. The present latent heat storage material-containing resin composition thus has an advantage of not flowing even under the temperature condition higher than the melting temperature of the inorganic latent heat storage material composition.

Furthermore, the present latent heat storage material-containing resin composition has an advantage such

that, even in a case where the present latent heat storage material-containing resin composition is repeatedly exposed to the temperature condition higher than the melting temperature of the heat storage material composition and to a temperature condition lower than the melting temperature of the heat storage material composition, the heat storage material composition contained in the latent heat storage material-containing resin composition is not separated into solid and liquid fractions, and heat storage performance of the latent heat storage material-containing resin composition is unchanged. That is, the present latent heat storage material-containing resin composition is highly durable.

The heat storage material composition of the present latent heat storage material-containing resin composition is more preferably in a gel state and not separated into solid and liquid fractions under a temperature condition that is not less than 20°C higher than the melting temperature of the heat storage material composition, even more preferably in a gel state and not separated into solid and liquid fractions under a temperature condition that is not less than 25°C higher than the melting temperature of the heat storage material composition, still more preferably in a gel state and not separated into solid and liquid fractions under a temperature condition that is not less than 30°C higher than the melting temperature of the heat storage material composition, even further preferably in a gel state and not separated into solid and liquid fractions under a temperature condition that is not less than 35°C higher than the melting temperature of the heat storage material composition, and particularly preferably in a gel state and not separated into solid and liquid fractions under a temperature condition that is not less than 40°C higher than the melting temperature of the heat storage material composition.

Note that the temperature of an environment in which the present latent heat storage material-containing resin composition is used is not particularly limited. From the viewpoint of an appropriate mixing ratio between the inorganic latent heat storage material (e.g., hydrated salt) and the thickener that are contained in the inorganic latent heat storage material composition, the present latent heat storage material-containing resin composition is preferably used at a temperature that is not more than 40°C higher than the melting temperature of the storage material composition.

(Latent heat storage material (inorganic latent heat storage material))

The latent heat storage material (inorganic latent heat storage material) contained in the inorganic latent heat storage material composition is not particularly limited provided that the latent heat storage material is an inorganic component. The term "latent heat storage material (inorganic latent heat storage material)" means a component that functions as a latent heat type heat storage material.

In the latent heat storage material-containing resin composition in accordance with the second embodiment of the present invention, the inorganic latent heat storage material preferably further contains calcium chloride hexahydrate, a melting point adjusting agent, and a supercooling inhibitor.

(Melting point adjusting agent)

The present latent heat storage material-containing resin composition preferably further contains a melting point adjusting agent(s). The amount(s) of the melting point adjusting agent(s) contained in the present latent heat storage material-containing resin composition is not particularly limited. For example, the melting point adjusting agents are contained in a total amount of preferably not less than 0.05 mol and not more than 2.0 mol, more preferably not less than 0.1 mol and not more than 1.5 mol, and even more preferably not less than 0.15 mol and not more than 1.0 mol, relative to 1.0 mol of the inorganic latent heat storage material that is the calcium chloride hexahydrate. With the configuration, a space covered by a construction material (e.g., a wall material, a floor material, a ceiling material, or a roof material) for which a cured product of a resultant latent heat storage material-containing resin composition is used can be maintained at an appropriate temperature with high accuracy. For example, in a case where the melting point adjusting agents are contained in a total amount of not less than 0.05 mol and not more than 2.0 mol relative to 1.0 mol of the inorganic latent heat storage material that is the calcium chloride hexahydrate, a cured product of a resultant latent heat storage material-containing resin composition can maintain room temperature in the range of 15°C to 30°C. Note that the amount(s) of the melting point adjusting agent(s) contained in the inorganic latent heat storage material composition can be set as appropriate in a case where the inorganic latent heat storage material is a compound different from the calcium chloride hexahydrate.

In order to more accurately adjust, to a desired temperature, the temperature of the space covered by the cured product of the present latent heat storage material-containing resin composition, a metallic halide different from a metallic bromide and a metallic chloride is contained in the inorganic latent heat storage material composition in an amount of preferably not more than 1.0 mol, more preferably not more than 0.5 mol, and even more preferably not more than 0.3 mol, relative to 1.0 mol of the inorganic latent heat storage material that is, for example, the calcium chloride hexahydrate.

(Supercooling inhibitor)

The inorganic latent heat storage material composition can contain a supercooling inhibitor.

(II-1-2. Thickener)

The following description will discuss aspects of the thickener contained in the present latent heat storage material-containing resin composition. Matters different from those specifically described below include preferable aspects. Regarding such preferable aspects, the descriptions in the section (Thickener) of the first embodiment are applied as appropriate.

In the present latent heat storage material-containing resin composition, the thickener is preferably at least one kind selected from the group consisting of a water-absorbing resin, attapulgite clay, gelatin, agar, silica gel, xanthan gum, gum arabic, guar gum, carageenan, cellulose, konjac, and hydroxyethyl cellulose.

By containing the thickener, the inorganic latent heat storage material composition in accordance with the second embodiment prevents the inorganic latent heat storage material composition from being separated into solid and liquid fractions in a resultant latent heat storage material-containing resin composition even after a heat cycle test is carried out at an environmental temperature at which the latent heat storage material-containing resin composition is assumed to be used.

Regarding the definition of "separated into solid and liquid fractions", the descriptions in (1-1-2-1. Inorganic latent heat storage material composition) of the first embodiment are applied as appropriate.

Furthermore, even in a case where the inorganic latent heat storage material composition leaks out from the latent heat storage material-containing resin composition, by containing the thickener, the inorganic latent heat storage material composition in accordance with the second embodiment allows a reduction in environmental load during the leak and in workload during collection of the inorganic latent heat storage material composition.

In order to allow the latent heat storage material-containing resin composition to be more flame retardant, the thickener preferably contains a smaller amount of an organic solvent that is volatile at normal temperature, and preferably substantially does not contain the organic solvent that is volatile at normal temperature. The amount of, for example, the organic solvent that is contained in the thickener and is volatile at normal temperature includes preferable aspects. Regarding such preferable aspects, the descriptions in the section (Thickener) of the first embodiment are applied as appropriate.

The amount of the thickener contained in the inorganic latent heat storage material composition in accordance with the second embodiment is not particularly limited. An optimum amount of the thickener contained may vary depending on a type of the thickener to be used. The inorganic latent heat storage material composition in accordance with the second embodiment contains the thickener in an amount of preferably 1 part by weight to 10 parts by weight, and more preferably 2 parts by weight to 6 parts by weight, relative to 100 parts by weight (the total) of the inorganic latent heat storage material and the melting point adjusting agent. The configuration has advantages of (i) making it possible to prevent cohesion and precipitation of salts dissolved in the inorganic latent heat storage material composition, (ii) allowing the inorganic latent heat storage material composition to be highly handleable, and (iii) preventing the inorganic latent heat storage material composition from being separated into solid and liquid fractions under a temperature condition higher than a melting temperature of the inorganic latent heat storage material composition.

The present latent heat storage material-containing resin composition can optionally contain, in addition to the above components, a phase separation inhibitor (e.g., a fatty acid such as lauric acid, myristic acid, palmitic acid, stearic acid, or oleic acid, or a fatty acid salt such as sodium oleate, potassium oleate, potassium metaphosphate, sodium silicate, or potassium isostearate), a perfume, a coloring agent, an antibacterial agent, a polymeric polymer, other organic compound(s), other inorganic compound(s), or the like.

Examples of the phase separation inhibitor include not only the components listed above but also various substances by which the phase separation inhibitor is exemplified in the section (Other components) of "1-1-2-1. Inorganic latent heat storage material composition) of the first embodiment.

The inorganic latent heat storage material composition in accordance with the second embodiment preferably has a high melting latent heat quantity. The melting latent heat quantity of the inorganic latent heat storage material composition in accordance with the second embodiment includes preferable aspects. Regarding such preferable aspects, the descriptions in the section (Melting latent heat quantity) of the first embodiment are applied as appropriate.

(II-1-3. Third reaction curable liquid resin)

The present latent heat storage material-containing resin composition contains the third reaction curable liquid resin. In order to be distinguished from the "first reaction curable liquid resin" (described earlier) and the "second reaction curable liquid resin" (described earlier), the "third reaction curable liquid resin" is obtained by adding the term "third" to

the "reaction curable liquid resin". The "first reaction curable liquid resin", the "second reaction curable liquid resin", and the "third reaction curable liquid resin" each can be the "reaction curable liquid resin". The following description will discuss aspects of the third reaction curable liquid resin contained in the present latent heat storage material-containing resin composition. Aspects related to the third reaction curable liquid resin and different from the matters specifically described below include preferable aspects. Regarding such preferable aspects, the descriptions of the first reaction curable liquid resin in the section (I-1-1-1. Reaction curable liquid resin) of the first embodiment are applied as appropriate.

The reaction curable liquid resin of the second embodiment (the third reaction curable liquid resin) is not particularly limited provided that it brings about an effect in accordance with the second embodiment of the present invention. The third reaction curable liquid resin of the second embodiment can be selected as appropriate from the reaction curable liquid resins listed earlier in the section (I-1-1-1. Reaction curable liquid resin) of the first embodiment.

In the latent heat storage material-containing resin composition in accordance with the second embodiment of the present invention, the third reaction curable liquid resin is preferably at least one resin selected from the group consisting of an acrylic-based resin, a polyisobutylene-based resin, a urethane-based resin, and an epoxy-based resin.

The configuration makes it possible to provide a latent heat storage material-containing resin composition that has a lower moisture absorbency.

Regarding the third reaction curable liquid resin, the urethane-based resin can be a polymer produced by a method in which (i) a polyisocyanate component and (ii) a polyol component containing polyol, a blowing agent, water, a catalyst, a foam stabilizer, and other auxiliary agent(s) are mixed at a fixed ratio. The urethane-based resin can alternatively be a polymer produced by a method in which (i) a polyisocyanate component and (ii) a polyol component containing polyol, a catalyst, and other auxiliary agent(s) are mixed at a fixed ratio.

A cured product having a thickness of 1 mm and obtained by curing the third reaction curable liquid resin has a water vapor permeability of less than 500 g/$m^2$ per day, preferably not more than 250 g/$m^2$ per day, more preferably not more than 150 g/$m^2$ per day, even more preferably not more than 100 g/$m^2$ per day, and particularly preferably not more than 80 g/$m^2$ per day, observed at a temperature of 40°C and a humidity of 90%. The configuration allows a resultant latent heat storage material-containing resin composition to provide a latent heat storage material-containing resin cured product that has a lower moisture absorbency. In a case where the cured product of the third reaction curable liquid resin has a water vapor permeability in the above range, the cured product of the third reaction curable liquid resin can also be said to have moisture resistance. The term "cured product" refers to "a cured state". The expression "a state in which the third reaction curable liquid resin is cured" means a state that is identical to "a state in which the first reaction curable liquid resin is cured" described earlier.

In the latent heat storage material-containing resin composition in accordance with the second embodiment of the present invention, the third reaction curable liquid resin can optionally further contain a diluent and/or a photoradical initiator. The diluent and the photoradical initiator that can be optionally contained in the third reaction curable liquid resin include preferable aspects. Regarding such preferable aspects, the descriptions in the section (Diluent and photoradical initiator) of the first embodiment are applied as appropriate.

The contained amount(s) of the diluent and/or the photoradical initiator in the third reaction curable liquid resin is/are not particularly limited. In order to adjust a viscosity difference between the heat storage material composition and the third reaction curable liquid resin, the diluent can be contained in the third reaction curable liquid resin in an amount of preferably 5 parts by weight to 25 parts by weight relative to 100 parts by weight of the third reaction curable liquid resin, provided that the diluent does not impair moisture resistance of a cured product of the third reaction curable liquid resin. In order to allow a photocuring reaction of the latent heat storage material-containing resin composition to sufficiently proceed by ultraviolet irradiation, the photoradical initiator is contained in an amount of preferably 0.5 parts by weight to 5.0 parts by weight relative to 100 parts by weight of the third reaction curable liquid resin.

(II-1-4. Latent heat storage material-containing resin composition)

In the present latent heat storage material-containing resin composition, the inorganic latent heat storage material composition is dispersed in the third reaction curable liquid resin.

In the second embodiment, the expression "dispersed" means that no aggregate of the inorganic latent heat storage material composition of not less than 1 mm is found when the latent heat storage material-containing resin composition is observed by a microscope (magnification: 10 times, field of view: 1 $cm^2$) at a temperature that is not more than 20°C lower than the melting temperature of the inorganic latent heat storage material composition.

In order to be more flame retardant, the latent heat storage material-containing resin composition preferably contains a small amount of the organic solvent that is volatile at normal temperature. Specifically, the organic solvent that is volatile at normal temperature is contained in 100 parts by weight of the latent heat storage material-containing resin composition in an amount of preferably not more than 50 parts by weight, more preferably not more than 10 parts by weight, even more preferably not more than 5 parts by weight, still more preferably not more than 1 part by weight, even further preferably not more than 0.5 parts by weight, and particularly preferably not more than 0.1 parts by weight.

The monocyclic aromatic compound is contained in 100 parts by weight of the latent heat storage material-containing resin composition in an amount of preferably not more than 50 parts by weight, more preferably not more than 10 parts by weight, even more preferably not more than 5 parts by weight, still more preferably not more than 1 part by weight, even further preferably not more than 0.5 parts by weight, and particularly preferably not more than 0.1 parts by weight. The total amount of at least one kind of compound contained in 100 parts by weight of the latent heat storage material-containing resin composition and selected from the group consisting of benzene, toluene, xylene, ethylene benzene, cumene, paracymene, dimethyl phthalate, diethyl phthalate, and dipropyl phthalate is preferably not more than 50 parts by weight, more preferably not more than 10 parts by weight, even more preferably not more than 5 parts by weight, still more preferably not more than 1 part by weight, even further preferably not more than 0.5 parts by weight, and particularly preferably not more than 0.1 parts by weight. (i) The amount of the organic solvent that is volatile at normal temperature and is contained in the latent heat storage material-containing resin cured product, (ii) the amount of the monocyclic aromatic compound contained in the latent heat storage material-containing resin cured product, and (iii) the total amount of at least one kind of compound contained in the latent heat storage material-containing resin cured product and selected from the group consisting of benzene, toluene, xylene, ethylene benzene, cumene, paracymene, dimethyl phthalate, diethyl phthalate, and dipropyl phthalate are preferably in respective preferable ranges of the contents in the latent heat storage material-containing resin composition described earlier.

In the second embodiment, the intermediate temperature in the temperature range that is exhibited by the latent heat storage material-containing resin composition while the latent heat storage material-containing resin composition that is in a solid state is melting into a liquid state or a gel state is regarded as the "melting temperature" of the latent heat storage material-containing resin composition. Note that the melting temperature of the latent heat storage material-containing resin composition can also be said to be the melting temperature of the inorganic latent heat storage material composition.

The present latent heat storage material-containing resin composition has a melting temperature that is not particularly limited. Assume that the latent heat storage material-containing resin composition is used to be adaptable to a house and to arrange a residential environment. In this case, the latent heat storage material-containing resin composition preferably has a melting temperature of 15°C to 30°C, more preferably 17°C to 28°C, and even more preferably 20°C to 25°C.

In the latent heat storage material-containing resin composition in accordance with the second embodiment of the present invention, the inorganic latent heat storage material composition preferably has a melting temperature of 15°C to 30°C. The configuration makes it possible to obtain the latent heat storage material-containing resin composition that is suitable for a residential environment.

In the latent heat storage material-containing resin composition in accordance with the second embodiment of the present invention, (i) (a) the inorganic latent heat storage material composition has a first viscosity, as measured by an oscillational viscometer, of 2 Pa·s to 25 Pa·s at a temperature that is 10°C to 35°C higher than a melting temperature of the inorganic latent heat storage material composition, or (b) the inorganic latent heat storage material composition has a second viscosity, as measured by a type E rotational viscometer, of 30 Pa·s to 90 Pa·s at the temperature that is 10°C to 35°C higher than the melting temperature of the inorganic latent heat storage material composition, and (ii) a third viscosity, as measured by the type E rotational viscometer, of the reaction curable liquid resin at the temperature that is 10°C to 35°C higher than the melting temperature of the inorganic latent heat storage material composition, and the second viscosity as measured by the type E rotational viscometer differ from each other by not more than 80 Pa·s (such a difference in viscosity is hereinafter also referred to as a "viscosity difference").

In the second embodiment of the present invention, the viscosity difference is not more than 80 Pa·s, preferably less than 80 Pa·s, more preferably not more than 60 Pa·s, even more preferably less than 60 Pa·s, still more preferably not more than 50 Pa·s, even further preferably not more than 40 Pa·s, and particularly preferably not more than 20 Pa·s. The viscosity difference has a lower limit that is not particularly limited but is preferably not less than 0 Pa·s. The viscosity difference that is in the above range allows the inorganic latent heat storage material composition to be uniformly dispersed in the third reaction curable liquid resin. Note that the viscosity difference can be changed as appropriate in accordance with a combination of the third reaction curable liquid resin to be used and the inorganic latent heat storage material composition to be used.

The viscosity of the inorganic latent heat storage material composition can be measured by a measurement method (described later) with use of the type E rotational viscometer and/or the oscillational viscometer.

The present latent heat storage material-containing resin composition can contain other component(s) different from the inorganic latent heat storage material composition and the latent heat storage material-containing resin composition provided that the effect in accordance with the second embodiment of the present invention is not lost. Examples of such a component(s) include a preservative, a perfume, a coloring agent, a flame retardant, a light-resistant stabilizer, an ultraviolet ray absorbing agent, a storage stabilizer, a cell adjusting agent, a lubricant, a fungicide, an antibacterial agent, a macromolecular polymer, other organic compound(s), and other inorganic compound(s).

(II-2. Method for producing latent heat storage material-containing resin composition)

A method for producing a latent heat storage material-containing resin composition in accordance with the second embodiment of the present invention includes: (i) a first mixing step of mixing an inorganic latent heat storage material composition and a thickener; and (ii) a second mixing step of mixing a resultant mixture and a third reaction curable liquid resin, the third reaction curable liquid resin satisfying the following requirement: a requirement that a cured product having a thickness of 1 mm and obtained by curing the third reaction curable liquid resin has a water vapor permeability of less than 500 g/m$^2$ per day observed at a temperature of 40°C and a humidity of 90%. The step (i) (first mixing step) is also simply referred to as a "preparation step". The step (ii) (second mixing step) is also simply referred to as a "mixing step".

In the method for producing the heat storage material-containing resin composition, the thickener is used to cause gelation of the inorganic latent heat storage material composition (i.e., cause an increase in viscosity) in the preparation step. Specifically, a resultant inorganic latent heat storage material composition gelates. After liquefaction of the inorganic latent heat storage material composition even at a temperature that is not less than the melting temperature of the inorganic latent heat storage material composition is prevented by gelation, the inorganic latent heat storage material composition is mixed in the third reaction curable liquid resin in the mixing step. This allows a cured product of a resultant latent heat storage material-containing resin composition to be a latent heat storage material-containing resin cured product containing the inorganic latent heat storage material composition which does not flow even at a temperature that is not less than the melting temperature of the inorganic latent heat storage material composition. In the present production method, the third reaction curable liquid resin has a specific water vapor permeability. Thus, the cured product of the resultant latent heat storage material-containing resin composition has a low moisture absorbency. Furthermore, in the present production method, the inorganic latent heat storage material composition can be uniformly dispersed in the third reaction curable liquid resin by adjusting, for example, (i) compatibility between the thickener and the third reaction curable liquid resin that is liquid and/or (ii) the viscosity. Moreover, in the present production method, the latent heat storage material composition that is inorganic makes it possible to solve the flammability problem that is feared in application to construction materials, and consequently to suitably use a resultant latent heat storage material-containing resin composition as a latent heat storage material composition for use in a residential environment.

In the (i) preparation step, the inorganic latent heat storage material composition and the thickener can be mixed by any technique that is publicly known in the technical field to which the present invention pertains. The inorganic latent heat storage material composition and the thickener is mixed by, for example, a method disclosed in Examples described later.

Though the optimum amount in which the thickener is blended differs depending on a type of the thickener to be used, the amount in which the thickener is blended is not particularly limited provided that the amount makes it possible to obtain the inorganic latent heat storage material composition that (i) prevents cohesion and precipitation of salts dissolved in the inorganic latent heat storage material composition, (ii) is highly handleable, and (iii) when heated to a temperature that is not less than 10°C higher than the melting temperature of the inorganic latent heat storage material composition, is not separated into solid and liquid fractions in the latent heat storage material-containing resin composition in which the inorganic latent heat storage material composition is used. The thickener is preferably added in an amount of preferably 1 part by weight to 10 parts by weight, and more preferably 2 parts by weight to 6 parts by weight, relative to 100 parts by weight (the total) of the inorganic latent heat storage material and the melting point adjusting agent.

In the (i) preparation step, the inorganic latent heat storage material composition and the thickener can be, for example, those listed in (II-1-1. Inorganic latent heat storage material composition).

In the (ii) mixing step, the inorganic latent heat storage material composition and the third reaction curable liquid resin can be mixed by any technique that is publicly known in the technical field to which the present invention pertains, for example, by a method disclosed in Examples described later.

In the (ii) mixing step, the mixing ratio between the inorganic latent heat storage material composition and the third reaction curable liquid resin is not particularly limited provided that the mixing ratio allows the present latent heat storage material-containing resin composition to be obtained. The mixing ratio between the inorganic latent heat storage material composition and the third reaction curable liquid resin that is unreacted is, for example, 80:20 to 20:80, preferably 70:30 to 30:70, more preferably 60:40 to 40:60, and even more preferably 50:50, as represented by the weight ratio.

In the (ii) mixing step, the third reaction curable liquid resin can be, for example, any of the reaction curable liquid resins listed in the section (I-1-1-1. Reaction curable liquid resin) of the first embodiment.

The (i) preparation step and the (ii) mixing step can be carried out successively in a single device, or can be carried out with use of a plurality of devices.

[II-3. Latent heat storage material-containing resin cured product]

The second embodiment of the present invention makes it possible to provide a latent heat storage material-containing resin cured product that is obtained by curing (i) the latent heat storage material-containing resin composition described in the section [II-1. Latent heat storage material-containing resin composition] or (ii) the latent heat storage material-containing resin composition that is obtained by the production method described in the section [II-2. Method for producing latent heat storage material-containing resin composition].

This makes it possible to say that a latent heat storage material-containing resin cured product in accordance with the second embodiment of the present invention contains an inorganic latent heat storage material composition and a third reaction curable liquid resin, the inorganic latent heat storage material composition containing a thickener, and the third reaction curable liquid resin satisfying the following requirement: a requirement that a cured product having a thickness of 1 mm and obtained by curing the third reaction curable liquid resin has a water vapor permeability of less than 500 $g/m^2$ per day observed at a temperature of 40°C and a humidity of 90%.

The latent heat storage material-containing resin cured product in accordance with the second embodiment of the present invention can also be configured as below. Specifically, the latent heat storage material-containing resin cured product in accordance with the second embodiment of the present invention contains a cured product of an inorganic latent heat storage material composition and a third reaction curable liquid resin, the inorganic latent heat storage material composition contains a thickener, and the cured product of the third reaction curable liquid resin has a water vapor permeability of less than 500 $g/m^2$ per day observed at a temperature of 40°C and a humidity of 90%.

With the configuration, the latent heat storage material-containing resin cured product in accordance with the second embodiment of the present invention has advantages of (a) having a lower risk of leakage, (b) having a low moisture absorbency, (c) being flame retardant, and (d) being highly workable.

(Moisture absorbency)

The latent heat storage material-containing resin cured product in accordance with the second embodiment of the present invention preferably has a lower moisture absorbency. The moisture absorbency of the second embodiment can be evaluated by a moisture absorption rate (%) described later in Examples B. The moisture absorption rate of the second embodiment is measured by the weight of the latent heat storage material-containing resin cured product which weight is obtained before and after the latent heat storage material-containing resin cured product is left to stand for 1 hour at 40°C and a humidity of 90%, and a method for the measurement will be specifically described later in Examples B. The latent heat storage material-containing resin cured product in accordance with the second embodiment of the present invention has a moisture absorption rate (%) of preferably less than 8%, more preferably not more than 6%, even more preferably not more than 5%, and particularly preferably not more than 4%. The latent heat storage material-containing resin cured product thus configured has an advantage of efficiently functioning as the latent heat storage material even in a case where the latent heat storage material-containing resin cured product is used for a long period. The latent heat storage material-containing resin composition described in the section [II-1. Latent heat storage material-containing resin composition] can also be said to preferably provide the latent heat storage material-containing resin cured product that has the above moisture absorption rate.

Examples of the method for producing the latent heat storage material-containing resin cured product in accordance with the second embodiment of the present invention include a method including a step of curing the third reaction curable liquid resin that is contained in the latent heat storage material-containing resin composition.

Thus, a method for producing a latent heat storage material-containing resin cured product in accordance with an embodiment of the present invention can also be said to be a production method including: (i) a first mixing step of mixing an inorganic latent heat storage material composition and a thickener; (ii) a second mixing step of mixing a resultant mixture and a third reaction curable liquid resin; and (iii) a step of curing the third reaction curable liquid resin. The step (iii) is also simply referred to as a "curing step".

In the (iii) curing step, the third reaction curable liquid resin can be cured by a method that is not particularly limited, provided that the method allows the third reaction curable liquid resin to be cured. Examples of the method for curing the third reaction curable liquid resin include (i) a method of adding a curing agent to the third reaction curable liquid resin and (ii) a method of carrying out ultraviolet irradiation with respect to the third reaction curable liquid resin. These methods can be used in combination. Examples of the curing agent that can be used include AP-4 (product name: Butyl acid phosphate), AP-8 (product name: 2-ethylhexyl acid phosphate), and AP-10 (product name: Isodecyl acid phosphate).

The (i) preparation step, the (ii) mixing step, and the (iii) curing step can be carried out successively in a single device, or can be carried out with use of a plurality of devices.

[II-4. Method for producing building including latent heat storage material]

A method for producing a building including a latent heat storage material in accordance with an embodiment of the present invention (hereinafter also referred to as a "method for producing the present building") includes: (i) a first mixing step of mixing an inorganic latent heat storage material composition and a thickener; (ii) a second mixing step of mixing a resultant mixture and a third reaction curable liquid resin; (iii) an application step of applying a resultant mixture to a floor surface and/or a wall surface of the building; and (iv) a curing step of curing the applied mixture, the third reaction curable liquid resin satisfying the following requirement: a requirement that a cured product having a thickness of 1 mm and obtained by curing the third reaction curable liquid resin has a water vapor permeability of less than 500 g/$m^2$ per day observed at a temperature of 40°C and a humidity of 90%. The method for producing the building including the latent heat storage material can alternatively be referred to as a method for constructing the building including the latent heat storage material. The step (i) is also simply referred to as the "first mixing step", the step (ii) is also simply referred to as the "second mixing step", the step (iii) is also simply referred to as an "application step", and the step (iv) is also referred to as the "curing step".

With the configuration, the method for producing the present building allows the latent heat storage material-containing resin composition to be cured by being applied directly to the floor surface and/or the wall surface of the building. Thus, the method for producing the present building is extremely handleable as compared with a conventional technique. In the method for producing the present building, the third reaction curable liquid resin has a specific water vapor permeability. This allows the latent heat storage material of a resultant building to have a low moisture absorbency. As a result, even in a case where the latent heat storage material is used for a long period, the building can have an advantage of enjoying an effect of the latent heat storage material.

The (i) "first mixing step" is a step of mixing the inorganic latent heat storage material composition and the thickener, and the step is carried out by, for example, mixing the inorganic latent heat storage material composition described in (II-1-1. Inorganic latent heat storage material composition) and the thickener described in (II-1-2. Thickener). The first mixing step can be carried out by, for example, the same method as in the preparation step of [II-2. Method for producing latent heat storage material-containing resin composition].

The (ii) "second mixing step" is a step of mixing (a) a mixture obtained through the step (i) and (b) the third reaction curable liquid resin that is the reaction curable liquid resin described in the section (I-1-1-1. Reaction curable liquid resin) of the first embodiment. The second mixing step can be carried out by, for example, the same method as in the mixing step of [II-2. Method for producing latent heat storage material-containing resin composition].

The first mixing step and the second mixing step can also be referred to as a step of preparing the latent heat storage material-containing resin composition for applying the latent heat storage material-containing resin composition to the floor surface and/or the wall surface of the building.

The (iii) "application step" is a step of adding the curing agent to the latent heat storage material-containing resin composition and then applying the latent heat storage material-containing resin composition to a target object (specifically, the floor surface and/or the wall surface of the building).

In the application step, the latent heat storage material-containing resin composition can be applied by a method that is not particularly limited.

The (iv) "curing step" is a step of obtaining the latent heat storage material-containing resin cured product by irradiating, with, for example, ultraviolet rays, the latent heat storage material-containing resin composition that has been applied to the target object. The curing step can be carried out by, for example, the same method as in the curing step of [II-3. Latent heat storage material-containing resin cured product].

The application step and the curing step can also be referred to as a step of applying the latent heat storage material-containing resin cured product to the floor surface and/or the wall surface of the building.

In addition to the steps (i) to (iv) that are carried out by a single person (i.e., a single worker), the steps (i) to (iv) that are carried out separately by different persons (e.g., different workers) are also included in the scope of the present invention.

[II-5. Use]

The latent heat storage material-containing resin composition in accordance with the second embodiment of the present invention has various uses where the heat storage material is needed, and can be used in, for example, a wall material, a floor material, a ceiling material, and a roof material.

In another embodiment, the latent heat storage material-containing resin composition can be used in, for example, a floor mat base material and a plywood adhesive.

Embodiments of the present invention may also be as follows.

[X1] A latent heat storage material including: a heat storage material; and a surface layer, the heat storage material containing an inorganic latent heat storage material composition that contains an inorganic latent heat storage

material and a thickener, the surface layer containing a cured product of a first reaction curable liquid resin, and the surface layer having (i) a type E hardness value of not more than 50, (ii) a 100% modulus of not more than 0.50 MPa ($N/mm^2$), and (iii) an elongation percentage at break of not less than 100%.

[X2] The latent heat storage material recited in [X1], wherein the cured product of the first reaction curable liquid resin has a thickness of 1 mm and has a water vapor permeability of less than 500 $g/m^2$ per day observed at a temperature of 40°C and a humidity of 90%.

[X3] The latent heat storage material recited in [X1] or [X2], wherein the inorganic latent heat storage material contains calcium chloride hexahydrate, and the inorganic latent heat storage material composition further contains a melting point adjusting agent and a supercooling inhibitor.

[X4] The latent heat storage material recited in any one of [X1] to [X3], wherein the heat storage material further contains a second reaction curable liquid resin.

[X5] The latent heat storage material recited in [X4], wherein the first reaction curable liquid resin and the second reaction curable liquid resin are each independently at least one resin selected from the group consisting of a silicone-based resin, an acrylic-based resin, a polyisobutylene-based resin, a urethane-based resin, and an epoxy-based resin.

[X6] The latent heat storage material recited in any one of [X3] to [X5], wherein the thickener is at least one kind selected from the group consisting of a water-absorbing resin, attapulgite clay, gelatin, agar, silica, xanthan gum, gum arabic, guar gum, carageenan, cellulose, konjac, and hydroxyethyl cellulose.

[X7] The latent heat storage material recited in [X4] or [X5], wherein (i) (a) the inorganic latent heat storage material composition has a first viscosity, as measured by an oscillational viscometer, of 2 Pa·s to 25 Pa·s at a temperature that is 10°C to 35°C higher than a melting temperature of the inorganic latent heat storage material composition, or (b) the inorganic latent heat storage material composition has a second viscosity, as measured by a type E rotational viscometer, of 30 Pa·s to 90 Pa·s at the temperature that is 10°C to 35°C higher than the melting temperature of the inorganic latent heat storage material composition, and (ii) a third viscosity, as measured by the type E rotational viscometer, of the second reaction curable liquid resin at the temperature that is 10°C to 35°C higher than the melting temperature of the inorganic latent heat storage material composition, and the second viscosity, as measured by the type E rotational viscometer, at the temperature that is 10°C to 35°C higher than the melting temperature of the inorganic latent heat storage material composition differ from each other by not more than 80 Pa·s.

[X8] The latent heat storage material recited in any one of [X1] to [X7], wherein the inorganic latent heat storage material composition has a melting temperature of 15°C to 30°C.

[X9] A method for producing a latent heat storage material, including: heat storage material preparing step of preparing a heat storage material containing an inorganic latent heat storage material composition that contains an inorganic latent heat storage material and a thickener; and a surface layer forming step of forming a surface layer on an interface with external air in the prepared heat storage material, the surface layer having (i) a type E hardness value of not more than 50, (ii) a 100% modulus of not more than 0.50 MPa ($N/mm^2$), and (iii) an elongation percentage at break of not less than 100%.

[X10] A latent heat storage material-containing resin composition containing: an inorganic latent heat storage material composition; and a third reaction curable liquid resin, the inorganic latent heat storage material composition containing a thickener, and the third reaction curable liquid resin satisfying the following requirement: a requirement that a cured product having a thickness of 1 mm and obtained by curing the third reaction curable liquid resin has a water vapor permeability of less than 500 $g/m^2$ per day observed at a temperature of 40°C and a humidity of 90%.

[X11] A method for producing a latent heat storage material-containing resin composition, including: a first mixing step of mixing an inorganic latent heat storage material composition and a thickener; and a second mixing step of mixing a resultant mixture and a third reaction curable liquid resin, the third reaction curable liquid resin satisfying the following requirement: a requirement that a cured product having a thickness of 1 mm and obtained by curing the third reaction curable liquid resin has a water vapor permeability of less than 500 $g/m^2$ per day observed at a temperature of 40°C and a humidity of 90%.

[X12] A method for producing a building including a latent heat storage material, including: a first mixing step of mixing an inorganic latent heat storage material composition and a thickener; a second mixing step of mixing a resultant mixture and a third reaction curable liquid resin; an application step of applying a resultant mixture to a floor surface and/or a wall surface of the building; and a curing step of curing the applied mixture, the third reaction curable liquid resin satisfying the following requirement: a requirement that a cured product having a thickness of 1 mm and obtained by curing the third reaction curable liquid resin has a water vapor permeability of less than 500 $g/m^2$ per day observed at a temperature of 40°C and a humidity of 90%.

Embodiments of the present invention may also be as follows.

[Y1] A latent heat storage material-containing resin composition containing: an inorganic latent heat storage material composition; and a reaction curable liquid resin, the inorganic latent heat storage material composition containing a thickener, and the reaction curable liquid resin satisfying the following requirement: a requirement that a cured product having a thickness of 1 mm and obtained by curing the reaction curable liquid resin has a water vapor permeability of

less than 500 $g/m^2$ per day observed at a temperature of 40°C and a humidity of 90%.

[Y2] The latent heat storage material-containing resin composition recited in [Y1], wherein the inorganic latent heat storage material further contains calcium chloride hexahydrate, a melting point adjusting agent, and a supercooling inhibitor.

[Y3] The latent heat storage material-containing resin composition recited in [Y1] or [Y2], wherein the reaction curable liquid resin is at least one resin selected from the group consisting of an acrylic-based resin, a polyisobutylene-based resin, a urethane-based resin, and an epoxy-based resin.

[Y4] The latent heat storage material-containing resin composition recited in [Y2] or [Y3], wherein the thickener is at least one kind selected from the group consisting of a water-absorbing resin, attapulgite clay, gelatin, agar, silica gel, xanthan gum, gum arabic, guar gum, carageenan, cellulose, konjac, and hydroxyethyl cellulose.

[Y5] The latent heat storage material-containing resin composition recited in any one of [Y1] to [Y4], wherein (i) (a) the inorganic latent heat storage material composition has a first viscosity, as measured by an oscillational viscometer, of 5 Pa·s to 25 Pa·s at a temperature that is 10°C to 35°C higher than a melting temperature of the inorganic latent heat storage material composition, or (b) the inorganic latent heat storage material composition has a second viscosity, as measured by a type E rotational viscometer, of 30 Pa·s to 90 Pa·s at the temperature that is 10°C to 35°C higher than the melting temperature of the inorganic latent heat storage material composition, and (ii) a third viscosity, as measured by the type E rotational viscometer, of the reaction curable liquid resin at the temperature that is 10°C to 35°C higher than the melting temperature of the inorganic latent heat storage material composition, and the second viscosity as measured by the type E rotational viscometer differ from each other by not more than 80 Pa·s.

[Y6] The latent heat storage material-containing resin composition recited in any one of [Y1] to [Y5], wherein the inorganic latent heat storage material composition has a melting temperature of 15°C to 30°C.

[Y7] A method for producing a latent heat storage material-containing resin composition, including: a first mixing step of mixing an inorganic latent heat storage material composition and a thickener; and a second mixing step of mixing a resultant mixture and a reaction curable liquid resin, the reaction curable liquid resin satisfying the following requirement: a requirement that a cured product having a thickness of 1 mm and obtained by curing the reaction curable liquid resin has a water vapor permeability of less than 500 $g/m^2$ per day observed at a temperature of 40°C and a humidity of 90%.

[Y8] A method for producing a building including a latent heat storage material, including: a first mixing step of mixing an inorganic latent heat storage material composition and a thickener; a second mixing step of mixing a resultant mixture and a reaction curable liquid resin; an application step of applying a resultant mixture to a floor surface and/or a wall surface of the building; and a curing step of curing the applied mixture, the reaction curable liquid resin satisfying the following requirement: a requirement that a cured product having a thickness of 1 mm and obtained by curing the reaction curable liquid resin has a water vapor permeability of less than 500 $g/m^2$ per day observed at a temperature of 40°C and a humidity of 90%.

[Examples A]

The following description will discuss Examples A and Comparative Examples A of the first embodiment of the present invention. The first embodiment of the present invention is not limited to these Examples A.

Examples A and Comparative Examples A of the present invention used the following reaction curable liquid resins and diluents.

- Acrylic-based resin (a): RC500C (manufactured by KANEKA CORPORATION)
- Polyisobutylene-based resin (b): EP400V (manufactured by KANEKA CORPORATION)
- Silicone-based resin (c): SAX220 (manufactured by KANEKA CORPORATION)
- Acrylic-based resin (d): RA650 (manufactured by KANEKA CORPORATION)
- Acrylic-based resin (e): Hayacoat UV (manufactured by Sunhayato Corp.) (The acrylic-based resin (e) is a photoradical initiator-containing product, i.e., a mixture of an acrylic-based resin (first reaction curable liquid resin) and a photoradical initiator.)
- Diluent (a): MM100C (manufactured by KANEKA CORPORATION)
- Diluent (b): Isostearyl alcohol (manufactured by OSAKA ORGANIC CHEMICAL INDUSTRY LTD)

Examples A and Comparative Examples A of the present invention used an ultraviolet irradiation device that is manufactured by Fusion UV Systems Japan K.K. and whose model is LC-6B.

The following description will discuss how Examples A and Comparative Examples A carried out measurements and evaluations. In Examples A and Comparative Examples A below, a surface layer contains only a cured product of the first reaction curable liquid resin or a cured product of a mixture of the first reaction curable liquid resin and the diluent. Thus, regarding physical properties of the surface layer, physical properties of the cured product of the first reaction curable liquid resin or the cured product of the mixture of the first reaction curable liquid resin and the diluent

are measured, and the measured physical properties are regarded as the physical properties of the surface layer.

(Method for measuring water vapor permeability of surface layer)

A cured product of the first reaction curable liquid resin or a cured product of a mixture of the first reaction curable liquid resin and a diluent was prepared. Specifically, a cured product was prepared by curing (a) the first reaction curable liquid resin or (b) a mixture of the first reaction curable liquid resin and a diluent by a curing method identical to a method for curing the first reaction curable liquid resins in Examples A and Comparative Examples A. The first reaction curable liquid resin (a) and the mixture (b) are identical in makeup to the surface layers described in Examples A and Comparative Examples A below. Next, a water vapor permeability of the cured product thus prepared (having a thickness of approximately 1 mm) was measured in conformity to JIS K 7126-1 (a differential pressure method) at 40°C and a humidity of 90%.

As a result, a cured product of the acrylic-based resin (a) had a water vapor permeability of less than 80 $g/m^2$ per day. Note here that a cured product of a mixture of the acrylic-based resin (a) and the diluent (a) was used as the surface layer in Examples A9, A19, and A21. The diluent (a) was blended in an amount approximately 1/7 the weight of the acrylic-based resin (a) in Examples A9, A19, and A21. This makes it possible to say that the diluent (a) has less influence on the water vapor permeability. Thus, the cured product of the mixture of the acrylic-based resin (a) and the diluent (a) which cured product was used in Examples A9, A19, and A21 is highly likely to have a water vapor permeability of less than 500 $g/m^2$ per day. A cured product of the polyisobutylene-based resin (b) had a water vapor permeability of less than 80 $g/m^2$ per day. Note here that a cured product of a mixture of the polyisobutylene-based resin (b) and the diluent (b) was used as the surface layer in Example A10. The diluent (b) was blended in an amount approximately 1/7 the weight of the polyisobutylene-based resin (b) in Example A10. This makes it possible to say that the diluent (b) has less influence on the water vapor permeability. Thus, the cured product of the mixture of the polyisobutylene-based resin (b) and the diluent (b) which cured product was used in Example A10 is highly likely to have a water vapor permeability of less than 500 $g/m^2$ per day. A cured product of the silicone-based resin (c) had a water vapor permeability of more than 500 $g/m^2$ per day. A cured product of the acrylic-based resin (d) had a water vapor permeability of less than 500 $g/m^2$ per day. A cured product of the acrylic-based resin (e) had a water vapor permeability of less than 50 $g/m^2$ per day.

(Method for measuring type A hardness value and type E hardness value of surface layer)

A sheet of the cured product of the first reaction curable liquid resin or the cured product of the mixture of the first reaction curable liquid resin and the diluent was prepared by a curing method identical to the method disclosed in Examples A and Comparative Examples A below. Next, a test piece being approximately 25 mm square and having a thickness of approximately 6 mm was cut from the sheet of the cured product thus obtained. The test piece thus obtained was used to measure a type A hardness value and a type E hardness value. A type A durometer (manufactured by KOBUNSHI KEIKI CO., LTD.) was used to measure the type A hardness value, and a type E durometer (manufactured by KOBUNSHI KEIKI CO., LTD.) was used to measure the type E hardness value. In the measurement of the type A hardness value and the type E hardness value, an auxiliary device (CL-150 (CONSTANT LOADER for DUROMETER) manufactured by KOBUNSHI KEIKI CO., LTD.) was used in conjunction with the durometer. In the measurement of the type A hardness value and the type E hardness value, a value obtained immediately after the durometer had been placed on the test piece was read. Table 1 shows results of the measurement.

(Method for measuring maximum tensile strength, 50% modulus, 100% modulus, tensile strength at break (TB), and elongation percentage at break (EB) at break of surface layer)

A sheet (having a thickness of approximately 2 mm) of the cured product of the first reaction curable liquid resin or the cured product of the mixture of the first reaction curable liquid resin and the diluent was prepared by a curing method identical to the method disclosed in Examples A and Comparative Examples A below. Next, a test piece having a size of Dumbbell No. 3 was cut from the sheet of the cured product thus obtained. The test piece thus obtained was used to measure a maximum tensile strength, a 50% modulus (M50, unit: MPa), a 100% modulus (M100, unit: MPa), a tensile strength at break (Tb, unit: MPa), and an elongation percentage at break (Eb, unit: %) in conformity to JIS K 6251. Autograph (AG-X/R, manufactured by Shimadzu Corporation) was used as a measuring device. The measurement was carried out at a tensile speed of 200 mm/min and 25°C. Table 1 shows results obtained. In some cases, it was impossible to obtain any test piece because a cured product of the acrylic-based resin (e) was broken when the test piece having a size of Dumbbell No. 3 was cut out from a sheet of the cured product of the acrylic-based resin (e). This is considered to be because the cured product of the acrylic-based resin (e) is hard. Table 1 shows results of the measurement of the maximum tensile strength, the 50% modulus, the 100% modulus, the tensile strength at break, and the elongation percentage at break of an obtained test piece of the acrylic-based resin (e).

[Table 1]

| | | Hardness (Type A) | Hardness (Type E) | Maximum tensile strength (MPa) | M50 (MPa) | M100 (MPa) | Tb (MPa) | Eb (%) |
|---|---|---|---|---|---|---|---|---|
| First reaction curable liquid resin | Acrylic-based resin (a) | 0 | 10 | 0.15 | 0.03 | 0.04 | 0.15 | 396 |
| | Acrylic-based resin (a) / diluent (a) | 0 | 9 | 0.15 | 0.02 | 0.03 | 0.15 | 494 |
| | Polyisobutylene-based resin (b) / diluent (b) | 28 | 46 | 0.44 | 0.30 | 0.45 | 0.42 | 106 |
| | Silicone-based resin (c) | 10 | 29 | 0.48 | 0.07 | 0.16 | 0.47 | 447 |
| | Acrylic-based resin (d) | 0 | 4 | 0.08 | 0.04 | 0.05 | 0.08 | 600 |
| | Acrylic-based resin (e) | 76 | 70 | 16.59 | 11.83 | 11.65 | 16.59 | 564 |

(Method for measuring viscosity by type E (cone-plate type) rotational viscometer)

A type E rotational viscometer (model: TV-25, manufactured by Toki Sangyo Co., Ltd) and a constant-temperature water bath (model: VM-150III, manufactured by Toki Sangyo Co., Ltd) were used to measure a viscosity (Pa·s) of the inorganic latent heat storage material composition or the second reaction curable liquid resin at a temperature that is 24°C to 30°C higher than the melting temperature of the inorganic latent heat storage material composition. A viscosity difference between the inorganic latent heat storage material composition and the second reaction curable liquid resin was calculated from results obtained. Tables 2 to 7 show results of the calculation.

(Method for calculating moisture absorption rate by moisture absorption test)

In any of Examples A1 to A20, A23, and A25, a polypropylene tray containing a latent heat storage material obtained in any of Examples A1 to A20, A23, and A25 was used as a sample. In Comparative Example A1, a polypropylene tray containing a heat storage material obtained in Comparative Example A1 was used as a sample. In Example A21, A22, or A24, or Comparative Example A2, a polypropylene tray (i) containing a latent heat storage material obtained in Example A21, A22, or A24, or Comparative Example A2 and (ii) having been subjected to "Evaluation of surface layer after perforation by puncture" (described later) was used as a sample. A moisture absorption test was started within 0.5 hours after perforation. In Comparative Example A3, a polyethylene bag containing a heat storage material (inorganic latent heat storage material composition) obtained in Comparative Example A3 was used as a sample. The moisture absorption test was started within 0.5 hours after the polyethylene bag had been perforated. The samples were each allowed to stand for 2 hours, 6 hours, or 8 hours in a thermohygrostat (manufactured by Nagano Science Co., Ltd.) at 40°C and a humidity 90%. Then, the moisture absorption rate (%) was calculated in accordance with Equation (5) below. Note that "the weight of the latent heat storage material (heat storage material)" in Examples A1 to A25 and Comparative Examples A1 and A2 is a value obtained by (i) measuring, before and after standing in the thermohygrostat, the weight of the polypropylene tray containing the latent heat storage material (heat storage material) and (ii) subtracting, from a measured value of the weight, the weight of the polypropylene tray containing no latent heat storage material (heat storage material). Note also that "the weight of the latent heat storage material (heat storage material)" in Comparative Example A3 is a value obtained by (i) measuring, before and after standing in the thermohygrostat, the weight of the polyethylene bag containing the heat storage material and (ii) subtracting, from a measured value of the weight, the weight of the polyethylene bag containing no heat storage material. Moisture absorption rate (%) = (weight of latent heat storage material (heat storage material) after standing) - (weight of latent heat storage material (heat storage material) before standing) / (amount of inorganic latent heat storage material composition contained in latent heat storage material (heat storage material)) $\times$ 100 (%) ... Equation (5)

Here, cured products (a) to (e) consisting of respective reaction curable liquid resins (a) to (e) were prepared, the reaction curable liquid resins (a) to (e) each having been used as the first reaction curable liquid resin or the second reaction curable liquid resin. Specifically, the cured products were prepared by a curing method identical to the method for curing the first reaction curable liquid resin in Examples A and Comparative Examples A below. For each of the cured products (a) to (e) thus prepared, the weight obtained before and after standing in the thermohygrostat was measured by a method similar to that described earlier. Results of the measurement show that the weight did not change before and after standing. Specifically, it can be said that the respective cured products (a) to (e) of the reaction curable liquid resins (a) to (e) have a moisture absorption rate of 0%. Thus, the above-obtained moisture absorption rate of the latent heat storage material can be said to be a moisture absorption rate of the inorganic latent heat storage material composition contained in the latent heat storage material.

(Evaluation of moisture absorbency)

Moisture absorbency (can also be referred to as moisture resistance) of the latent heat storage material was evaluated by the criteria below in accordance with the moisture absorption rate of the latent heat storage material, the moisture absorption rate having been calculated by the moisture absorption test.

VG (very good): (i) The moisture absorption rate obtained after the elapse of 2 hours is less 3%, and (ii-1) the moisture absorption rate obtained after the elapse of 6 hours is less than 5%, or (ii-2) the moisture absorption rate obtained after the elapse of 8 hours is less than 5%. G (good): (i) The moisture absorption rate obtained after the elapse of 2 hours is not less than 3% and less than 5%, and/or (ii-1) the moisture absorption rate obtained after the elapse of 6 hours is not less than 5% and less than 12%, or (ii-2) the moisture absorption rate obtained after the elapse of 8 hours is not less than 5% and less than 12%.

P (poor): (i) The moisture absorption rate obtained after the elapse of 2 hours is not less than 5% and less than 8%, and/or (ii-1) the moisture absorption rate obtained after the elapse of 6 hours is not less than 12% and less than 15%, or (ii-2) the moisture absorption rate obtained after the elapse of 8 hours is not less than 12% and less than 15%. VP (very poor): (i) The moisture absorption rate obtained after the elapse of 2 hours is not less than 8%, and/or (ii-1) the moisture absorption rate obtained after the elapse of 6 hours is not less than 15%, or (ii-2) the moisture absorption rate obtained after the elapse of 8 hours is not less than 15%.

(Evaluation of surface layer after perforation by puncture)

The polypropylene tray obtained in each of Examples A21, A22, and A24, and Comparative Example A2 and containing the latent heat storage material was contained in a refrigerator so that the latent heat storage material composition contained in the latent heat storage material was solidified. Next, the polypropylene tray containing the latent heat storage material was taken from the refrigerator, and needles of a pinholder were pressed against the latent heat storage material from above the tray (i.e., from above the surface layer) so that holes are made in the latent heat storage material. The pinholder used had 276 needles having a diameter of approximately 0.5 mm and a length of approximately 14 mm, and had a size of approximately 5.5 cm in length and approximately 7 cm in width. It was observed that by carrying out such an operation, the needles had penetrated the surface layer (on the upper surface side) and needle marks had been made in the heat storage material. Then, 5 minutes later, the surface layer of the latent heat storage material was visually observed so that it was determined (i) whether there was any crack and/or any fracture in the surface layer and (ii) whether there was any hole in the surface layer. Tables 7 and 8 show results of the determination.

(Usability determination)

Usability determination of the latent heat storage materials obtained in Examples A21 to A25 and Comparative Examples A2 and A3 was evaluated by the following criteria: VG (very good): The moisture absorption rate is evaluated as "VG", and there is no crack, fracture, or hole in the surface layer after perforation by puncture.

G (good): The moisture absorption rate is evaluated as "G", and there is no crack, fracture, or hole in the surface layer after perforation by puncture.

P (poor): (i) The moisture absorption rate is evaluated as "P", (ii) there is a crack and/or a fracture in the surface layer after perforation by puncture, (iii) there is a hole in the surface layer after perforation by puncture, or (iv) there is a hole in a bag containing the latent heat storage material.

(Production Example A1: Preparation of inorganic latent heat storage material composition PCM (A1))

To a 1 L intensive mixer (manufactured by Nippon Eirich Co., Ltd.), 117.6 g of water, 44.1 g of sodium bromide (a melting point adjusting agent), 14.3 g of sodium chloride (a supercooling inhibitor), and 4.2 g of strontium chloride hexahydrate (the supercooling inhibitor) were added. The materials added were mixed until each salt was completely dissolved, so that a mixed solution was obtained. To the mixed solution obtained, 6.2 g of hydroxyethyl cellulose (a thickener) and 1.1 g of sodium benzoate (a preservative) were added so as to be dispersed in a short time. Then, 4.2 g of a fatty acid mixture (Nsp) (an auxiliary thickening agent, manufactured by Hope Chemical Co., LTD.) was added so as to be dispersed in a short time. Finally, to a resultant mixed solution, 240. 0 g of calcium chloride hexahydrate (a latent heat storage material) was added. Then, while being heated (up to 70°C), a resultant mixture was stirred until the solution had a sufficiently increased viscosity. Thus, an inorganic latent heat storage material composition (PCM (A1)) was obtained.

The inorganic latent heat storage material composition (PCM (A1)) obtained had a molar ratio of 1:0.26 between the calcium chloride hexahydrate and the sodium bromide. Furthermore, the inorganic latent heat storage material composition (PCM (A1)) had a melting temperature of approximately 23°C and was not separated into solid and liquid fractions even at 70°C. Moreover, the inorganic latent heat storage material composition (PCM (A1)) had a viscosity, as measured by a type E rotational viscometer, of approximately 44 Pa·s at a temperature that is 24°C to 30°C higher than the melting temperature of the inorganic latent heat storage material composition.

A differential scanning calorimeter (SII EXSTAR6000 DSC manufactured by Seiko Instruments Inc.) was used to obtain a DSC curve by increasing the temperature of the PCM (A1) from -20°C to 50°C at a rate of 3.0°C/min and then decreasing the temperature from 50°C to -20°C at a rate of 3.0°C/min. The melting latent heat quantity obtained at or near the melting temperature in the DSC curve obtained was 141 J/g.

(Production Example A2: PCM (A2))

Production Example A2 obtained an inorganic latent heat storage material composition (PCM (A2)) by carrying out operations identical to those carried out in Production Example A1, except that Production Example A2 changed, to 12.5 g, the amount of the hydroxyethyl cellulose (thickener) added in Production Example A1.

The inorganic latent heat storage material composition (PCM (A2)) obtained had a molar ratio of 1:0.26 between the calcium chloride hexahydrate and the sodium bromide. Furthermore, the inorganic latent heat storage material composition (PCM (A2)) had a melting temperature of approximately 23°C and was not separated into solid and liquid fractions even at 70°C. Moreover, the inorganic latent heat storage material composition (PCM (A2)) had a viscosity, as measured by a type E rotational viscometer, of approximately 83 Pa·s at a temperature that is 24°C to 30°C higher than the melting temperature of the inorganic latent heat storage material composition.

(Examples A1 to A10)

The inorganic latent heat storage material composition (PCM (A1) or PCM (A2)) (A) obtained in Production Example A1 or A2 and each second reaction curable liquid resin (B) or the each second reaction curable liquid resin (B) optionally containing a diluent were mixed in accordance with a corresponding one of the weight ratios shown in Tables 2 and 3, so that a heat storage material was obtained. Next, as a photoradical initiator, IRGACURE 1173 (2-hydroxy-2-methyl-1-phenylpropane-1-on, manufactured by BASF Japan Ltd.) and IRGACURE 819 (bis(2,4,6-trimethylbenzoyl)-phenylphosphine oxide, manufactured by BASF Japan Ltd.) were mixed and dissolved so that the weight ratio (IRGACURE 1173 : IRGACURE 819) was 2:1. Thus, a photoradical initiator mixed solution was obtained. The photoradical initiator mixed solution obtained was added to the heat storage material so as to have 2 parts by weight relative to 100 parts by weight of the second reaction curable liquid resin (B) as a whole. A resultant mixture was sufficiently mixed so that the heat storage material containing the initiator was obtained. Subsequently, the heat storage material obtained was poured into a polypropylene tray. A ultraviolet irradiation device was used in air to irradiate the poured heat storage material with ultraviolet rays so that the second reaction curable liquid resin (B) contained in the second reaction curable liquid resins (B) was cured.

Then, as shown in Tables 2 and 3, a mixture of (a) the first reaction curable liquid resin or a mixture of the first reaction curable liquid resin and the diluent and (b) the photoradical initiator mixed solution was prepared. The photoradical initiator mixed solution was used in an amount of 2 parts by weight relative to 100 parts by weight of the first reaction curable liquid resin. Next, into a top surface of the polypropylene tray containing the heat storage material, i.e., an interface between the heat storage material and external air, the prepared mixture was poured so as to have a thickness of approximately 1.5 mm. Subsequently, the ultraviolet irradiation device was used in air to irradiate the poured mixture with ultraviolet rays so that the first reaction curable liquid resin was cured. Thus, a surface layer was formed.

(Examples A11 to A18)

The inorganic latent heat storage material composition (PCM (A1) or PCM (A2)) (A) obtained in Production Example A1 or A2 and the silicone-based resin (c) (second reaction curable liquid resin (B)) were mixed in accordance with a corresponding one of the weight ratios shown in Tables 4 and 5, so that a heat storage material was obtained. Next, a curing agent (AP-8, manufactured by DAIHACHI CHEMICAL INDUSTRY CO., LTD.) was added to the heat storage material so as to have 2 parts by weight relative to 100 parts by weight of the silicone-based resin (c) (second reaction curable liquid resin (B)). A resultant mixture was further mixed so that the heat storage material containing the curing agent was obtained. Subsequently, the heat storage material obtained was poured into a polypropylene tray. The polypropylene tray was placed in an oven at 60°C, and the heat storage material was heated so that the second reaction curable liquid resin (B) contained in the heat storage material was cured.

Then, as shown in Tables 4 and 5, a mixture of the silicone-based resin (c) (first reaction curable liquid resin) and the curing agent (AP-8, manufactured by DAIHACHI CHEMICAL INDUSTRY CO., LTD.) was adjusted. The curing agent was used in an amount of 2 parts by weight relative to 100 of the silicone-based resin (c) (first reaction curable liquid resin). Next, into a top surface of the polypropylene tray containing the heat storage material, i.e., an interface between the heat storage material and external air, the prepared mixture was poured so as to have a thickness of approximately 1.5 mm. Subsequently, the polypropylene tray was placed in an oven at 60°C, and the mixture was heated so that the first reaction curable liquid resin was cured. Thus, a surface layer was formed.

(Example A19)

The inorganic latent heat storage material composition (PCM (A1)) (A) obtained in Production Example A1 and the acrylic-based resin (d) (second reaction curable liquid resin (B)) were mixed in accordance with a corresponding one of the weight ratios shown in Table 5, so that a heat storage material was obtained. Next, a curing agent (AP-8, manufactured by DAIHACHI CHEMICAL INDUSTRY CO., LTD.) was added to the heat storage material so as to have 2 parts by weight relative to 100 parts by weight of the acrylic-based resin (d) (second reaction curable liquid resin (B)). A resultant mixture was further mixed so that the heat storage material containing the curing agent was obtained. Subsequently, the heat storage material obtained was poured into a polypropylene tray. The polypropylene tray was placed in an oven at 60°C, and the heat storage material was heated so that the second reaction curable liquid resin (B) contained in the heat storage material was cured.

Then, as shown in Table 5, a mixture of (i) a mixture of the acrylic-based resin (a) (first reaction curable liquid resin) and the diluent (a) and (ii) the photoradical initiator mixed solution was prepared. The photoradical initiator mixed solution was used in an amount of 2 parts by weight relative to 100 parts by weight of the acrylic-based resin (a) (first reaction curable liquid resin). Next, into a top surface of the polypropylene tray containing the heat storage material, i.e., an interface between the heat storage material and external air, the prepared mixture was poured so as to have a thickness of approximately 1.5 mm. Subsequently, the ultraviolet irradiation device was used in air to irradiate the poured mixture with ultraviolet rays so that the first reaction curable liquid resin was cured. Thus, a surface layer was formed.

(Example A20)

The inorganic latent heat storage material composition (PCM (A1)) (A) obtained in Production Example A1 and the silicone-based resin (c) (second reaction curable liquid resin (B)) were mixed in accordance with a corresponding one of the weight ratios shown in Table 5, so that a heat storage material was obtained. Next, a curing agent (AP-8, manufactured by DAIHACHI CHEMICAL INDUSTRY CO., LTD.) was added to the heat storage material so as to have 2 parts by weight relative to 100 parts by weight of the silicone-based resin (c) (second reaction curable liquid resin (B)). A resultant mixture was further mixed so that the heat storage material containing the curing agent was obtained. Subsequently, the heat storage material obtained was poured into a polypropylene tray. The polypropylene tray was placed in an oven at 60°C, and the heat storage material was heated so that the second reaction curable liquid resin (B) contained in the heat storage material was cured.

Then, as shown in Table 5, a mixture of the acrylic-based resin (d) (first reaction curable liquid resin) and the curing agent (AP-8, manufactured by DAIHACHI CHEMICAL INDUSTRY CO., LTD.) was adjusted. The curing agent was used in an amount of 2 parts by weight relative to 100 of the acrylic-based resin (d) (first reaction curable liquid resin). Next, into a top surface of the polypropylene tray containing the heat storage material, i.e., an interface between the heat storage material and external air, the prepared mixture was poured so as to have a thickness of approximately 1.5 mm. Subsequently, the polypropylene tray was placed in an oven at 60°C, and the mixture was heated so that the first reaction curable liquid resin was cured. Thus, a surface layer was formed.

(Example A21)

Then, as shown in Table 7, a mixture of (i) a mixture of the acrylic-based resin (a) (first reaction curable liquid resin) and the diluent (a) and (ii) the photoradical initiator mixed solution was prepared. The photoradical initiator mixed solution was used in an amount of 2 parts by weight relative to 100 parts by weight of the mixture of the acrylic-based resin (a) and the diluent (a).

Next, the prepared mixture was poured into a polypropylene tray so as to have a thickness of approximately 1.5 mm. Subsequently, the ultraviolet irradiation device was used in air to carry out ultraviolet irradiation so that the first reaction curable liquid resin was cured. Thus, a cured product that can serve as a surface layer (can also be referred to as a "bottom surface side surface layer") was formed. On the cured product (bottom surface side surface layer), a solidified product of the inorganic latent heat storage material composition (PCM (A1)) (A) obtained in Production Example A1 was placed. The solidified product was a size smaller than the cured product. Next, a mixture identical to the mixture used to form the bottom surface side surface layer was poured into the polypropylene tray from above the heat storage material. Here, the mixture was poured into the polypropylene tray so as to (a) completely cover the heat storage material, i.e., completely cover the interface with external air in the heat storage material and (b) have a thickness of approximately 1 mm. Subsequently, the ultraviolet irradiation device was used in air to irradiate the poured mixture with ultraviolet rays so that the first reaction curable liquid resin was cured. Thus, surface layers (can also be referred to as "upper surface side and lateral surface side surface layers") were formed.

(Examples A22 and A23)

Then, as shown in Table 7, a mixture of the silicone-based resin (c) (first reaction curable liquid resin) and the curing agent (AP-8, manufactured by DAIHACHI CHEMICAL INDUSTRY CO., LTD.) was prepared. The curing agent was used in an amount of 2 parts by weight relative to 100 of the first reaction curable liquid resin. Next, the prepared mixture was poured into a polypropylene tray so as to have a thickness of approximately 1.5 mm. Subsequently, the polypropylene tray was placed in an oven at 60°C, and the mixture was heated so that the first reaction curable liquid resin was cured. Thus, a cured product that can serve as a surface layer (can also be referred to as a "bottom surface side surface layer") was formed. On the cured product (bottom surface side surface layer), a solidified product of the inorganic latent heat storage material composition (PCM (A1)) (A) obtained in Production Example A1 was placed. The solidified product was a size smaller than the cured product. Next, a mixture identical to the mixture used to form the bottom surface side surface layer was poured into the polypropylene tray from above the heat storage material. Here, the mixture was poured into the polypropylene tray so as to (a) completely cover the heat storage material, i.e., completely cover the interface with external air in the heat storage material and (b) have a thickness of approximately 1 mm. Subsequently, the polypropylene tray was placed in an oven at 60°C, and the mixture was heated so that the first reaction curable liquid resin was cured. Thus, surface layers (can also be referred to as "upper surface side and lateral surface side surface layers") were formed.

(Examples A24 and A25)

Then, as shown in Table 7, a mixture of the silicone-based resin (c) (first reaction curable liquid resin) and the curing agent (AP-8, manufactured by DAIHACHI CHEMICAL INDUSTRY CO., LTD.) was prepared. The curing agent was used in an amount of 2 parts by weight relative to 100 of the first reaction curable liquid resin. Next, the prepared mixture was poured into a polypropylene tray so as to have a thickness of approximately 1.5 mm. Subsequently, the polypropylene tray was placed in an oven at 60°C, and the mixture was heated so that the first reaction curable liquid resin was cured. Thus, a cured product that can serve as a surface layer (can also be referred to as a "bottom surface side surface layer") was formed.

The inorganic latent heat storage material composition (PCM (A1)) (A) obtained in Production Example A1 and the silicone-based resin (c) (second reaction curable liquid resin (B)) were mixed in accordance with a corresponding one of the weight ratios shown in Table 7, so that a heat storage material was obtained. Next, a curing agent (AP-8, manufactured by DAIHACHI CHEMICAL INDUSTRY CO., LTD.) was added to the heat storage material so as to have 2 parts by weight relative to 100 parts by weight of the silicone-based resin (c) (second reaction curable liquid resin (B)). A resultant mixture was further mixed so that the heat storage material containing the curing agent was obtained. Subsequently, the heat storage material obtained was placed in an oven at 60°C, and the heat storage material was heated so that the second reaction curable liquid resin (B) contained in the heat storage material was cured. The resultant heat storage material was solidified, so that a solidified product was obtained.

Next, the solidified product obtained was placed on the cured product (bottom surface side surface layer) in the polypropylene tray. The solidified product was a size smaller than the cured product. Next, a mixture identical to the mixture used to form the bottom surface side surface layer was poured into the polypropylene tray from above the heat

storage material. Here, the mixture was poured into the polypropylene tray so as to (a) completely cover the heat storage material, i.e., completely cover the interface with external air in the heat storage material and (b) have a thickness of approximately 1 mm. Subsequently, the polypropylene tray was placed in an oven at 60°C, and the mixture was heated so that the first reaction curable liquid resin was cured. Thus, surface layers (can also be referred to as "upper surface side and lateral surface side surface layers") were formed.

(Comparative Example A1)

The inorganic latent heat storage material composition (PCM (A1)) (A) obtained in Production Example A1 and the silicone-based resin (c) as the second reaction curable liquid resin (B) were sufficiently mixed in accordance with a corresponding one of the weight ratios shown in Table 6, so that a latent heat storage material-containing resin composition was obtained. Next, a curing agent (AP-10, manufactured by DAIHACHI CHEMICAL INDUSTRY CO., LTD.) was added to the latent heat storage material-containing resin composition so as to have 2 parts by weight relative to 100 parts by weight of the silicone-based resin (c) (second reaction curable liquid resin (B)). A resultant mixture was further mixed so that the latent heat storage material-containing resin composition containing the curing agent was obtained. Subsequently, the latent heat storage material-containing resin composition obtained was poured into a polypropylene tray. The polypropylene tray was placed in an oven at 60°C, and the latent heat storage material-containing resin composition was heated so as to be cured. Thus, a cured product of the latent heat storage material-containing resin composition was obtained. In Comparative Example A1, no surface layer containing a cured product of the first reaction curable liquid resin was formed.

(Comparative Example A2)

The acrylic-based resin (e) (mixture of the first reaction curable liquid resin and the photoradical initiator) was poured into a polypropylene tray so as to have a thickness of approximately 1.5 mm. Subsequently, the ultraviolet irradiation device was used in air to carry out ultraviolet irradiation so that the first reaction curable liquid resin was cured. Thus, a cured product that can serve as a surface layer (can also be referred to as a "bottom surface side surface layer") was formed. On the cured product (bottom surface side surface layer), a solidified product of the inorganic latent heat storage material composition (PCM (A1)) (A) obtained in Production Example A1 was placed. The solidified product was a size smaller than the cured product. Next, the acrylic-based resin (e) was poured into the polypropylene tray from above the heat storage material. Here, the acrylic-based resin (e) was poured into the polypropylene tray so as to (a) completely cover the heat storage material, i.e., completely cover the interface with external air in the heat storage material and (b) have a thickness of approximately 1 mm. Subsequently, the ultraviolet irradiation device was used in air to irradiate the poured acrylic-based resin (e) with ultraviolet rays so that the first reaction curable liquid resin was cured. Thus, surface layers (can also be referred to as "upper surface side and lateral surface side surface layers") were formed.

(Comparative Example A3)

A pinholder was used to prepare a polyethylene bag (Unipack (Registered Trademark), with dimensions of 140 mm in length, 100 mm in width, and 0.04 mm in thickness) having one side on which holes made. In Comparative Example A3, the pinholder used in the section (Evaluation of surface layer after perforation by puncture) was used. The inorganic latent heat storage material composition (PCM (A1)) (A) obtained in Production Example A1 was solidified in a refrigerator, so that a solidified product was obtained. The solidified product was placed in the prepared polyethylene bag. Here, the solidified product was placed in the polyethylene bag so that the side of the polyethylene bag on which side the holes had been made would be the upper side of the solidified material. An opening of the polyethylene bag was heat sealed. After 5 minutes since the holes were made in the polyethylene bag with use of the pinholder, it was observed that the holes made in the polyethylene bag were not closed but remained open.

[Table 2]

| | | | | | Example A1 | Example A2 | Example A3 |
|---|---|---|---|---|---|---|---|
| Heat storage material | Component | Inorganic latent heat storage material composition (PCM) (A) | PCM (A1): Production Example A1 | weight% | 30 | 40 | 50 |
| | | | PCM (A2): Production Example A2 | | - | - | - |
| | | Second reaction curable liquid resin (B) | Acrylic-based resin (a) | | 70 | 60 | 50 |
| | | | Diluent (a) | | - | - | - |
| | | | Polyisobutylene-based resin (b) | | - | - | - |
| | | | Diluent (b) | | - | - | - |
| | | | Silicone-based resin (c) | | - | - | - |
| | | | Acrylic-based resin (d) | | - | - | - |
| | Physical properties | Type E viscosity difference between (A) and (B) | | Pa·s | <60 | <60 | <60 |
| Latent heat storage material | Component | Surface layer (first reaction curable liquid resin) | | - | Acrylic-based resin (a) | | |
| | Physical properties | Moisture absorption rate | 40°C / 90 RH% / 2 hours | % | 0 | 0.5 | 2.4 |
| | | | 40°C / 90 RH% / 8 hours | % | 1.3 | 2.1 | 6.3 |
| | | Moisture absorbency | | - | VG | VG | G |

[Table 2] cont.

| | | | | | Example A4 | Example A5 |
|---|---|---|---|---|---|---|
| Heat storage material | Component | Inorganic latent heat storage material composition (PCM) (A) | PCM (A1): Production Example A1 | weight% | 60 | - |
| | | | PCM (A2): Production Example A2 | | - | 30 |
| | | Second reaction curable liquid resin (B) | Acrylic-based resin (a) | | 40 | 70 |
| | | | Diluent (a) | | - | - |
| | | | Polyisobutylene-based resin (b) | | - | - |
| | | | Diluent (b) | | - | - |
| | | | Silicone-based resin (c) | | - | - |
| | | | Acrylic-based resin (d) | | - | - |
| | Physical properties | Type E viscosity difference between (A) and (B) | | Pa·s | <60 | <20 |
| Latent heat storage material | Component | Surface layer (first reaction curable liquid resin) | | - | Acrylic-based resin (a) | |
| | Physical properties | Moisture absorption rate | 40°C / 90 RH% / 2 hours | % | 2.7 | 1.5 |
| | | | 40°C / 90 RH% / 8 hours | % | 7.4 | 4.7 |
| | | Moisture absorbency | | - | G | VG |

[Table 3]

| | | | | | Example A6 | Example A7 | Example A8 |
|---|---|---|---|---|---|---|---|
| Heat storage material | Component | Inorganic latent heat storage material composition (PCM) (A) | PCM (A1): Production Example A1 | weight% | - | - | - |
| | | | PCM (A2): Production Example A2 | | 40 | 50 | 60 |
| | | Second reaction curable liquid resin (B) | Acrylic-based resin (a) | | 60 | 50 | 40 |
| | | | Diluent (a) | | - | - | - |
| | | | Polyisobutylene-based resin (b) | | - | - | - |
| | | | Diluent (b) | | - | - | - |
| | | | Silicone-based resin (c) | | - | - | - |
| | | | Acrylic-based resin (d) | | - | - | - |
| | Physical properties | Type E viscosity difference between (A) and (B) | | Pa·s | <20 | <20 | <20 |
| Latent heat storage material | Component | Surface layer (first reaction curable liquid resin) | | - | Acrylic-based resin (a) | | |
| | Physical properties | Moisture absorption rate | 40°C / 90 RH% / 2 hours | % | 1.1 | 1.6 | 1.4 |
| | | | 40°C / 90 RH% / 8 hours | % | 4.5 | 3.8 | 4.3 |
| | | Moisture absorbency | | - | VG | VG | VG |

[Table 3] cont.

| | | | | | Example A9 | Example A10 |
|---|---|---|---|---|---|---|
| Heat storage material | Component | Inorganic latent heat storage material composition (PCM) (A) | PCM (A1): Production Example A1 | weight% | 30 | 30 |
| | | | PCM (A2): Production Example A2 | | - | - |
| | | Second reaction curable liquid resin (B) | Acrylic-based resin (a) | | 61 | - |
| | | | Diluent (a) | | 9 | - |
| | | | Polyisobutylene-based resin (b) | | - | 61 |
| | | | Diluent (b) | | - | 9 |
| | | | Silicone-based resin (c) | | - | - |
| | | | Acrylic-based resin (d) | | - | - |
| | Physical properties | Type E viscosity difference between (A) and (B) | | Pa·s | <40 | <60 |
| Latent heat storage material | Component | Surface layer (first reaction curable liquid resin) | | - | Acrylic-based resin (a) / diluent (a) =7/1 | Polyisobutylene-based resin (b) / diluent (b) =7/1 |
| | Physical properties | Moisture absorption rate | 40°C / 90 RH% / 2 hours | % | 0.4 | 0.2 |
| | | | 40°C / 90 RH% / 8 hours | % | 1.7 | 0.7 |
| | | Moisture absorbency | | - | VG | VG |

[Table 4]

| | | | | | Example A11 | Example A12 | Example A13 |
|---|---|---|---|---|---|---|---|
| Heat storage material | Component | Inorganic latent heat storage material composition (PCM) (A) | PCM (A1): Production Example A1 | weight% | 30 | 40 | 50 |
| | | | PCM (A2): Production Example A2 | | - | - | - |
| | | Second reaction curable liquid resin (B) | Acrylic-based resin (a) | | - | - | - |
| | | | Diluent (a) | | - | - | - |
| | | | Polyisobutylene-based resin (b) | | - | - | - |
| | | | Diluent (b) | | - | - | - |
| | | | Silicone-based resin (c) | | 70 | 60 | 50 |
| | | | Acrylic-based resin (d) | | - | - | - |
| | Physical properties | Type E viscosity difference between (A) and (B) | | Pa·s | <20 | <20 | <20 |
| Latent heat storage material | Component | Surface layer (first reaction curable liquid resin) | | - | Silicone-based resin (c) | | |
| | Physical properties | Moisture absorption rate | 40°C / 90 RH% / 2 hours | % | 2.2 | 2.7 | 3.6 |
| | | | 40°C / 90 RH% / 8 hours | % | 7.1 | 7.8 | 8.2 |
| | | Moisture absorbency | | - | G | G | G |

[Table 4] cont.

| | | | | | Example A14 | Example A15 |
|---|---|---|---|---|---|---|
| Heat storage material | Component | Inorganic latent heat storage material composition (PCM) (A) | PCM (A1): Production Example A1 | weight% | 60 | - |
| | | | PCM (A2): Production Example A2 | | - | 30 |
| | | Second reaction curable liquid resin (B) | Acrylic-based resin (a) | | - | - |
| | | | Diluent (a) | | - | - |
| | | | Polyisobutylene-based resin (b) | | - | - |
| | | | Diluent (b) | | - | - |
| | | | Silicone-based resin (c) | | 40 | 70 |
| | | | Acrylic-based resin (d) | | - | - |
| | Physical properties | Type E viscosity difference between (A) and (B) | | Pa·s | <20 | <20 |
| Latent heat storage material | Component | Surface layer (first reaction curable liquid resin) | | - | Silicone-based resin (c) | |
| | Physical properties | Moisture absorption rate | 40°C / 90 RH% / 2 hours | % | 4.0 | 3.9 |
| | | | 40°C / 90 RH% / 8 hours | % | 11.6 | 10.4 |
| | | Moisture absorbency | | - | G | G |

[Table 5]

| | | | | | Example A16 | Example A17 | Example A18 |
|---|---|---|---|---|---|---|---|
| Heat storage material | Component | Inorganic latent heat storage material composition (PCM) (A) | PCM (A1): Production Example A1 | weight% | - | - | - |
| | | | PCM (A2): Production Example A2 | | 40 | 50 | 60 |
| | | Second reaction curable liquid resin (B) | Acrylic-based resin (a) | | - | - | - |
| | | | Diluent (a) | | - | - | - |
| | | | Polyisobutylene-based resin (b) | | - | - | - |
| | | | Diluent (b) | | - | - | - |
| | | | Silicone-based resin (c) | | 60 | 50 | 40 |
| | | | Acrylic-based resin (d) | | - | - | - |
| | Physical properties | Type E viscosity difference between (A) and (B) | | Pa·s | <20 | <20 | <20 |
| Latent heat storage material | Component | Surface layer (first reaction curable liquid resin) | | - | Silicone-based resin (c) | | |
| | Physical properties | Moisture absorption rate | 40°C / 90 RH% / 2 hours | % | 3.2 | 3.6 | 2.8 |
| | | | 40°C / 90 RH% / 8 hours | % | 9.8 | 9.4 | 7.7 |
| | | Moisture absorbency | | - | G | G | G |

[Table 5] cont.

| | | | | | Example A19 | Example A20 |
|---|---|---|---|---|---|---|
| Heat storage material | Component | Inorganic latent heat storage material composition (PCM) (A) | PCM (A1): Production Example A1 | weight% | 60 | 60 |
| | | | PCM (A2): Production Example A2 | | - | - |
| | | Second reaction curable liquid resin (B) | Acrylic-based resin (a) | | - | - |
| | | | Diluent (a) | | - | - |
| | | | Polyisobutylene-based resin (b) | | - | - |
| | | | Diluent (b) | | - | - |
| | | | Silicone-based resin (c) | | - | 40 |
| | | | Acrylic-based resin (d) | | 40 | - |
| | Physical properties | Type E viscosity difference between (A) and (B) | | Pa·s | <20 | <20 |
| Latent heat storage material | Component | Surface layer (first reaction curable liquid resin) | | - | Acrylic-based resin (a) / diluent (a) =7/1 | Acrylic-based resin (d) |
| | Physical properties | Moisture absorption rate | 40°C / 90 RH% / 2 hours | % | 0.8 | 0.8 |
| | | | 40°C / 90 RH% / 8 hours | % | 1.6 | 1.9 |
| | | Moisture absorbency | | - | VG | VG |

[Table 6]

<table>
<tr><td colspan="5"></td><td>Comparative Example A1</td></tr>
<tr><td rowspan="12">Heat storage material</td><td rowspan="8">Component</td><td rowspan="2">Inorganic latent heat storage material composition (PCM) (A)</td><td>PCM (A1): Production Example A1</td><td rowspan="8">weight%</td><td>60</td></tr>
<tr><td>PCM (A2): Production Example A2</td><td>-</td></tr>
<tr><td rowspan="6">Second reaction curable liquid resin (B)</td><td>Acrylic-based resin (a)</td><td>-</td></tr>
<tr><td>Diluent (a)</td><td>-</td></tr>
<tr><td>Polyisobutylene-based resin (b)</td><td></td></tr>
<tr><td>Diluent (b)</td><td>-</td></tr>
<tr><td>Silicone-based resin (c)</td><td>40</td></tr>
<tr><td>Acrvlic-based resin (d)</td><td>-</td></tr>
<tr><td rowspan="4">Physical properties</td><td colspan="2">Type E viscosity difference between (A) and (B)</td><td>Pa·s</td><td><20</td></tr>
<tr><td rowspan="2">Moisture absorption rate</td><td>40°C / 90 RH% / 2 hours</td><td>%</td><td>21.4</td></tr>
<tr><td>40°C / 90 RH% / 8 hours</td><td>%</td><td>69.1</td></tr>
<tr><td colspan="2">Moisture absorbency</td><td>-</td><td>VP</td></tr>
</table>

[Table 7]

| | | | | | Example A21 | Example A22 | Example A23 |
|---|---|---|---|---|---|---|---|
| Heat storage material | Component | Inorganic latent heat storage material composition (PCM) (A) | PCM (A1): Production Example A1 | weight% | 100 | 100 | 100 |
| | | | PCM (A2): Production Example A2 | | - | - | - |
| | | Second reaction curable liquid resin (B) | Acrylic-based resin (a) | | - | - | - |
| | | | Diluent (a) | | - | - | - |
| | | | Polyisobutylene-based resin (b) | | - | - | - |
| | | | Diluent (b) | | - | - | - |
| | | | Silicone-based resin (c) | | - | - | - |
| | | | Acrylic-based resin (d) | | - | - | - |
| | Physical properties | Type E viscosity difference between (A) and (B) | | Pa·s | - | - | - |
| Latent heat storage material | Component | Surface layer (first reaction curable liquid resin) | | - | Acrylic-based resin (a) / diluent (a) =7/1 | Silicone-based resin (c) | Silicone-based resin (c) |
| | Physical properties | Evaluation of surface layer after perforation by puncture | Crack and/or fracture | - | Absent | Absent | Perforation by puncture was not carried out |
| | | | Hole | - | Absent | Absent | |
| | | Moisture absorption rate | 40°C / 90 RH% / 2 hours | % | 0.5 | 1.4 | 1.6 |
| | | | 40°C / 90 RH% / 6 hours | % | 1.1 | 3.0 | 3.1 |
| | | Moisture absorbency | | - | VG | VG | VG |
| | | Usability determination | | - | VG | VG | VG |

[Table 7] cont.

| | | | | | Example A24 | Example A25 |
|---|---|---|---|---|---|---|
| Heat storage material | Component | Inorganic latent heat storage material composition (PCM) (A) | PCM (A1): Production Example A1 | weight% | 60 | 60 |
| | | | PCM (A2): Production Example A2 | | - | - |
| | | Second reaction curable liquid resin (B) | Acrylic-based resin (a) | | - | - |
| | | | Diluent (a) | | - | - |
| | | | Polyisobutylene-based resin (b) | | - | - |
| | | | Diluent (b) | | - | - |
| | | | Silicone-based resin (c) | | 40 | 40 |
| | | | Acrylic-based resin (d) | | - | - |
| | Physical properties | Type E viscosity difference between (A) and (B) | | Pa·s | <20 | <20 |
| Latent heat storage material | Component | Surface layer (first reaction curable liquid resin) | | - | Silicone-based resin (c) | Silicone-based resin (c) |
| | Physical properties | Evaluation of surface layer after perforation by puncture | Crack and/or fracture | - | Absent | Perforation by puncture was not carried out |
| | | | Hole | - | Absent | |
| | | Moisture absorption rate | 40°C / 90 RH% / 2 hours | % | 1.1 | 1.3 |
| | | | 40°C / 90 RH% / 6 hours | % | 2.1 | 2.8 |
| | | Moisture absorbency | | - | VG | VG |
| | | Usability determination | | - | VG | VG |

[Table 8]

| | | | | | Comparative Example A2 | Comparative Example A3 |
|---|---|---|---|---|---|---|
| Heat storage material | Component | Inorganic latent heat storage material composition (PCM) (A) | PCM (A1): Production Example A1 | weight% | 100 | 100 |
| | | | PCM (A2): Production Example A2 | | - | - |
| | | Second reaction curable liquid resin (B) | Acrylic-based resin (a) | | - | - |
| | | | Diluent (a) | | - | - |
| | | | Polyisobutylene-based resin (b) | | - | - |
| | | | Diluent (b) | | - | - |
| | | | Silicone-based resin (c) | | - | - |
| | | | Acrylic-based resin (d) | | - | - |
| | Physical properties | Type E viscosity difference | between (A) and (B) | Pa·s | - | - |
| Latent heat storage material | Component | Surface layer (first reaction | curable liquid resin) | - | Acrylic-based resin (e) | Polyethylene bag |
| | Physical properties | Evaluation of surface layer after perforation by puncture | Crack and/or fracture | - | Present | It was observed that a hole made in the |
| | | | Hole | - | Present | polyethylene bag was not closed after 5 minutes. |
| | | Moisture absorption rate | 40°C / 90 RH% / 2 hours | % | - | - |
| | | | 40°C / 90 RH% / 6 hours | % | - | - |
| | | Moisture absorbency | | - | - | - |
| | | Usability determination | | - | P | P |

<Results>

As shown in Tables 2 to 5, the latent heat storage materials shown in Examples A1 to A20 each had the surface layer containing the cured product of the first reactive liquid resin in addition to the heat storage material. As shown in Table 1, such a surface layer had (i) a type E hardness value of not more than 50, (ii) a 100% modulus of not more than 0.50 MPa (N/mm$^2$), and (iii) an elongation percentage at break of not less than 100%. That is, the latent heat storage materials shown in Examples A1 to A20 each had the surface layer included in the scope of the present invention. The latent heat storage materials shown in Examples A1 to A20 each had a 2-hour moisture absorption rate of less than 5% and an 8-hour moisture absorption rate of less than 12%. That is, the latent heat storage materials shown in Examples A1 to A20 each had a moisture absorbency that was evaluated as "G (good)" or "VG (very good)".

In contrast, as shown in Table 6, the heat storage material shown in Comparative Example A1 and having no surface layer had a 2-hour moisture absorption rate of not less than 8% and had an 8-hour moisture absorption rate of not less than 15%. That is, the heat storage material shown in Comparative Example A1 had a moisture absorbency

that was evaluated as "VP (very poor)".

In each of the latent heat storage materials of Examples A21, A22, and A24, it was observed that after perforation by puncture, the surface layer was not broken and the holes were repaired and closed. This is considered to be because of the following reason. Specifically, in each of the latent heat storage materials of Examples A21, A22, and A24, the surface layer of the latent heat storage material had a specific type E hardness value, a specific 100% modulus, and a specific elongation percentage at break. This allowed the surface layer of the latent heat storage material to be soft and viscous. As a result, as shown in Table 7, the latent heat storage materials shown in Examples A21, A22, and A24 had a good or very good moisture absorbency, though the latent heat storage materials had been subjected to perforation by puncture.

Note here that the latent heat storage materials of Examples A23 and A25 are identical in makeup to the respective latent heat storage materials of Examples A22 and A24 and had not been subjected to perforation by puncture. In each of the latent heat storage materials of Examples A22 and A24, it was observed that after perforation by puncture, the surface layer was not broken and the holes were repaired and closed. This allowed the latent heat storage materials of Examples A22 and A24 to be not higher but lower in moisture absorption rate as compared with Examples A23 and A25.

In contrast, in the latent heat storage material shown in Comparative Example A2, it was observed that after perforation by puncture, the surface layer was broken and the holes were not repaired. This is considered to be because the surface layer of the latent heat storage material of Comparative Example A2 is hard and is not viscous. As a result, as shown in Table 8, the latent heat storage material shown in Comparative Example A2 and having been subjected to perforation by puncture had a poor moisture absorbency. Furthermore, the heat storage material shown in Comparative Example A3 has no surface layer and is contained in the polyethylene bag in which the holes are made. As a result, the heat storage material shown in Comparative Example A3 had a poor moisture absorbency.

[Examples B]

The following description will discuss Examples B of the second embodiment of the present invention. The second embodiment of the present invention is not limited to these Examples B.

Examples B of the present invention used the following resins and diluents.

- Acrylic-based resin (a): RC500C (manufactured by KANEKA CORPORATION)
- Polyisobutylene-based resin (b): EP400V (manufactured by KANEKA CORPORATION)
- Acrylic-based resin (c): Hayacoat UV (manufactured by Sunhayato Corp.)
- Urethane-based resin (d): Poly bd R-45HT (polyol manufactured by Idemitsu Kosan Co., Ltd.), Millionate MTL (isocyanate manufactured by Tosoh Corporation)
- Urethane-based resin (e): Poly ip (polyol manufactured by Idemitsu Kosan Co., Ltd.), Millionate MTL (isocyanate manufactured by Tosoh Corporation)
- Epoxy-based resin (f): main agent: M-100 (epoxy resin manufactured by MITSUBISHI GAS CHEMICAL COMPANY, INC.), curing agent: C-93 (epoxy curing agent manufactured by MITSUBISHI GAS CHEMICAL COMPANY, INC.)
- Silicone-based resin (g): SAX220 (manufactured by KANEKA CORPORATION)
- Diluent (a): MM100C (manufactured by KANEKA CORPORATION)
- Diluent (b): Isostearyl alcohol (manufactured by OSAKA ORGANIC CHEMICAL INDUSTRY LTD)

(Measurement of water vapor permeability of cured product of third reaction curable liquid resin)

A cured product of the third reaction curable liquid resins was prepared. Specifically, the cured product was prepared by a curing method identical to the methods described in Examples B and Comparative Examples B below, except that the third reaction curable liquid resin was not mixed with the inorganic latent heat storage material composition. Next, a water vapor permeability of the cured product thus prepared (having a thickness of approximately 1 mm) was measured in conformity to JIS K 7126-1 (a differential pressure method) at 40°C and a humidity of 90%. Table 9 shows results of the measurement.

[Table 9]

| | | Water vapor permeability of cured product (g/$m^2$ per day) |
|---|---|---|
| Third reaction curable liquid resin (B) | Acrylic-based resin (a) | <80 |
| | Polyisobutylene-based resin (b) | <80 |
| | Acrylic-based resin (c) | <10 |
| | Urethane-based resin (d) | <80 |
| | Urethane-based resin (e) | <80 |
| | Epoxy-based resin (f) | <10 |
| | Silicone-based resin (g) | Unmeasurable due to exceeding measurement limit (>500) |

(Measurement of viscosity by oscillational viscometer)

A tuning fork vibration rheometer (model: RV-10000A manufactured by A&D Company, Limited, and having a characteristic frequency of 30 Hz) was used to measure a viscosity (Pa·s) of the inorganic latent heat storage material composition at a temperature that is 24°C to 30°C higher than the melting temperature of the inorganic latent heat storage material composition.

(Measurement of viscosity by type E (cone-plate type) rotational viscometer)

A type E rotational viscometer (model: TV-25, manufactured by Toki Sangyo Co., Ltd) and a constant-temperature water bath (model: VM-150III, manufactured by Toki Sangyo Co., Ltd) were used to measure a viscosity (Pa·s) of the inorganic latent heat storage material composition or the third reaction curable liquid resin at a temperature that is 24°C to 30°C higher than the melting temperature of the inorganic latent heat storage material composition.

(Calculation of moisture absorption rate by moisture absorption test)

A polypropylene tray containing the latent heat storage material-containing resin cured product obtained in each of Examples B or Comparative Examples B below was allowed to age for 1 hour in a thermohygrostat (manufactured by Nagano Science Co., Ltd.) at 40°C and a humidity 90%. The term "aging" herein can also be referred to as "standing". Then, the moisture absorption rate (%) was calculated in accordance with Equation (6) below. Note that "the weight of the latent heat storage material-containing resin cured product" is a value obtained by (i) measuring, before and after aging, the weight of the polypropylene tray containing the latent heat storage material-containing resin cured product and (ii) subtracting, from a measured value of the weight, the weight of the polypropylene tray containing no latent heat storage material-containing resin cured product.

Moisture absorption rate (%) = (weight of latent heat storage material-containing resin cured product after aging) - (weight of latent heat storage material-containing resin cured product before aging) / (amount of inorganic latent heat storage material composition contained in latent heat storage material-containing resin cured product) × 100 (%) ... Equation (6)

Here, respective cured products (a) to (g) of the reaction curable liquid resins (a) to (g) were prepared. Specifically, the cured product was prepared by a curing method identical to the methods described in Examples B and Comparative Examples B below, except that the third reaction curable liquid resin was not mixed with the inorganic latent heat storage material composition. For each of the cured products (a) to (g) thus prepared, the weight obtained before and after aging was measured by a method similar to that described earlier. Results of the measurement show that the weight did not change before and after aging. That is, the respective cured products (a) to (g) of the reaction curable liquid resins (a) to (g) had a moisture absorption rate of 0%, and the above-obtained moisture absorption rate of the latent heat storage material-containing resin composition can be said to be a moisture absorption rate of the inorganic latent heat storage material contained in the latent heat storage material-containing resin composition.

(Evaluation of moisture absorbency)

Moisture absorbency (can also be referred to as moisture resistance) of the latent heat storage material-containing resin cured product was evaluated by the criteria below in accordance with the moisture absorption rate of the latent heat storage material-containing resin cured product, the moisture absorption rate having been calculated by the moisture absorption test.

VG (very good): The latent heat storage material-containing resin cured product has a moisture absorption rate of less than 6%.
G (good): The latent heat storage material-containing resin cured product has a moisture absorption rate of not less than 6% and less than 8%.
P (poor): The latent heat storage material-containing resin cured product has a moisture absorption rate of not less than 8%.

(Evaluation of cured state)

A cured state of the latent heat storage material-containing resin cured product, which had been obtained in each of Examples B below or each of Comparative Examples B below, in the polypropylene tray was checked. Specifically, the cured state was checked as below. The latent heat storage material-containing resin composition was reaction-cured by heating or ultraviolet irradiation. Thereafter, a resultant cured product was allowed to age for not less than 24 hours in an atmosphere at room temperature and in a closed vessel, and then the cured product was perpendicularly punctured with a needle-shaped bar having a diameter of 1 mm. Subsequently, the bar was removed from the cured product and visually checked for the presence of an adhered matter on the bar. When the bar had any adhered matter thereon, it was determined that there was a part which was not cured, i.e., an uncured part. From a result obtained through the checking, the cured state was evaluated by the criteria below. "P" and "G" were regarded as "passed".

G (good): Both a surface and a deep part of the latent heat storage material-containing resin cured product are cured.
P (passed): The surface of the latent heat storage material-containing resin cured product is cured, but the deep part of the latent heat storage material-containing resin cured product has an uncured part.
P (poor): The latent heat storage material-containing resin composition is as it is and is not cured.

(Cycle test)

An inorganic latent heat storage material composition (PCM (B1)) contained in the polypropylene tray or the polypropylene tray obtained in Example B4 or Comparative Example B4 and containing the latent heat storage material-containing resin cured product was used for the cycle test. Such a tray was allowed to stand in a thermoregulated bath (manufactured by Nagano Science Co., Ltd.) so as to be subjected to five cycles in total in a temperature range of 0°C to 50°C assuming that the temperature is increased or decreased at a rate of 0.5°C/min in each of the cycles. During the increase in temperature in the fifth cycle, a change in temperature with respect to time of the inorganic latent heat storage material composition (PCM (B1)) or the latent heat storage material-containing resin cured product in the thermoregulated bath was plotted assuming that the horizontal axis represents time and the vertical axis represents temperature. Figs. 4 and 5 show results of the plotting.

(Production Example B1: Preparation of inorganic latent heat storage material composition PCM (B1))

To a 1 L intensive mixer (manufactured by Nippon Eirich Co., Ltd.), 117.6 g of water, 44.1 g of sodium bromide (a melting point adjusting agent), 14.3 g of sodium chloride (a supercooling inhibitor), and 4.2 g of strontium chloride hexahydrate (the supercooling inhibitor) were added. The materials added were mixed until each salt was completely

dissolved, so that a mixed solution was obtained. To the mixed solution obtained, 6.2 g of hydroxyethyl cellulose (a thickener) and 1.1 g of sodium benzoate (a preservative) were added so as to be dispersed in a short time. Then, 4.2 g of a fatty acid mixture (Nsp) (an auxiliary thickening agent, manufactured by Hope Chemical Co., LTD.) was added so as to be dispersed in a short time. Finally, to a resultant mixed solution, 240. 0 g of calcium chloride hexahydrate (a latent heat storage material) was added. Then, while being heated (up to 70°C), a resultant mixture was stirred until the solution had a sufficiently increased viscosity. Thus, the inorganic latent heat storage material composition (PCM (B1)) was obtained.

The inorganic latent heat storage material composition (PCM (B1)) obtained had a molar ratio of 1:0.26 between the calcium chloride hexahydrate and the sodium bromide. Furthermore, the inorganic latent heat storage material composition (PCM (B1)) had a melting temperature of approximately 23°C and was not separated into solid and liquid fractions even at 70°C. Moreover, the inorganic latent heat storage material composition (PCM (B1)) had a viscosity, as measured by a type E rotational viscometer, of approximately 44 Pa·s at a temperature that is 24°C to 30°C higher than the melting temperature of the inorganic latent heat storage material composition.

A differential scanning calorimeter (SII EXSTAR6000 DSC manufactured by Seiko Instruments Inc.) was used to obtain a DSC curve by increasing the temperature of the PCM (B1) from -20°C to 50°C at a rate of 3.0°C/min and then decreasing the temperature from 50°C to -20°C at a rate of 3.0°C/min. The melting latent heat quantity obtained at or near the melting temperature in the DSC curve obtained was 141 J/g.

(Production Example B2: PCM (B2))

Production Example B2 obtained an inorganic latent heat storage material composition (PCM (B2)) by carrying out operations identical to those carried out in Production Example B1, except that Production Example B2 changed, to 12.5 g, the amount of the hydroxyethyl cellulose (thickener) added in Production Example B1.

The inorganic latent heat storage material composition (PCM (B2)) obtained had a molar ratio of 1:0.26 between the calcium chloride hexahydrate and the sodium bromide. Furthermore, the inorganic latent heat storage material composition (PCM (B2)) had a melting temperature of approximately 23°C and was not separated into solid and liquid fractions even at 70°C. Moreover, the inorganic latent heat storage material composition (PCM (B2)) had a viscosity, as measured by a type E rotational viscometer, of approximately 83 Pa·s at a temperature that is 24°C to 30°C higher than the melting temperature of the inorganic latent heat storage material composition.

(Examples B1 to B10)

The inorganic latent heat storage material composition (PCM (B1) or PCM (B2)) obtained in Production Example B1 or B2 and each third reaction curable liquid resin and the each third reaction curable liquid resin (B) optionally containing a diluent were mixed in accordance with a corresponding one of the weight ratios shown in Tables 10 and 11, so that a latent heat storage material-containing resin composition was obtained. Next, as a photoradical initiator, (i) 2 parts by weight of IRGACURE 1173 (2-hydroxy-2-methyl-1-phenylpropane-1-on, manufactured by BASF Japan Ltd.) relative to 100 parts by weight of the reaction curable resin (B) as a whole and (ii) 1 part by weight of IRGACURE 819 (bis(2,4,6-trimethylbenzoyl)-phenylphosphine oxide, manufactured by BASF Japan Ltd.) relative to 100 parts by weight of the third reaction curable liquid resin (B) as a whole were mixed and dissolved in advance. Thus, a photoradical initiator mixed solution was obtained. The photoradical initiator mixed solution was added to the latent heat storage material-containing resin composition, and a resultant mixture was sufficiently mixed so that the latent heat storage material-containing resin composition containing the initiator was obtained. The latent heat storage material-containing resin composition obtained was poured into a polypropylene tray. A ultraviolet irradiation device (model: LC-6B, manufactured by Fusion UV Systems Japan K.K.) was used in air to irradiate the latent heat storage material-containing resin composition thus poured with ultraviolet rays so as to cure the latent heat storage material-containing resin composition. Thus, a latent heat storage material-containing resin cured product was obtained.

The cycle test (described earlier) was carried out with respect to (i) the latent heat storage material-containing resin cured product of Example B4 before and after the moisture absorption test and (ii) the inorganic latent heat storage material composition. Fig. 4 shows results of the cycle test.

(Example B11)

The inorganic latent heat storage material composition (PCM (B1)) obtained in Production Example B1 and an acrylic-based resin (c), which is the third reaction curable liquid resin, were mixed in accordance with a corresponding one of the weight ratios shown in Table 11 so that a resultant mixture was sufficiently stirred. Thus, a latent heat storage material-containing resin composition was obtained. Then, the latent heat storage material-containing resin composition obtained was poured into a polypropylene mold. An ultraviolet irradiation device identical to those used in Examples B1

to B10 was used in air to irradiate the poured latent heat storage material-containing resin composition with ultraviolet rays so as to cure the latent heat storage material-containing resin composition. Thus, a latent heat storage material-containing resin cured product was obtained.

(Example B 12)

The inorganic latent heat storage material composition (PCM (B1)) obtained in Production Example B1 and Poly bd R-45HT (polyol manufactured by Idemitsu Kosan Co., Ltd.) constituting the urethane-based resin (d) were added and sufficiently mixed. Then, to a resultant mixture, Millionate MTL (isocyanate manufactured by Tosoh Corporation) constituting the urethane-based resin (d) was added. Furthermore, a resultant mixture was stirred, so that a latent heat storage material-containing resin composition was obtained. In the latent heat storage material-containing resin composition, the weight ratio between the PCM and the urethane-based resin (d) was 30/70. Furthermore, dibutyltin dilaurate in an amount of 0.06 parts by weight relative to 100 parts by weight of the urethane-based resin (d) was added, as a curing agent, to the latent heat storage material-containing resin composition, and a resultant mixture was mixed. The latent heat storage material-containing resin composition obtained was poured into a polypropylene tray. The poured latent heat storage material-containing resin composition was cured in air at room temperature, so that a latent heat storage material-containing resin cured product was obtained.

(Example B 13)

The inorganic latent heat storage material composition (PCM (B1)) obtained in Production Example B1 and Poly ip (polyol manufactured by Idemitsu Kosan Co., Ltd.) constituting the urethane-based resin (e), which is the third reaction curable liquid resin, were added and sufficiently mixed. Then, Millionate MTL (isocyanate manufactured by Tosoh Corporation) constituting the urethane-based resin (e), which is the third reaction curable liquid resin, was further added. A resultant mixture was stirred, so that a latent heat storage material-containing resin composition was obtained. In the latent heat storage material-containing resin composition, the weight ratio between the PCM and the urethane-based resin (e) was 30/70 (Table 11). Furthermore, 0.06 parts by weight of dibutyltin dilaurate was added, as a curing agent, to 100 parts by weight of the urethane-based resin (e), and a resultant mixture was sufficiently mixed. Thus, a latent heat storage material-containing composition was obtained. The latent heat storage material-containing composition obtained was poured into a polypropylene tray. The poured latent heat storage material-containing composition was cured in air at room temperature so that the latent heat storage material-containing composition would be cured. Thus, a latent heat storage material-containing resin cured product was obtained.

(Example B 14)

The inorganic latent heat storage material composition (PCM (B1)) obtained in Production Example B1 and M-100 (epoxy resin manufactured by MITSUBISHI GAS CHEMICAL COMPANY, INC.) as a main agent constituting the epoxy-based resin (f) were sufficiently mixed. Next, to a resultant mixture, C-93 (an epoxy curing agent manufactured by MITSUBISHI GAS CHEMICAL COMPANY, INC.) was added as a curing agent constituting the epoxy-based resin (f). A resultant mixture was further mixed, so that a mixture was obtained. In the mixture, the weight ratio between the PCM and the epoxy-based resin (f) was 50/50 (Table 11). The mixture was poured into a polypropylene mold so as to be cured in air at room temperature. Thus, an inorganic latent heat storage material cured product was obtained.

(Comparative Examples B1 to B8)

The inorganic latent heat storage material composition (PCM (B1)) obtained in Production Example B1 or the inorganic latent heat storage material composition (PCM (B2)) obtained in Production Example 2 and the silicone-based resin (g) as the third reaction curable liquid resin (B) were sufficiently mixed in accordance with a corresponding one of the weight ratios shown in Table 12, so that a mixture was obtained. Next, 2 parts by weight of a curing agent (AP-10, manufactured by DAIHACHI CHEMICAL INDUSTRY CO., LTD.) was added to the silicone-based resin so that a resultant mixture was further mixed. The mixture was poured into a polypropylene mold and heated with use of an oven at 60°C so as to be cured. Thus, an inorganic latent heat storage material cured product was obtained.

The cycle test (described earlier) was carried out with respect to (i) the latent heat storage material-containing resin cured product of Comparative Example B4 before and after the moisture absorption test and (ii) the inorganic latent heat storage material composition. Fig. 5 shows results of the cycle test.

[Table 10]

| | | | | | Example B1 | Example B2 | Example B3 | Example B4 |
|---|---|---|---|---|---|---|---|---|
| Latent heat storage material-containing resin composition | Component | Inorganic latent heat storage material composition (PCM) (A) | PCM (B1): Production Example B1 | weight% | 30 | 40 | 50 | 60 |
| | | | PCM (B2): Production Example B2 | | - | - | - | - |
| | | Third reaction curable liquid resin (B) | Acrylic-based resin (a) | | 70 | 60 | 50 | 40 |
| | | | Diluent (a) | | - | - | - | - |
| | | | Polyisobutylene-based resin (b) | | - | - | - | - |
| | | | Diluent (b) | | - | - | - | - |
| | | | Acrylic-based resin (c) | | - | - | - | - |
| | | | Urethane-based resin (d) | | - | - | - | - |
| | | | Urethane-based resin (e) | | - | - | - | - |
| | | | Epoxy-based resin (f) | | - | - | - | - |
| | Physical properties | | Type E viscosity difference between (A) and (B) | Pa·s | <60 | <60 | <60 | <60 |
| Latent heat storage material-containing resin cured product | Physical properties | | Cured state | - | G | G | P | P |
| | | | Moisture absorption rate (40°C / 90 RH% / 1 hour) | % | 5.6 | 5.0 | 7.9 | 6.6 |
| | | | Moisture absorbency | - | VG | VG | G | G |

[Table 10] cont.

| | | | | | Example B5 | Example B6 | Example B7 |
|---|---|---|---|---|---|---|---|
| Latent heat storage material-containing resin composition | Component | Inorganic latent heat storage material composition (PCM) (A) | PCM (B1): Production Example B1 | weight% | - | - | - |
| | | | PCM (B2): Production Example B2 | | 30 | 40 | 50 |
| | | Third reaction curable liquid resin (B) | Acrylic-based resin (a) | | 70 | 60 | 50 |
| | | | Diluent (a) | | - | - | - |
| | | | Polyisobutylene-based resin (b) | | - | - | - |
| | | | Diluent (b) | | - | - | - |
| | | | Acrylic-based resin (c) | | - | - | - |
| | | | Urethane-based resin (d) | | - | - | - |
| | | | Urethane-based resin (e) | | - | - | - |
| | | | Epoxy-based resin (f) | | - | - | - |
| | Physical properties | | Type E viscosity difference between (A) and (B) | Pa·s | <20 | <20 | <20 |
| Latent heat storage material-containing resin cured product | Physical properties | | Cured state | - | G | G | P |
| | | | Moisture absorption rate (40°C / 90 RH% / 1 hour) | % | 3.7 | 7.3 | 6.0 |
| | | | Moisture absorbency | - | VG | G | G |

[Table 11]

| | | | | | Example B8 | Example B9 | Example B10 | Example B11 |
|---|---|---|---|---|---|---|---|---|
| Latent heat storage material-containing resin composition | Component | Inorganic latent heat storage material composition (PCM) (A) | PCM (B1): Production Example B1 | weight% | - | 30 | 30 | 30 |
| | | | PCM (B2): Production Example B2 | | 60 | - | - | - |
| | | Third reaction curable liquid resin (B) | Acrylic-based resin (a) | | 40 | 61 | - | - |
| | | | Diluent (a) | | - | 9 | - | - |
| | | | Polyisobutylene-based resin (b) | | - | - | 61 | - |
| | | | Diluent (b) | | - | - | 9 | - |
| | | | Acrylic-based resin (c) | | - | - | - | 70 |
| | | | Urethane-based resin (d) | | - | - | - | - |
| | | | Urethane-based resin (e) | | - | - | - | - |
| | | | Epoxy-based resin (f) | | - | - | - | - |
| | Physical properties | | Type E viscosity difference between (A) and (B) | Pa·s | <20 | <40 | <60 | <80 |
| Latent heat storage material-containing resin cured product | Physical properties | | Cured state | - | P | G | G | G |
| | | | Moisture absorption rate (40°C / 90 RH% / 1 hour) | % | 7.5 | 6.4 | 3.4 | 6.7 |
| | | | Moisture absorbency | - | G | G | VG | G |

[Table 11] cont.

| | | | | | Example B12 | Example B13 | Example B14 |
|---|---|---|---|---|---|---|---|
| Latent heat storage material-containing resin composition | Component | Inorganic latent heat storage material composition (PCM) (A) | PCM (B1): Production Example B1 | weight% | 30 | 30 | 50 |
| | | | PCM (B2): Production Example B2 | | - | - | - |
| | | Third reaction curable liquid resin (B) | Acrylic-based resin (a) | | - | - | - |
| | | | Diluent (a) | | - | - | - |
| | | | Polyisobutylene-based resin (b) | | - | - | - |
| | | | Diluent (b) | | - | - | - |
| | | | Acrylic-based resin (c) | | - | - | - |
| | | | Urethane-based resin (d) | | 70 | - | - |
| | | | Urethane-based resin (e) | | - | 70 | - |
| | | | Epoxy-based resin (f) | | - | - | 50 |
| | Physical properties | | Type E viscosity difference between (A) and (B) | Pa·s | <50 | <50 | <60 |
| Latent heat storage material-containing resin cured product | Physical properties | | Cured state | - | G | G | G |
| | | | Moisture absorption rate (40°C / 90 RH% / 1 hour) | % | 3.5 | 2.3 | 4.6 |
| | | | Moisture absorbency | - | VG | VG | VG |

[Table 12]

| | | | | | Comparative Example B1 | Comparative Example B2 | Comparative Example B3 | Comparative Example B4 |
|---|---|---|---|---|---|---|---|---|
| Latent heat storage material-containing resin composition | Component | Inorganic latent heat storage material composition (PCM) (A) | PCM (B1): Production Example B1 | weight% | 30 | 40 | 50 | 60 |
| | | | PCM (B2): Production Example B2 | | - | - | - | - |
| | | Third reaction curable liquid resin (B) | Silicone-based resin (g) | | 70 | 60 | 50 | 40 |
| | Physical properties | | Type E viscosity difference between (A) and (B) | Pa·s | <20 | <20 | <20 | <20 |
| Latent heat storage material-containing resin cured product | Physical properties | | Cured state | - | G | G | G | G |
| | | | Moisture absorption rate (40°C / 90 RH% / 1 hour) | % | 9.7 | 10.9 | 12.2 | 14.9 |
| | | | Moisture absorbency | - | P | P | P | P |

[Table 12] cont.

| | | | | | Comparative Example B5 | Comparative Example B6 | Comparative Example B7 | Comparative Example B8 |
|---|---|---|---|---|---|---|---|---|
| Latent heat storage material-containing resin composition | Component | Inorganic latent heat storage material composition (PCM) (A) | PCM (B1): Production Example B1 | weight% | - | - | - | - |
| | | | PCM (B2): Production Example B2 | | 30 | 40 | 50 | 60 |
| | | Third reaction curable liquid resin (B) | Silicone-based resin (g) | | 70 | 60 | 50 | 40 |
| | Physical properties | | Type E viscosity difference between (A) and (B) | Pa·s | <20 | <20 | <20 | <20 |
| Latent heat storage material-containing resin cured product | Physical properties | | Cured state | - | G | G | G | G |
| | | | Moisture absorption rate (40°C / 90 RH% / 1 hour) | % | 9.9 | 9.2 | 11.6 | 13.9 |
| | | | Moisture absorbency | - | P | P | P | P |

<Results>

Table 9 shows that the cured product of the acrylic-based resin (a), the polyisobutylene-based resin (b), the acrylic-based resin (c), the urethane-based resin (d), the urethane-based resin (e), or the epoxy-based resin (f), which is contained in a corresponding one of the third reaction curable liquid resins used in Examples B1 to B14, had a water vapor permeability of less than 500 g/m$^2$ per day. In contrast, the silicone-based resin (g) contained in each of the third reaction curable liquid resins used in Comparative Examples B1 to B8 had a water vapor permeability that exceeded a measurement limit (500 g/m$^2$ per day) of the measuring device. It was therefore impossible to measure the water vapor permeability.

Tables 10 and 11 show that the latent heat storage material-containing resin composition which was prepared in each of Examples B1 to B14 with use of a corresponding one of the acrylic-based resin (a), the polyisobutylene-based resin (b), the acrylic-based resin (c), the urethane-based resin (d), the urethane-based resin (e), and the epoxy-based resin (f), each having a water vapor permeability of less than 80 g/m$^2$ per day in Table 9, had a moisture absorption rate of less than 8% and thus had a favorable moisture absorbency. Furthermore, a difference between (a) a viscosity of the inorganic latent heat storage material composition that was in a gel state, the viscosity having been measured by the type E rotational viscometer, and (b) a viscosity of the third reaction curable liquid resin that was uncured was not more than 80 Pa·s.

Moreover, as compared with the latent heat storage material-containing resin compositions of Examples B3, B4, B7, and B8, the latent heat storage material-containing resin compositions of Examples B1, B2, B5, and B6 each had a lower weight ratio of the inorganic latent heat storage material composition to the latent heat storage material-containing resin composition, and thus had a higher transparency. Therefore, the latent heat storage material-containing resin compositions of Examples B1, B2, B5, and B6 are more easily irradiated with ultraviolet rays than the latent heat

storage material-containing resin compositions of Examples B3, B4, B7, and B8. As a result, as compared with the latent heat storage material-containing resin compositions of Examples B3, B4, B7, and B8, the latent heat storage material-containing resin compositions of Examples B1, B2, B5, and B6 each had a surface and a deep part that were sufficiently cured and was therefore in a good cured state. In Example B14, it was observed that a curing reaction of the epoxy-based resin was fast and that curing started during the mixing of the PCM and the third reaction curable liquid resin. However, the latent heat storage material-containing resin composition of Example B14 had no uncured part and thus was sufficiently cured.

In contrast, Table 12 shows that Comparative Examples B1 to B8 each had a moisture absorption rate of not less than 8%, and thus had a poor moisture absorbency. In Comparative Examples B1 and B2, it was observed that the latent heat storage material-containing resin composition was deformed after the moisture absorption test.

Here, a polypropylene container tray containing the inorganic latent heat storage material composition (PCM (B1)) obtained in Production Example (B1) was allowed to age for 2 hours in a thermohygrostat (manufactured by Nagano Science Co., Ltd.) at 40°C and a humidity 90%. Thereafter, a differential scanning calorimeter (SII EXSTAR6000 DSC manufactured by Seiko Instruments Inc.) was used to increase the temperature of the inorganic latent heat storage material composition, contained in the polypropylene container tray, from -20°C to 50°C at a rate of 3.0°C/min and then decrease the temperature from 50°C to -20°C at a rate of 3.0°C/min. However, no melting peak appeared at or near the melting temperature of the PCM (B1), and thus the inorganic latent heat storage material composition had a latent heat quantity of 0 J/g. That is, it has been found that, in a case where the third reaction curable liquid resin and the inorganic latent heat storage material composition are not mixed so that no cured product is obtained, after the 2-hour aging in the thermohygrostat, the inorganic latent heat storage material composition does not function as a heat storage material due to, for example, a change in hydration structure of the latent heat storage material contained in the inorganic latent heat storage material composition.

A of Fig. 2 is an external top view of the latent heat storage material-containing resin composition in accordance with Example B2 not having been subjected to the moisture absorption test. B of Fig. 2 is an external lateral view of A of Fig. 2. C of Fig. 2 is an external top view of the latent heat storage material-containing resin composition in accordance with Example B2 having been subjected to the moisture absorption test. D of Fig. 2 is an external lateral view of C of Fig. 2. A of Fig. 3 is an external top view of the latent heat storage material-containing resin composition in accordance with Comparative Example B2 not having been subjected to the moisture absorption test. B of Fig. 3 is an external lateral view of A of Fig. 3. C of Fig. 3 is an external top view of the latent heat storage material-containing resin composition in accordance with Comparative Example B2 having been subjected to the moisture absorption test. D of Fig. 3 is an external lateral view of C of Fig. 3.

It is understood from Fig. 3 that the latent heat storage material-containing resin composition of Comparative Example B2 has been clearly further deformed after the moisture absorption test than before the moisture absorption test. In contrast, it is understood from Fig. 2 that the latent heat storage material-containing resin composition of Comparative Example B2 has been less deformed after the moisture absorption test than before the moisture absorption test.

Fig. 4 is a diagram showing a result of a cycle test on a latent heat storage material-containing resin cured product in accordance with Example B4 before and after the moisture absorption test. Specifically, as described earlier, the 5-cycle test was carried out, and results of the fifth cycle are shown. In Fig. 4, the result of the latent heat storage material-containing resin cured product in accordance with Example B4 before the moisture absorption test is shown by a solid line, the result of the latent heat storage material-containing resin cured product in accordance with Example B4 after the moisture absorption test is shown by a dashed line, and the result of the inorganic latent heat storage material composition (which is the PCM (B1) of Production Example B1 and is denoted as "Production Example B1" in Fig. 4) is shown by a dotted line (shorter dashed line than the dashed line). It is understood from Fig. 4 that the latent heat storage material-containing resin cured product in accordance with Example B4 and the inorganic latent heat storage material composition exhibit similar melting curves and similar melting behaviors not only before the moisture absorption test but also after the moisture absorption test.

Fig. 5 is a diagram showing a result of a cycle test on a latent heat storage material-containing resin cured product in accordance with Comparative Example B4 before and after the moisture absorption test. Specifically, as described earlier, the 5-cycle test was carried out, and results of the fifth cycle are shown. In Fig. 5, the result of the latent heat storage material-containing resin cured product in accordance with Comparative Example B4 before the moisture absorption test is shown by a solid line, the result of the latent heat storage material-containing resin cured product in accordance with Comparative Example B4 after the moisture absorption test is shown by a dashed line, and the result of the inorganic latent heat storage material composition (which is the PCM (B1) of Production Example B1 and is denoted as "Production Example B1" in Fig. 5) is shown by a dotted line (shorter dashed line than the dashed line). It is understood from Fig. 5 that the latent heat storage material-containing resin cured product in accordance with Comparative Example B4 and the inorganic latent heat storage material composition exhibit similar melting curves and similar melting behaviors before the moisture absorption test and that the latent heat storage material-containing resin cured product in accordance with Comparative Example B4 hardly exhibits any melting peak. That is, it is understood

that the latent heat storage material-containing resin cured product in accordance with Comparative Example B4 does not efficiently function as the latent heat storage material after being used for a long period.

It has been found from the above description that the latent heat storage material-containing resin composition in accordance with the second embodiment of the present invention has no leakage of the latent heat storage material and has moisture resistance, and thus is suitable to be practically used.

Industrial Applicability

The first embodiment of the present invention makes it possible to provide a latent heat storage material that has a low risk of leakage and a low moisture absorbency and that is highly workable. The second embodiment of the present invention makes it possible to provide a latent heat storage material-containing resin cured product that has a low risk of leakage and a low moisture absorbency and that is highly workable. The first and second embodiments of the present invention can be suitably used, as a heat storage material, in, for example, a wall material, a floor material, a ceiling material, a roof material, a floor mat base material, and a plywood adhesive.

Reference Signs List

1 Heat storage material
2 Surface layer
3 Vessel
4 Plate-like member
100, 100A, 100B, 200, 200A, 200B, 300, 300A, 300B Latent heat storage material

**Claims**

**1.** A latent heat storage material comprising:

a heat storage material; and
a surface layer,
the heat storage material containing an inorganic latent heat storage material composition that contains an inorganic latent heat storage material and a thickener,
the surface layer containing a cured product of a first reaction curable liquid resin, and
the surface layer having (i) a type E hardness value of not more than 50, (ii) a 100% modulus of not more than 0.50 MPa ($N/mm^2$), and (iii) an elongation percentage at break of not less than 100%.

**2.** The latent heat storage material as set forth in claim 1, wherein the cured product of the first reaction curable liquid resin has a thickness of 1 mm and has a water vapor permeability of less than 500 $g/m^2$ per day observed at a temperature of 40°C and a humidity of 90%.

**3.** The latent heat storage material as set forth in claim 1 or 2, wherein

the inorganic latent heat storage material contains calcium chloride hexahydrate, and
the inorganic latent heat storage material composition further contains a melting point adjusting agent and a supercooling inhibitor.

**4.** The latent heat storage material as set forth in any one of claims 1 to 3, wherein the heat storage material further contains a second reaction curable liquid resin.

**5.** The latent heat storage material as set forth in claim 4, wherein the first reaction curable liquid resin and the second reaction curable liquid resin are each independently at least one resin selected from the group consisting of a silicone-based resin, an acrylic-based resin, a polyisobutylene-based resin, a urethane-based resin, and an epoxy-based resin.

**6.** The latent heat storage material as set forth in any one of claims 3 to 5, wherein the thickener is at least one kind selected from the group consisting of a water-absorbing resin, attapulgite clay, gelatin, agar, silica, xanthan gum,

gum arabic, guar gum, carageenan, cellulose, konjac, and hydroxyethyl cellulose.

**7.** The latent heat storage material as set forth in claim 4 or 5, wherein

(i)

(a) the inorganic latent heat storage material composition has a first viscosity, as measured by an oscillational viscometer, of 2 Pa·s to 25 Pa·s at a temperature that is 10°C to 35°C higher than a melting temperature of the inorganic latent heat storage material composition, or
(b) the inorganic latent heat storage material composition has a second viscosity, as measured by a type E rotational viscometer, of 30 Pa·s to 90 Pa·s at the temperature that is 10°C to 35°C higher than the melting temperature of the inorganic latent heat storage material composition, and

(ii) a third viscosity, as measured by the type E rotational viscometer, of the second reaction curable liquid resin at the temperature that is 10°C to 35°C higher than the melting temperature of the inorganic latent heat storage material composition, and the second viscosity, as measured by the type E rotational viscometer, at the temperature that is 10°C to 35°C higher than the melting temperature of the inorganic latent heat storage material composition differ from each other by not more than 80 Pa·s.

**8.** The latent heat storage material as set forth in any one of claims 1 to 7, wherein the inorganic latent heat storage material composition has a melting temperature of 15°C to 30°C.

**9.** A method for producing a latent heat storage material, comprising:

a heat storage material preparing step of preparing a heat storage material containing an inorganic latent heat storage material composition that contains an inorganic latent heat storage material and a thickener; and
a surface layer forming step of forming a surface layer on an interface with external air in the prepared heat storage material,
the surface layer having (i) a type E hardness value of not more than 50, (ii) a 100% modulus of not more than 0.50 MPa ($N/mm^2$), and (iii) an elongation percentage at break of not less than 100%.

**10.** A latent heat storage material-containing resin composition comprising:

an inorganic latent heat storage material composition; and
a third reaction curable liquid resin,
the inorganic latent heat storage material composition containing a thickener, and
the third reaction curable liquid resin satisfying the following requirement:
a requirement that a cured product having a thickness of 1 mm and obtained by curing the third reaction curable liquid resin has a water vapor permeability of less than 500 $g/m^2$ per day observed at a temperature of 40°C and a humidity of 90%.

**11.** A method for producing a latent heat storage material-containing resin composition, comprising:

a first mixing step of mixing an inorganic latent heat storage material composition and a thickener; and
a second mixing step of mixing a resultant mixture and a third reaction curable liquid resin,
the third reaction curable liquid resin satisfying the following requirement:
a requirement that a cured product having a thickness of 1 mm and obtained by curing the third reaction curable liquid resin has a water vapor permeability of less than 500 $g/m^2$ per day observed at a temperature of 40°C and a humidity of 90%.

**12.** A method for producing a building including a latent heat storage material, comprising:

a first mixing step of mixing an inorganic latent heat storage material composition and a thickener;
a second mixing step of mixing a resultant mixture and a third reaction curable liquid resin;
an application step of applying a resultant mixture to a floor surface and/or a wall surface of the building; and
a curing step of curing the applied mixture,
the third reaction curable liquid resin satisfying the following requirement:
a requirement that a cured product having a thickness of 1 mm and obtained by curing the third reaction curable

liquid resin has a water vapor permeability of less than 500 g/$m^2$ per day observed at a temperature of 40°C and a humidity of 90%.

FIG. 1

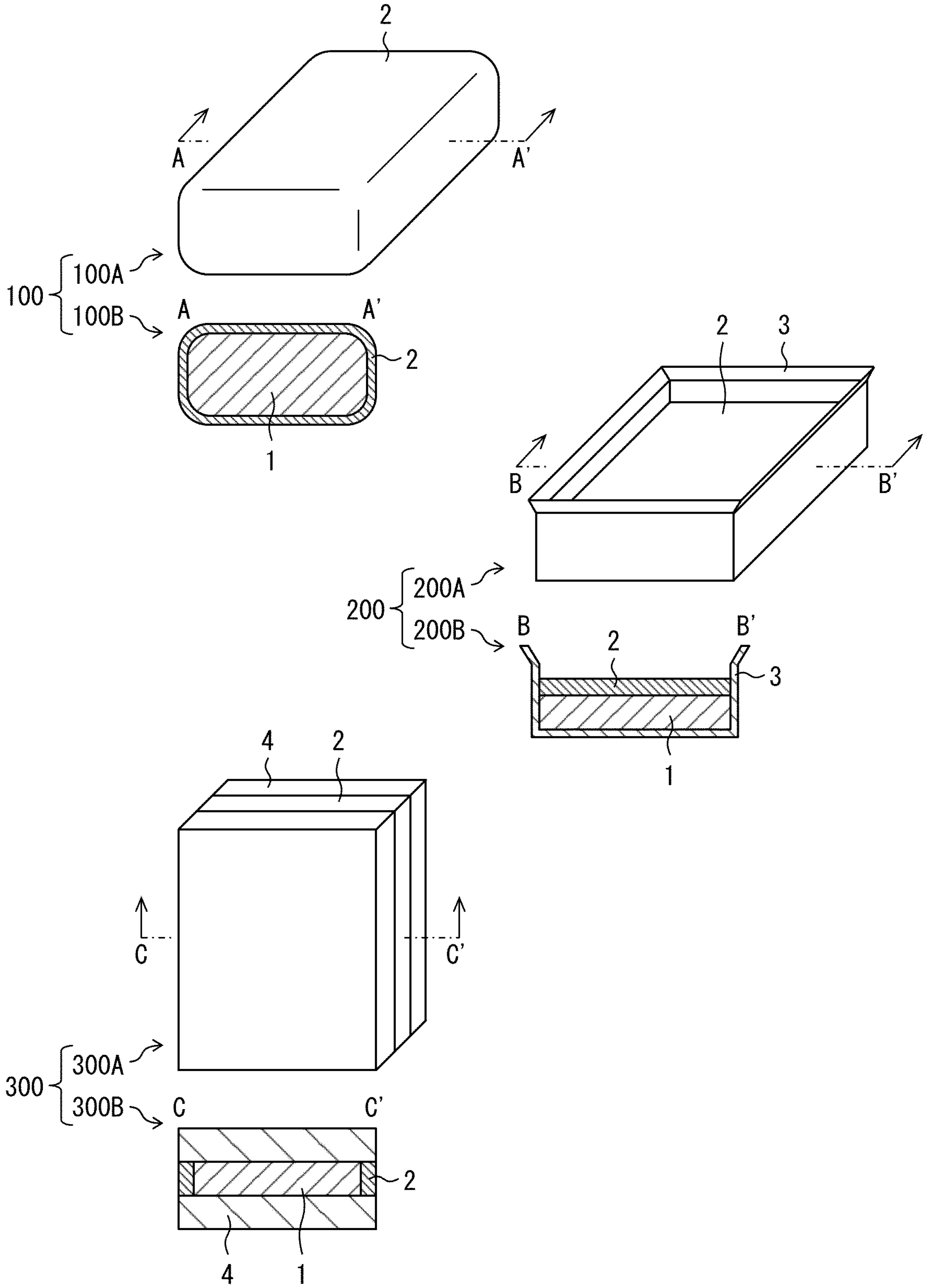
2
A
A'
100
100A
100B
A
A'
2
1
2
3
B
B'
200
200A
200B
B
B'
2
3
1
4
2
C
C'
300
300A
300B
C
C'
2
4
1

FIG. 2

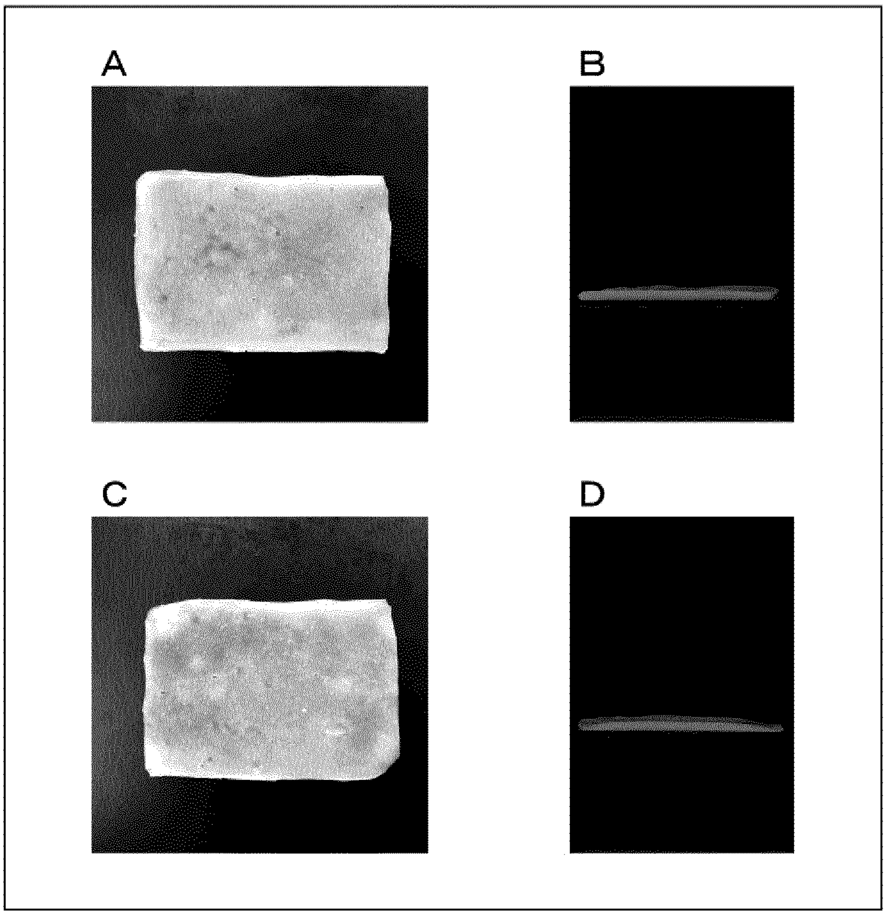

FIG. 3

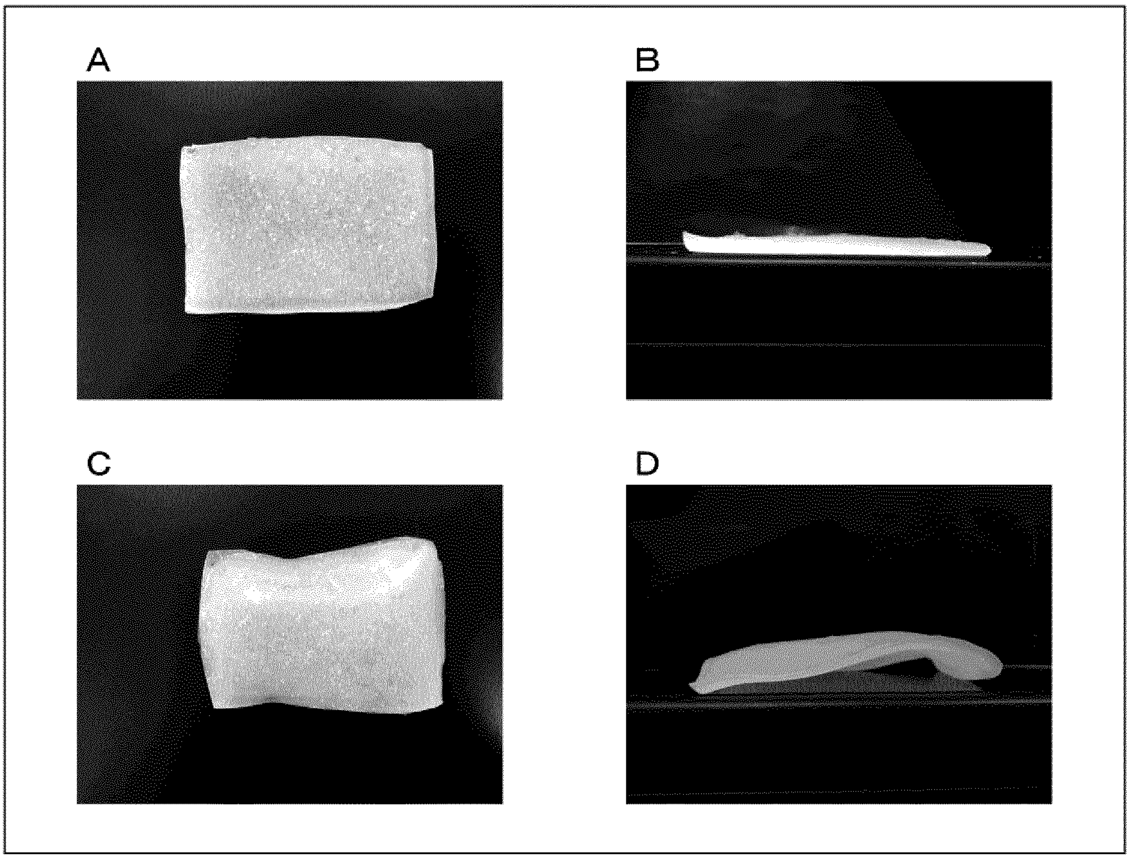
A
B
C
D

FIG. 4

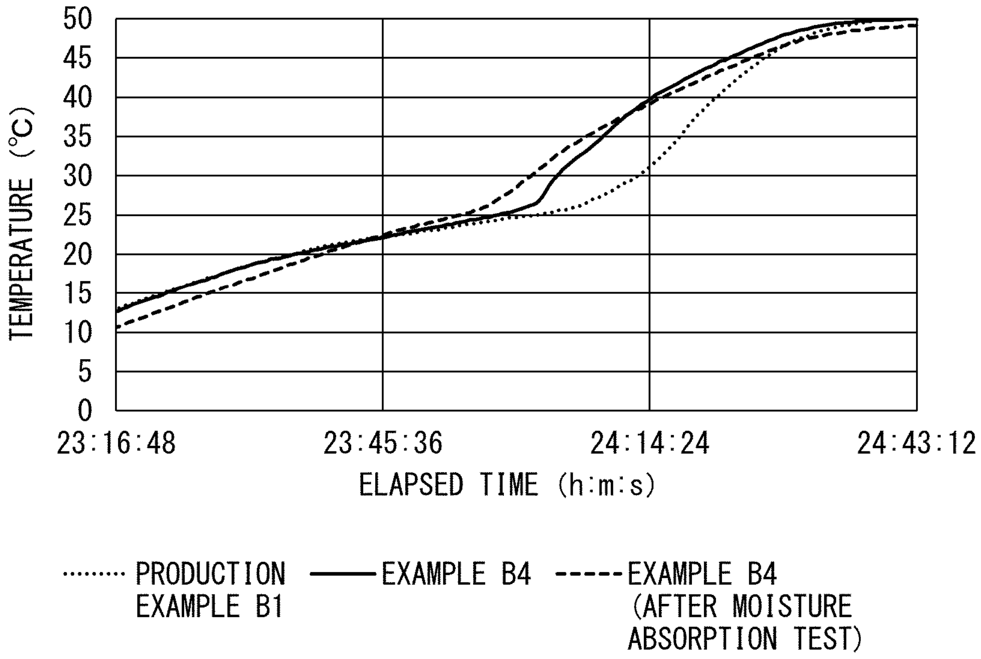
50
45
40
35
30
25
20
15
10
5
0
TEMPERATURE (°C)
23:16:48
23:45:36
24:14:24
24:43:12
ELAPSED TIME (h:m:s)
PRODUCTION EXAMPLE B1
EXAMPLE B4
EXAMPLE B4 (AFTER MOISTURE ABSORPTION TEST)

FIG. 5

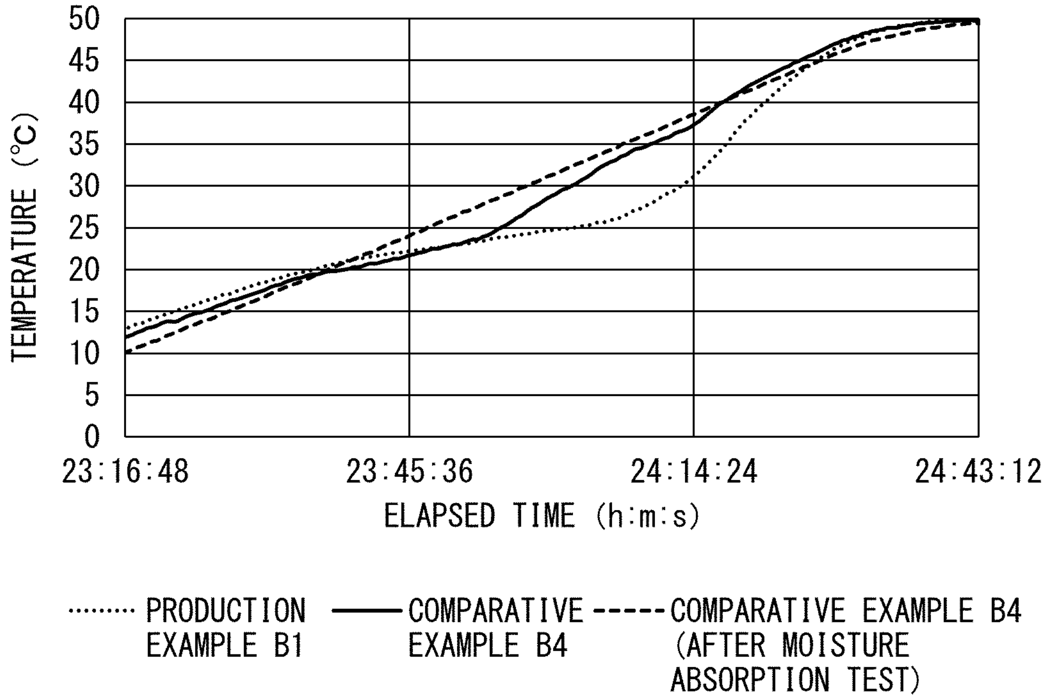
50
45
40
35
30
25
20
15
10
5
0
TEMPERATURE (°C)
23:16:48
23:45:36
24:14:24
24:43:12
ELAPSED TIME (h:m:s)
PRODUCTION EXAMPLE B1
COMPARATIVE EXAMPLE B4
COMPARATIVE EXAMPLE B4 (AFTER MOISTURE ABSORPTION TEST)

| INTERNATIONAL SEARCH REPORT | International application No. PCT/JP2020/013975 |
|---|---|

A. CLASSIFICATION OF SUBJECT MATTER
C08L 101/12(2006.01)i; C09K 5/06(2006.01)i
FI: C09K5/06 B; C08L101/12

According to International Patent Classification (IPC) or to both national classification and IPC

B. FIELDS SEARCHED

Minimum documentation searched (classification system followed by classification symbols)
C08L101/12; C09K5/06

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 1-266187 A (TOSHIBA CORP.) 24.10.1989 (1989-10-24) claim 1 | 1-12 |
| A | Microfilm of the specification and drawings annexed to the request of Japanese Utility Model Application No. 166315/1980 (Laid-open No. 87276/1982) (SEKISUI CHEMICAL CO., LTD.) 29.05.1982 (1982-05-29) claim 1 | 1-12 |
| A | JP 2-10096 A (FUJITSU LTD.) 12.01.1990 (1990-01-12) claims 1-3 | 1-12 |
| A | JP 62-236886 A (MATSUSHITA ELECTRIC INDUSTRIAL CO., LTD.) 16.10.1987 (1987-10-16) claims 1-3 | 1-12 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 June 2020 (17.06.2020) | 30 June 2020 (30.06.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/013975

C (Continuation). DOCUMENTS CONSIDERED TO BE RELEVANT

| Category* | Citation of document, with indication, where appropriate, of the relevant passages | Relevant to claim No. |
|---|---|---|
| A | JP 56-42098 A (SHOWA DENKO KABUSHIKI KAISHA) 20.04.1981 (1981-04-20) claims 1-2 | 1-12 |
| A | JP 62-124182 A (MATSUSHITA ELECTRIC INDUSTRIAL CO., LTD.) 05.06.1987 (1987-06-05) claims 1-4 | 1-12 |
| A | JP 55-3475 A (AMERICAN TECHNOLOGICAL UNIVERSITY) 11.01.1980 (1980-01-11) claims 1-15 | 1-12 |

Form PCT/ISA/210 (continuation of second sheet) (January 2015)

**INTERNATIONAL SEARCH REPORT**
Information on patent family members

International application No.
PCT/JP2020/013975

| Patent Documents referred in the Report | Publication Date | Patent Family | Publication Date |
|---|---|---|---|
| JP 1-266187 A | 24 Oct. 1989 | (Family: none) | |
| JP 57-87276 U1 | 29 May 1982 | (Family: none) | |
| JP 2-10096 A | 12 Jan. 1990 | (Family: none) | |
| JP 62-236886 A | 16 Oct. 1987 | (Family: none) | |
| JP 56-42098 A | 20 Apr. 1981 | (Family: none) | |
| JP 62-124182 A | 05 Jun. 1987 | (Family: none) | |
| JP 55-3475 A | 11 Jan. 1980 | US 4187189 A<br>claims 1-37<br>WO 1980/000257 A1<br>EP 5362 A1<br>BE 875995 A<br>MX 153311 A<br>NL 7903407 A<br>NZ 190339 A<br>ES 480102 A<br>CA 1122392 A1<br>IL 57171 A<br>ZA 7901888 A<br>AU 4669579 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019094375 A
- JP 56042098 A
- JP 57202341 A
- WO 2007114185 A
- JP 2014208728 A
- JP 2016166754 A
- WO 2014073593 A
- JP 2016013028 A
- JP 2016035718 A
- JP 2017122174 A
- JP 2851350 B
- JP 2016131718 A
- JP 2014080497 A
- JP 2873395 B
- JP 3315210 B
- JP 3368057 B
- JP 2004204183 A
- WO 2010103809 A
- WO 2017164304 A